(19) Europäisches Patentamt
European Patent Office
Office européen des brevets

(11) EP 3 101 072 B1

# (12) EUROPEAN PATENT SPECIFICATION

(45) Date of publication and mention of the grant of the patent:
**28.08.2019 Bulletin 2019/35**

(21) Application number: **15743337.6**

(22) Date of filing: **30.01.2015**

(51) Int Cl.:
***C09D 11/322*** *(2014.01)* ***B41J 2/01*** *(2006.01)*
***B41M 5/00*** *(2006.01)* ***C09D 11/40*** *(2014.01)*
***C09D 11/101*** *(2014.01)*

(86) International application number:
**PCT/JP2015/052672**

(87) International publication number:
**WO 2015/115600 (06.08.2015 Gazette 2015/31)**

## (54) INKJET INK COMPOSITION FOR PRINTING ON BUILDING MATERIALS, INKJET INK SET FOR PRINTING ON BUILDING MATERIALS, INKJET RECORDING METHOD, AND DECORATIVE BUILDING MATERIALS

TINTENSTRAHLTINTENZUSAMMENSETZUNG ZUM BEDRUCKEN VON BAUSTOFFEN, TINTENSTRAHLTINTENSATZ ZUM BEDRUCKEN VON BAUSTOFFEN, TINTENSTRAHLAUFZEICHNUNGSVERFAHREN UND DEKORATIVE BAUSTOFFE

COMPOSITION D’ENCRE POUR JET D’ENCRE POUR L’IMPRESSION SUR DES MATÉRIAUX DE CONSTRUCTION, JEU D’ENCRE POUR JET D’ENCRE POUR L’IMPRESSION SUR DES MATÉRIAUX DE CONSTRUCTION, PROCÉDÉ D’IMPRESSION À JET D’ENCRE, ET MATÉRIAUX DE CONSTRUCTION DÉCORATIFS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2014 JP 2014016668**

(43) Date of publication of application:
**07.12.2016 Bulletin 2016/49**

(73) Proprietor: **FUJIFILM Corporation**
**Tokyo 106-8620 (JP)**

(72) Inventor: **OSHIMA Yasuhito**
**Ashigarakami-gun**
**Kanagawa 258-8577 (JP)**

(74) Representative: **Klunker IP**
**Patentanwälte PartG mbB**
**Destouchesstraße 68**
**80796 München (DE)**

(56) References cited:
**EP-A1- 2 471 879**
**EP-A1- 2 546 311**
**EP-A1- 2 546 313**
**WO-A1-2008/038508**
**WO-A1-2010/143738**
**WO-A1-2013/146722**
**JP-A- 2004 532 144**
**JP-A- 2013 203 844**
**JP-A- 2014 047 236**
**US-A1- 2011 169 902**
**US-A1- 2012 270 018**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## BACKGROUND OF THE INVENTION

1. Field of the Invention

The present invention relates to an inkjet ink composition for printing on building materials, an inkjet ink set for printing on building materials, an inkjet recording method, and a decorative building material.

2. Description of the Related Art

Examples of an image recording method for forming an image on a recording medium such as paper based on image data signals include an electrophotographic system, a sublimation type or melting type heat transfer printing system, and an inkjet system. An electrophotographic system requires a process for forming an electrostatic latent image on a photosensitive drum through charging and exposure, and has a problem that the system is complicated, and consequently high production costs are incurred. Furthermore, a heat transfer printing system involves inexpensive apparatuses; however, since ink ribbons are used, the heat transfer printing system incurs high running costs and also has a problem that waste materials are produced.

On the other hand, since an inkjet system uses inexpensive apparatuses and implements image formation directly on a recording medium by ejecting ink only at the image areas where ink is needed, the inkjet system can use ink with high efficiency, incurs low running costs, and produces less noise. Thus, the inkjet system is excellent as an image recording system.

In recent years, attention has been paid to a solventless type inkjet recording system by which a drawing is drawn by inkjetting using an ink composition that can be cured by irradiation with radiation such as ultraviolet radiation (radiation-curable type ink composition), and then the ink composition is irradiated with radiation such as ultraviolet radiation to cure the ink.

According to the inkjet recording system using a radiation-curable type ink, it is advantageous that drawing on a non-absorbent recording medium such as a glass, metal or plastic recording medium is enabled, the range of application of the recording medium is wide, the drawn images have excellent scratch resistance or solvent resistance and high sensitivity, excellent productivity is obtained, and the environmental burden is small because the ink does not include a volatile solvent.

In view of the curing mechanism, radiation-curable type inks are roughly classified into radical polymerization type inks and cationic polymerization type inks. Radical polymerization type inks are widely used in the market because these inks have advantages such as excellent storage stability and low price, compared to cationic polymerization type inks.

Examples of conventional radiation-curable type inks include the ink compositions described in JP2007-262177A, JP2011-126947A, JP2009-52030A, and WO2008/38508A.

US 2012/270018 A1 describes a photocurable ink composition for inkjet printing which has superior curability with respect to light from a light-emitting diode, has favorable adhesion to a polyvinyl chloride-based sheet, and is able to adequately inhibit the occurrence of cockling. The photocurable ink composition for inkjet printing includes at least: a photopolymerizable compound; a photopolymerization initiator; and a sensitizer, wherein benzyl acrylate, N-vinylcaprolactam and an acrylated amine compound having two photopolymerizable functional groups and two amino groups in a molecule thereof are contained as the photopolymerizable compound, the content of the benzyl acrylate is 20 to 65% by mass in the photocurable ink composition for inkjet printing, a compound exhibiting an initiator function when irradiated with light having a wavelength of 450 to 300 nm is contained as the photopolymerization initiator, a compound exhibiting a sensitizer function when irradiated with light having a wavelength of 400 nm or longer is contained as the sensitizer, and a flash point as measured using a SETA closed-cup flash point tester according to a method in compliance with JIS K2265 is 70 °C or higher.

WO 2013/146722 A1 teaches an active light-curable inkjet ink composition which is capable of providing an ink image that has excellent abrasion resistance, weather resistance and color reproducibility (color density and intensity), while having excellent storage stability during periods when printing is stopped; a method for producing the active light-curable inkjet ink composition; an inkjet recording method; and a printed material. The active light-curable inkjet ink composition is characterized by containing a pigment yellow 184 (PY184), a polymer dispersant, a polymerizable compound and a polymerization initiator. This active light-curable inkjet ink composition is also characterized in that the content of PY184 is 2-10% by mass and the 90% volume particle diameter of PY184 is 200-400 nm.

## SUMMARY OF THE INVENTION

Images formed by an inkjet recording system using a radiation-curable type ink are frequently used mainly for outdoor advertisements and outdoor decorations. However, the images have a problem that the images undergo decoloration and discoloration due to weather and sunlight, and the color reproducibility immediately after production cannot be maintained, and thus there has been a demand for improvement in weather resistance. For the purpose of ameliorating this problem, for example, JP2011-126947A, JP2009-52030A, and WO2008/38508A suggest methods of using inorganic pigments instead of the organic pigments that have been conventionally used.

The inventors of the present invention investigated the patent literature described above, and they found a problem that the effect of enhancing weather resistance is limited when only inorganic pigments are used, and since the adhesiveness to recording media is insufficient, detachment or cracking of images occurs.

It is an object of the invention to provide an inkjet ink composition for printing on building materials, which has excellent curability, inkjet ejectability (hereinafter, also simply referred to as "ejectability"), weather-resistance of cured ink compositions (hereinafter, also simply referred to as "weather resistance"), adhesiveness of cured ink compositions (hereinafter, also simply referred to as "adhesiveness"), and raw ink storage stability (hereinafter, also simply referred to as "storage stability"); an inkjet ink set for printing on building materials, and an inkjet recording method. Furthermore, another problem to be solved by the invention is to provide a decorative building material having excellent weather resistance.

The object described above was achieved by the means described in the following <1>, <9>, <12>, and <13>. These means are described below together with preferred embodiments <2> to <8>, <10>, <11>, <14>, and <15>.

<1> An inkjet ink composition for printing on building materials, comprising a radical polymerizable compound as Component A, a radical polymerization initiator as Component B, a colored pigment as Component C, and a dispersing agent as Component D, in which Component A includes benzyl (meth)acrylate and/or 2-phenoxyethyl (meth)acrylate as Component A-1; a monofunctional or bifunctional (meth)acrylate compound having an aliphatic hydrocarbon group having 6 or more carbon atoms as Component A-2; and at least one selected from the group consisting of compounds each represented by any one of the following Formulae I, II and III as Component A-3, the total content of Component A-1 is 10% by mass to 50% by mass (preferably 15% by mass to 45% by mass, and more preferably 20% by mass to 40% by mass) relative to the total mass of the ink composition, the total content of Component A-2 is 5% by mass to 40% by mass (preferably 10% by mass to 35% by mass, more preferably 15% by mass to 30% by mass, and even more preferably 20% by mass to 30% by mass) relative to the total mass of the ink composition, the total content of Component A-3 is 10% by mass to 50% by mass (preferably 15% by mass to 45% by mass, and more preferably 20% by mass to 40% by mass) relative to the total mass of the ink composition, and the inkjet ink composition comprises at least one inorganic pigment selected from the group consisting of Pigment Blue 28, Pigment Yellow 42, and Pigment Yellow 184 as Component C.

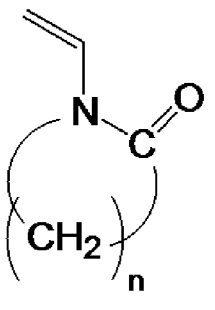
(I)

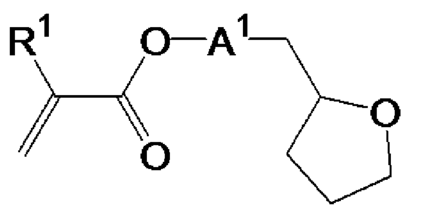
(II)

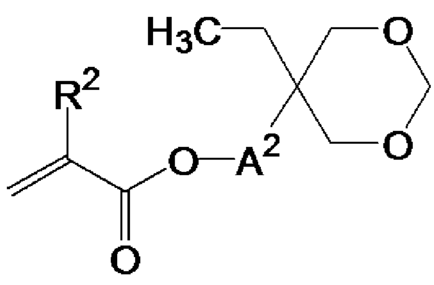
(III)

In Formulae I to III, n represents an integer from 2 to 6; $R^1$ and $R^2$ each independently represent a hydrogen atom or a methyl group; and $A^1$ and $A^2$ each independently represent a single bond or a divalent linking group.

<2> The inkjet ink composition for printing on building materials according to <1>, in which the aliphatic hydrocarbon group for Component A-2 is an aliphatic hydrocarbon group having 9 to 16 carbon atoms (preferably 9 to 13 carbon atoms).

<3> The inkjet ink composition for printing on building materials according to <1> or <2>, in which the aliphatic hydrocarbon group for Component A-2 has an alicyclic structure.

<4> The inkjet ink composition for printing on building materials according to any one of <1> to <3>, in which the

total content of the monofunctional (meth)acrylate compounds is 80% by mass to 100% by mass (preferably 90% by mass to 100% by mass) relative to the total mass of Component A.

<5> The inkjet ink composition for printing on building materials according to any one of <1> to <4>, further comprising at least one polymer or oligomer selected from the group consisting of an acrylic resin, a polyester resin, an epoxy resin, and a polyurethane resin as Component E, which is different from Component D.

<6> The inkjet ink composition for printing on building materials according to <5>, in which the glass transition temperature Tg of Component E, measured using a differential scanning calorimeter EXSTAR6220 manufactured by Seiko Instruments Inc., under conventional conditions for measurement or calculated by the following calculation formula T:

$$1/Tg=\Sigma(Xi/Tgi) \qquad (T)$$

wherein Xi represents the weight fraction of the i-th monomer with $\sum Xi = 1$, and Tgi represents the glass transition temperature of a homopolymer of the i-th monomer, is 0°C or higher (preferably 20°C or higher, more preferably 40°C or higher, and even more preferably 60°C or higher).

<7> The inkjet ink composition for printing on building materials according to <5> or <6>, comprising at least one polymer or oligomer selected from the group consisting of an acrylic resin and a polyester resin as Component E.

<8> The inkjet ink composition for printing on building materials according to any one of <1> to <7>, wherein the inkjet ink composition is intended for printing on composite metal sidings or ceramic sidings.

<9> An inkjet ink set for printing on building materials, comprising three color ink compositions of a cyan ink, a magenta ink, and a yellow ink,

wherein the inkjet ink set satisfies at least two among the following requirements i, ii, or iii:

i: the cyan ink is the inkjet ink composition for printing on building materials according to any one of <1> to <8>, which includes Pigment Blue 28 as Component C;

ii: the magenta ink which is an inkjet ink composition for printing on building materials, comprising:

a radical polymerizable compound as Component A; a radical polymerization initiator as Component B; a colored pigment as Component C; and a dispersing agent as Component D, wherein Component A includes benzyl (meth)acrylate and/or 2-phenoxyethyl (meth)acrylate as Component A-1; a monofunctional or bifunctional (meth)acrylate compound having an aliphatic hydrocarbon group having 6 or more carbon atoms as Component A-2; and at least one selected from the group consisting of compounds each represented by any one of the following Formulae I, II, and III as Component A-3, the total content of Component A-1 is 10% by mass to 50% by mass relative to the total mass of the ink composition, the total content of Component A-2 is 5% by mass to 40% by mass relative to the total mass of the ink composition, the total content of Component A-3 is 10% by mass to 50% by mass relative to the total mass of the ink composition, the inkjet ink composition comprises Pigment Red 101 as Component C, and

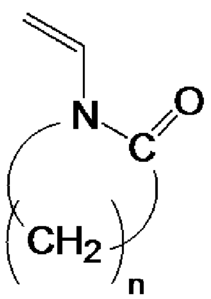
(I)

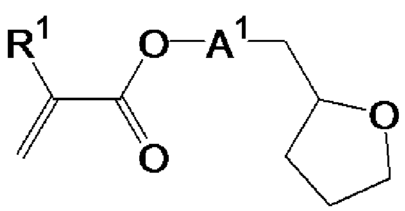
(II)

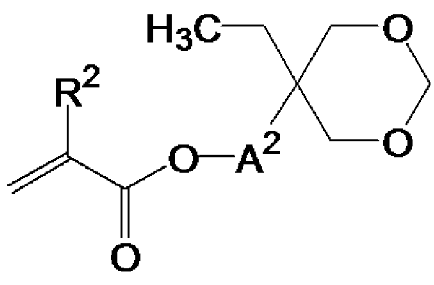
(III)

in Formulae I to III, n represents an integer from 2 to 6; $R^1$ and $R^2$ each independently represent a hydrogen atom or a methyl group; and $A^1$ and $A^2$ each independently represent a single bond or a divalent linking group; and

iii: the yellow ink is the inkjet ink composition for printing on building materials according to any one of <1> to <8>, which includes Pigment Yellow 42 and/or Pigment Yellow 184 as Component C.

<10> The inkjet ink set for printing on building materials according to <9>, in which the inkjet ink set satisfies all of the requirements i, ii and iii.

<11> The inkjet ink set for printing on building materials according to <9> or <10>, further comprising a black ink composition which includes a radical polymerizable compound as Component A, a radical polymerization initiator as Component B, a colored pigment as Component C, and dispersing agent as Component D, wherein Component A includes benzyl (meth)acrylate and/or 2-phenoxyethyl (meth)acrylate as A-1; a monofunctional or bifunctional (meth)acrylate compound having an aliphatic hydrocarbon group having 6 or more carbon atoms as A-2; and at least one compound represented by any one of Formulae I, II and III described above as A-3, the total content of Component A-1 is 10% by mass to 50% by mass (preferably 15% by mass to 45% by mass, and more preferably 20% by mass to 40% by mass) relative to the total mass of the ink composition, the total content of Component A-2 is 5% by mass to 40% by mass (preferably 10% by mass to 35% by mass, more preferably 10% by mass to 30% by mass, and even more preferably 15% by mass to 25% by mass) relative to the total mass of the ink composition, the total content of Component A-3 is 10% by mass to 50% by mass (preferably 15% by mass to 45% by mass, and more preferably 20% by mass to 40% by mass) relative to the total mass of the ink composition, the total content of the monofunctional radical polymerizable compound is 80% by mass to 100% by mass (preferably 90% by mass to 100% by mass) relative to the total mass of Component A, and the black ink composition includes Pigment Black 7 as Component C.

<12> A decorative building material comprising, on a building material, a printed layer obtained by curing the inkjet ink composition for printing on building materials according to any one of <1> to <8>, or the three color ink compositions included in the inkjet ink set for printing on building materials according to <9> or <10>, or the four color ink compositions included in the inkjet ink set for printing on building materials according to <11>.

<13> An inkjet recording method, comprising, as step a, an image forming step of ejecting the inkjet ink composition for printing on building materials according to any one of <1> to <7> by an inkjet system, and thereby forming an image on a building material; and as step b, a curing step of irradiating the image thus obtained with active radiation, and thereby curing the ink composition; or as step a', an image forming step of respectively ejecting the ink compositions included in the inkjet ink set for printing on building materials according to any one of <9> to <11> by an inkjet system, and thereby forming an image on a building material; and as step b', a curing step of irradiating the image thus obtained with active radiation, and thereby curing the ink compositions.

<14> The inkjet recording method according to <13>, comprising, before the image forming step, a preliminary treatment step of forming a primer layer on the printed surface of the building material.

<15> The inkjet recording method according to <13> or <14>, comprising, after the curing step, a post-treatment step of forming a topcoat layer on the cured ink composition.

According to the present invention, an inkjet ink composition for printing on building materials, having excellent curability, ejectability, weather resistance, adhesiveness and storage stability; an inkjet ink set for printing on building materials; and an inkjet recording method can be provided. Furthermore, a decorative building material having excellent weather resistance can be provided.

## DESCRIPTION OF THE PREFERRED EMBODIMENTS

Hereinafter, the present invention will be described in detail.

Meanwhile, in the present specification, the description of "lower limit to upper limit" means "more than or equal to the lower limit, and less than or equal to the upper limit", and the description of "upper limit to lower limit" means "less than or equal to the upper limit, and more than or equal to the lower limit". That is, these descriptions represent a value range including the upper limit and the lower limit. Furthermore, according to the invention, the "radical polymerizable compound" or the like may be simply referred to as "Component A" or the like. "(Meth)acrylate" or the like has the same meaning as "acrylate and/or methacrylate" or the like, and the same applies hereinafter.

Furthermore, according to the invention, the unit "percent (%) by mass" has the same meaning as "percent (%) by weight", and the unit "parts by mass" has the same meaning as "parts by weight".

Furthermore, according to the invention, a combination of two or more preferred embodiments is a more preferred embodiment.

(Inkjet ink composition for printing on building materials)

The inkjet ink composition for printing on building materials of the present invention (hereinafter, simply referred to as "ink composition" or "ink") includes a radical polymerizable compound as Component A, a radical polymerization initiator as Component B, a colored pigment as Component C, and a dispersing agent as Component D in which Component A includes benzyl (meth)acrylate and/or 2-phenoxyethyl (meth)acrylate as Component A-1; a monofunctional

or bifunctional (meth)acrylate compound having aliphatic hydrocarbon group having 6 or more carbon atoms as Component A-2; and at least one selected from the group consisting of compounds each represented by any one of the following Formulae I, II and III as Component A-3,
the total content of Component A-1 is 10% by mass to 50% by mass relative to the total mass of the ink composition,
the total content of Component A-2 is 5% by mass to 40% by mass relative to the total mass of the ink composition,
the total content of Component A-3 is 10% by mass to 50% by mass relative to the total mass of the ink composition, and the inkjet ink composition includes at least one inorganic pigment selected from the group consisting of Pigment Blue 28, Pigment Yellow 42, and Pigment Yellow 184 as Component C.

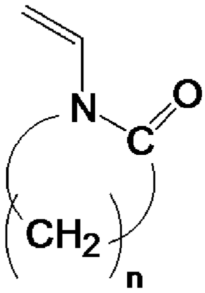
( I )

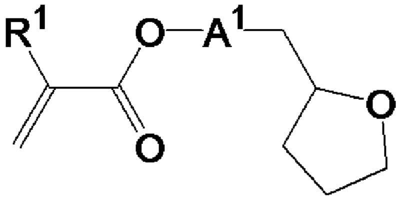
( II )

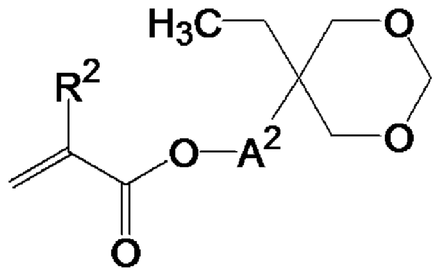
( III )

In Formulae I to III, n represents an integer of 2 to 6; $R^1$ and $R^2$ each independently represent a hydrogen atom or a methyl group; and $A^1$ and $A^2$ each independently represent a single bond or a divalent linking group.

The ink composition of the invention is preferably a non-aqueous ink composition.

The ink composition of the invention is preferably an oily ink composition that can be cured by active light rays (also referred to active radiation). Furthermore, the ink composition of the invention is preferably a solvent-free type ink which does not contain a volatile organic solvent. The "active light rays" refer to a radiation capable of imparting energy that generates an initiating species to the ink composition when the ink composition is irradiated therewith, and examples thereof include α-rays, γ-rays, X-rays, ultraviolet radiation, visible light, and an electron beam. Among them, from the viewpoints of the curing sensitivity and the easy availability of apparatuses, ultraviolet radiation and an electron beam are preferred, and ultraviolet radiation is more preferred.

Component A to Component D included in the ink composition of the invention will be described in detail below.

Component A: Radical polymerizable compound

The ink composition of the invention includes a radical polymerizable compound as Component A, and Component A includes benzyl (meth)acrylate and/or 2-phenoxyethyl (meth)acrylate as Component A-1; a monofunctional or bifunctional (meth)acrylate compound having an aliphatic hydrocarbon group having 6 or more carbon atoms as Component A-2; and at least one selected from the group consisting of compounds each represented by any one of the following Formulae I, II and III as Component A-3.

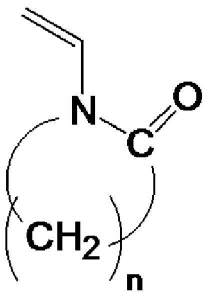
( I )

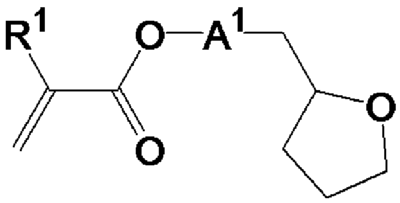
( II )

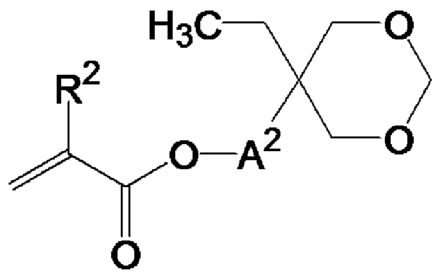
( III )

In Formulae I to III, n represents an integer of 2 to 6; $R^1$ and $R^2$ each independently represent a hydrogen atom or a

methyl group; and $A^1$ and $A^2$ each independently represent a single bond or a divalent linking group.

The molecular weight (weight average molecular weight, Mw) of Component A is 1,000 or less.

Component A-1: Benzyl (meth)acrylate and/or 2-phenoxyethyl (meth)acrylate

The ink composition of the invention includes benzyl (meth)acrylate and/or 2-phenoxyethyl (meth)acrylate as Component A-1.

Regarding Component A-1, it is preferable that the ink composition includes benzyl acrylate and/or 2-phenoxyethyl acrylate, and it is more preferable that the ink composition includes 2-phenoxyethyl acrylate.

Furthermore, the total content of Component A-1 is 10% by mass to 50% by mass, preferably 15% by mass to 45% by mass, and more preferably 20% by mass to 40% by mass, relative to the total mass of the ink composition.

When the total content of Component A-1 in the ink composition is in the range described above, an inkjet ink composition having excellent curability, ejectability, and adhesiveness is obtained.

Component A-2: Monofunctional or bifunctional (meth)acrylate compound having aliphatic hydrocarbon group having 6 or more carbon atoms

The ink composition of the invention includes a monofunctional or bifunctional (meth)acrylate compound having an aliphatic hydrocarbon group having 6 or more carbon atoms as Component A-2.

In the following, Component A-2 will be divided into two classes, namely, Component A-2-1: a monofunctional (meth)acrylate compound having an aliphatic hydrocarbon group having 6 or more carbon atoms, and Component A-2-2: a bifunctional (meth)acrylate compound having an aliphatic hydrocarbon group having 6 or more carbon atoms, and the components will be respectively explained.

Component A-2-1: Monofunctional (meth)acrylate compound having aliphatic hydrocarbon group having 6 or more carbon atoms

It is preferable that the ink composition of the invention includes Component A-2-1: a monofunctional (meth)acrylate compound having an aliphatic hydrocarbon group having 6 or more carbon atoms as Component A-2.

Here, Component A-2-1 means a compound which has only one (meth)acryloyloxy group in the molecule and does not have any other radical polymerizable group. Meanwhile, for example, the dicyclopentenyl group that will be described below has an unsaturated bond in the hydrocarbon ring; however, such an unsaturated bond has very low radical polymerizability. Thus, this unsaturated bond does not correspond to the radical polymerizable group according to the invention.

It is preferable that Component A-2-1 is a compound represented by the following Formula a-2-1.

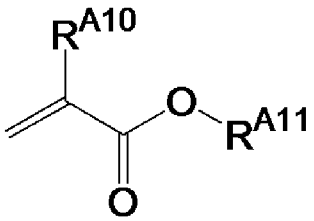

(a - 2 - 1)

In Formula a-2-1, $R^{A10}$ represents a hydrogen atom or a methyl group; and $R^{A11}$ represents an aliphatic hydrocarbon group having 6 or more carbon atoms.

In Formula a-2-1, $R^{A10}$ represents a hydrogen atom or a methyl group, and $R^{A10}$ is preferably a hydrogen atom.

In Formula a-2-1, $R^{A11}$ represents an aliphatic hydrocarbon group having 6 or more carbon atoms, and $R^{A11}$ is preferably an aliphatic hydrocarbon group having 6 to 20 carbon atoms, more preferably an aliphatic hydrocarbon group having 9 to 16 carbon atoms, and even more preferably an aliphatic hydrocarbon group having 9 to 13 carbon atoms. Furthermore, the aliphatic hydrocarbon group may be linear or branched, or may have a cyclic structure; however, it is preferable that the aliphatic hydrocarbon group has a cyclic structure. The cyclic aliphatic hydrocarbon group may be a monocyclic group or a polycyclic group; however, it is preferable that the cyclic aliphatic hydrocarbon group has a polycyclic structure. Furthermore, the cyclic aliphatic hydrocarbon group may contain a saturated hydrocarbon ring, or may contain an unsaturated hydrocarbon ring having unsaturated bonds, without any particular limitations.

Meanwhile, the number of carbon atoms of an aliphatic hydrocarbon group represents the total number of carbon atoms linked by a carbon-carbon bond to the oxygen atom of an adjacent (meth)acrylic acid ester, and in a case

in which the aliphatic hydrocarbon group is completely interrupted by an atom other than a carbon atom, such as an oxygen atom, a nitrogen atom or a sulfur atom that is contained in a substituent disclosed below, the total number does not include the number of carbon atoms that are included up to the terminal ahead of these atoms.

Specific preferred examples of $R^{A11}$ include linear or branched alkanes such as hexane, heptane, octane, nonane, decane, undecane, dodecane, tridecane, tetradecane, pentadecane, hexadecane, heptadecane, octadecane, nonadecane, eicosane, and docosane; cyclic alkanes such as cyclohexane, cycloheptane, cyclooctane, bicyclo[3.2.1]octane, spiro[4.5]decane, adamantane, bornane, norbornane, cis- or trans-hydrindane, cis- or trans-decahydronaphthalene, and exo- or endo-tricyclo[5.2.1.0$^{2,6}$]decane; linear or branched alkenes such as 1-hexene, 2-hexene, 3-hexene, 4-nonene, 7-tetradecene, 1-heptadecene, butadiene, and 1,9-decadiene; cyclic alkenes such as cyclohexene, cyclooctene, 1,4-cyclohexadiene, 1,5-cyclooctadiene, 1,5,9-cyclododecatriene, 2-bornene, 2-norbornene, exo- or endo-tricyclo[5.2.1.0$^{2,6}$]decan-3-ene, octahydronaphthalene, tricyclo[6.2.1.0$^{2,7}$]undec-4-ene, tetracyclo[6.2.1.13,6.0$^{2,7}$]dodec-4-ene, bicyclo[2.2.1]hepta-2,5-diene, and 3a, 4, 7, 7a-tetrahydroindene; linear or branched alkynes such as 1-hexyne, 2-hexyne, and 3-hexyne; and a product obtained as a monovalent aliphatic hydrocarbon group by eliminating one hydrogen atom that constitutes a cyclic alkyne such as cyclohexyne.

Furthermore, $R^{A11}$ may have one or more substituents, and examples of the substituent include monovalent non-metal atomic groups, except for a hydrogen atom. Examples of the substituents include halogen atoms (-F, -Br, -Cl, and -I), a hydroxyl group, an alkoxy group, an aryloxy group, a mercapto group, an alkylthio group, an arylthio group, an alkyldithio group, an aryldithio group, an amino group, a N-alkylamino group, a N,N-dialkylamino group, a N-arylamino group, a N,N-diarylamino group, a N-alkyl-N-arylamino group, an acyloxy group, a carbamoyloxy group, a N-alkylcarbamoyloxy group, a N-arylcarbamoyloxy group, a N,N-dialkylcarbamoyloxy group, a N,N-diarylcarbamoyloxy group, a N-alkyl-N-arylcarbamoyloxy group, an alkylsulfoxy group, an arylsulfoxy group, an acylthio group, an acylamino group, a N-alkylacylamino group, a N-arylacylamino group, a ureido group, a N'-alkylureido group, a N',N'-dialkylureido group, a N'-arylureido group, a N',N'-diarylureido group, a N'-alkyl-N'-arylureido group, a N-alkylureido group, a N-arylureido group, a N'-alkyl-N-alkylureido group, a N'-alkyl-N-arylureido group, a N',N'-dialkyl-N-alkylureido group, a N',N'-dialkyl-N-arylureido group, a N'-aryl-N-alkylureido group, a N'-aryl-N-arylureido group, a N',N'-diaryl-N-alkylureido group, a N',N'-diaryl-N-arylureido group, a N'-alkyl-N'-aryl-N-alkylureido group, a N'-alkyl-N'-aryl-N-arylureido group, an alkoxycarbonylamino group, an aryloxycarbonylamino group, a N-alkyl-N-alkoxycarbonylamino group, a N-alkyl-N-aryloxycarbonylamino group, a N-aryl-N-alkoxycarbonylamino group, a N-aryl-N-aryloxycarbonylamino group, a formyl group, an acyl group, a carboxyl group or a conjugate base group thereof, an alkoxycarbonyl group, an aryloxycarbonyl group, a carbamoyl group, a N-alkylcarbamoyl group, a N,N-dialkylcarbamoyl group, a N-arylcarbamoyl group, a N,N-diarylcarbamoyl group, a N-alkyl-N-arylcarbamoyl group, an alkylsulfinyl group, an arylsulfinyl group, an alkylsulfonyl group, an arylsulfonyl group, a sulfo group (-$SO_3H$) or a conjugate base group thereof, an alkoxysulfonyl group, an aryloxysulfonyl group, a sulfinamoyl group, a N-alkylsulfinamoyl group, a N,N-dialkylsulfinamoyl group, a N-arylsulfinamoyl group, a N,N-diarylsulfinamoyl group, a N-alkyl-N-arylsulfinamoyl group, a sulfamoyl group, a N-alkylsulfamoyl group, a N,N-dialkylsulfamoyl group, a N-arylsulfamoyl group, a N,N-diarylsulfamoyl group, a N-alkyl-N-arylsulfamoyl group, an alkoxysilyl group (-Si(O-alkyl)$_3$), an aryloxysilyl group (-Si(O-aryl)$_3$), an aryl group, an alkyl group, an alkenyl group, and an alkynyl group. Regarding these substituents, if possible, the substituents may be bonded to each other, or a substituent may be bonded to the hydrocarbon group containing the relevant substituent, and form a ring, and the substituents may be further substituted.

Preferred examples of the substituent include a halogen atom, an alkoxy group, an aryloxy group, an alkyl group, an alkenyl group, an alkynyl group, and an aryl group, and it is more preferable that $R^{A11}$ does not have any substituent.

Examples of Component A-2-1 include an acrylate compound having a linear or branched aliphatic hydrocarbon group, such as isooctyl acrylate, isodecyl acrylate, lauryl acrylate, tridecyl acrylate, cetyl acrylate, or behenyl acrylate; and an acrylate compound having an aliphatic hydrocarbon group having a cyclic structure, such as cyclohexyl (meth)acrylate, isobornyl (meth)acrylate, 3,3,5-trimethylcyclohexyl (meth)acrylate, 4-t-butylcyclohexyl (meth)acrylate, dicyclopentanyl (meth)acrylate, or dicyclopentenyl (meth)acrylate.

From the viewpoint of curability, isodecyl acrylate, lauryl acrylate, tridecyl acrylate, 4-t-butylcyclohexyl acrylate, dicyclopentanyl acrylate, dicyclopentenyl acrylate, and isobornyl acrylate are preferred; and 4-t-butylcyclohexyl acrylate, dicyclopentanyl acrylate, dicyclopentenyl acrylate, and isobornyl acrylate are more preferred.

The content of Component A-2-1 relative to the total amount of the ink composition is 0% by mass to 40% by mass, preferably 10% by mass to 35% by mass, more preferably 12% by mass to 33% by mass, and even more preferably 15% by mass to 30% by mass. When the content of Component A-2-1 is in the range described above, an inkjet ink composition having excellent curability, ejectability, and adhesiveness is obtained.

Component A-2-2: Bifunctional (meth)acrylate compound having aliphatic hydrocarbon group having 6 or more carbon atoms

It is preferable that the ink composition of the invention includes Component A-2-2: a bifunctional (meth)acrylate compound having an aliphatic hydrocarbon group having 6 or more carbon atoms, as Component A-2.

Component A-2-2 is preferably a compound represented by the following Formula a-2-2.

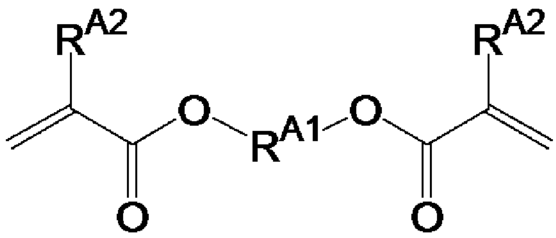

(a-2-2)

In Formula a-2-2, $R^{A1}$ represents a divalent aliphatic hydrocarbon group having 6 or more carbon atoms; and $R^{A2}$'s each independently represent a hydrogen atom or a methyl group.

In Formula a-2-2, $R^{A1}$ represents a divalent aliphatic hydrocarbon group having 6 or more carbon atoms, and $R^{A1}$ is preferably an aliphatic hydrocarbon group having 6 to 10 carbon atoms, and more preferably an aliphatic hydrocarbon group having 9 to 10 carbon atoms. When the number of carbon atoms is in the range described above, an ink composition having excellent adhesiveness, ejectability, and storage stability can be obtained.

Furthermore, the aliphatic hydrocarbon group may be linear or branched, or may have a cyclic structure; however, from the viewpoint of storage stability, it is preferable that the aliphatic hydrocarbon group has a cyclic structure, and it is more preferable that Component A-2-2 has a cyclic aliphatic hydrocarbon group. The cyclic aliphatic hydrocarbon group may have a monocyclic ring or a polycyclic ring; however, it is preferable that the aliphatic hydrocarbon group has a polycyclic structure. Furthermore, the cyclic aliphatic hydrocarbon group may have a saturated hydrocarbon ring, or may have an unsaturated hydrocarbon ring having unsaturated bonds, without any particular limitations.

Meanwhile, the number of carbon atoms of the aliphatic hydrocarbon group represents the total number of carbon atoms linked through a carbon-carbon bond, which link the oxygen atoms of two adjacent (meth)acrylic acid esters. In a case in which the aliphatic hydrocarbon group is completely interrupted by an atom other than a carbon atom, such as an oxygen atom, a nitrogen atom or a sulfur atom that is contained in a substituent disclosed below, the total number does not include the number of carbon atoms that are included up to the terminal ahead of those atoms.

A specific preferred example of $R^{A1}$ is a divalent aliphatic hydrocarbon group obtained by further eliminating one from the hydrogen atoms that constitute $R^{A11}$ mentioned previously.

Furthermore, similarly to $R^{A11}$, $R^{A1}$ may have one or more substituents, and examples of the substituents include those mentioned as examples of the substituents for $R^{A11}$.

In Formula a-2-2, $R^{A2}$'s each independently represent a hydrogen atom or a methyl group, and $R^{A2}$'s are each preferably a hydrogen atom. Furthermore, in Formula a-2-2, two $R^{A2}$'s may be identical or different; however, from the viewpoint of synthesis, it is preferable that the two groups are identical.

Examples of Component A-2-2 include 3-methyl-1,5-pentanediol diacrylate, 1,6-hexanediol diacrylate, 1,9-nonanediol diacrylate, and tricyclodecane dimethanol diacrylate. From the viewpoints of ejectability, adhesiveness and storage stability, 1,9-nonanediol diacrylate and tricyclodecane dimethanol diacrylate are preferred, and tricyclodecane dimethanol diacrylate is more preferred.

The content of Component A-2-2 is 0% by mass to 40% by mass, preferably 5% by mass to 35% by mass, more preferably 10% by mass to 30% by mass, and even more preferably 15% by mass to 25% by mass, relative to the total amount of the ink composition.

Component A-2 may be used singly, or two or more kinds thereof may be used in combination.

In a case in which two or more kinds of Component A-2 are used, it is preferable to use a compound corresponding to Component A-2-1 and a compound corresponding to Component A-2-2 in combination, and it is more preferable to use a compound corresponding to Component A-2-1, in which the aliphatic hydrocarbon group has a cyclic hydrocarbon structure, and a compound corresponding to Component A-2-2 in combination. It is even more preferable to use a compound corresponding to Component A-2-1, in which the aliphatic hydrocarbon group has a cyclic structure, and a compound corresponding to Component A-2-2, in which the aliphatic hydrocarbon group does not have a cyclic structure, in combination.

Furthermore, the total content of Component A-2 is 5% by mass to 40% by mass, preferably 10% by mass to 35% by mass, more preferably 15% by mass to 30% by mass, and even more preferably 20% by mass to 30% by mass, relative to the total mass of the ink composition.

When the total content of Component A-2 in the ink composition is in the range described above, an inkjet ink composition having excellent curability, ejectability and adhesiveness is obtained.

Component A-3: Compounds represented by following Formulae I, II and III

The ink composition of the invention includes Component A-3: at least one selected from the group consisting of compounds each represented by any one of the following Formulae I, II and III.

The compounds represented by Formula I, Formula II, and Formula III will be described in detail below.

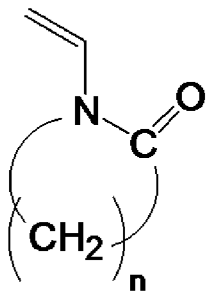

( I )

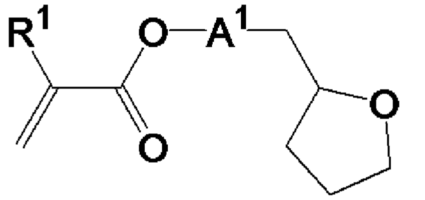

( II )

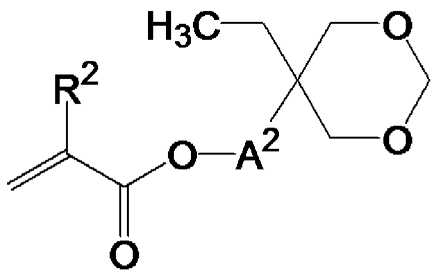

( III )

In Formulae I to III, n represents an integer of 2 to 6; $R^1$ and $R^2$ each independently represent a hydrogen atom or a methyl group; and $A^1$ and $A^2$ each independently represent a single bond or a divalent linking group.

<Compound represented by Formula I>

It is preferable that the ink composition of the invention includes a compound represented by Formula I.

When the ink composition includes a compound represented by Formula I, an ink composition having excellent curability and adhesiveness is obtained.

In Formula I, n represents an integer of 2 to 6. From the viewpoints of stretchability obtainable after the ink composition is cured, adhesiveness to a recording medium, and availability of raw materials, n is preferably an integer of 3 to 5, n is more preferably 3 or 5, and it is particularly preferable that n is 5, that is, the compound is N-vinyl-ε-caprolactam. N-vinyl-ε-caprolactam has excellent safety, is useful in general-purpose applications, and is available at a relatively low cost. Also, particularly satisfactory curability and adhesiveness are obtained therewith.

Furthermore, the compound represented by Formula I may have a substituent such as an alkyl group or an aryl group, and may be condensed into a saturated or unsaturated cyclic structure.

<Compound represented by Formula II>

It is preferable that the ink composition of the invention includes a compound represented by Formula II.

When the ink composition includes a compound represented by Formula II, an ink composition having excellent adhesiveness and weather resistance is obtained.

The compound represented by Formula II may be an acrylate compound, or may be a methacrylate compound; however, from the viewpoint of the curing rate, it is preferable that the compound is an acrylate compound, that is, $R^1$ is a hydrogen atom.

$A^1$ in Formula II represents a single bond or a divalent linking group, and from the viewpoints of the curing rate of the ink composition and adhesiveness, $A^1$ is particularly preferably a single bond.

The divalent linking group for $A^1$ is not particularly limited as long as the effects of the invention are not significantly impaired; however, from the viewpoints of the curing rate of the ink composition and adhesiveness, the divalent linking group is preferably an alkylene group, or a group obtained at least by linking one or more alkylene groups with one or more bonds selected from the group consisting of an ether bond, an ester bond and a urethane bond. The divalent linking group is more preferably an alkylene group, an alkyleneoxy group, or a polyalkyleneoxy group, and even more preferably an alkyleneoxy group or a polyalkyleneoxy group. Furthermore, the alkylene group in the alkylene group, alkyleneoxy group and polyalkyleneoxy group described above may be a linear alkylene group or a branched alkylene group, and the alkylene group is preferably an alkylene group having 2 to 8 carbon atoms, more preferably an alkylene group having 2 to 4 carbon atoms, and even more preferably an alkylene group having 2 or 3 carbon atoms.

Furthermore, the number of carbon atoms of the divalent linking group for $A^1$ is preferably 2 to 60, more preferably 2 to 30, even more preferably 2 to 8, and particularly preferably 2 to 4.

Specific examples of the compound represented by Formula II are shown below; however, the present invention is not intended to be limited to these.

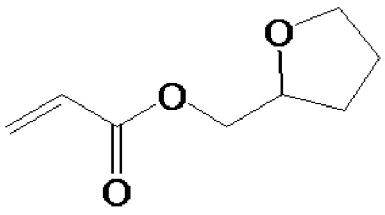
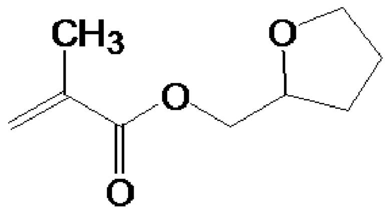
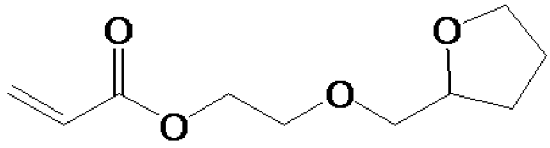
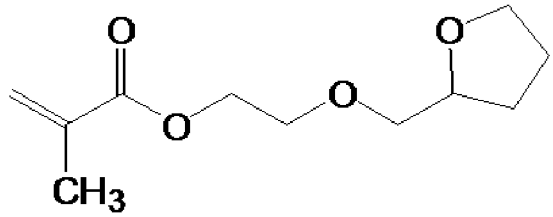
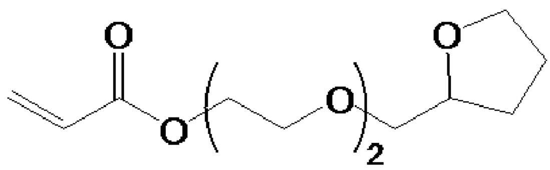
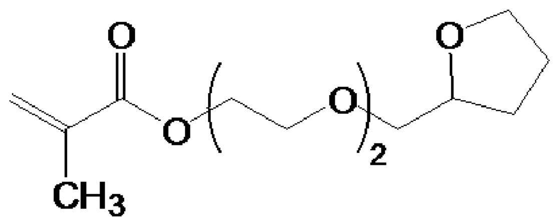
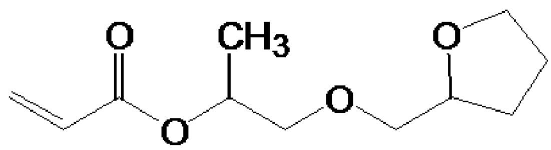
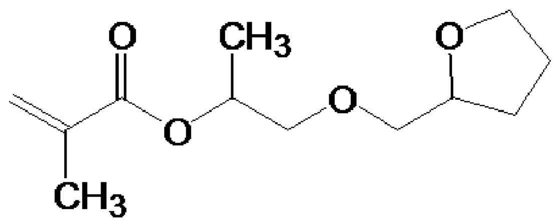
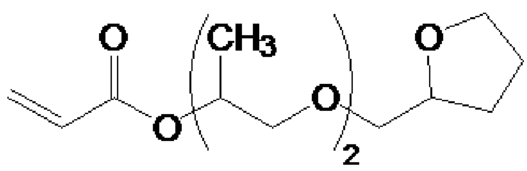
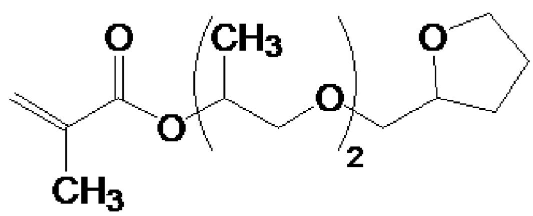
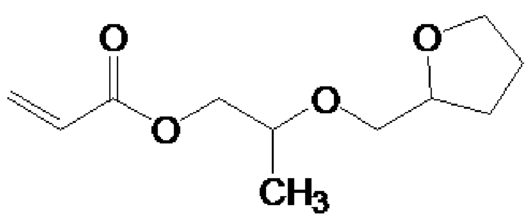
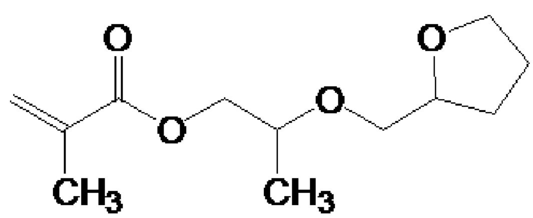

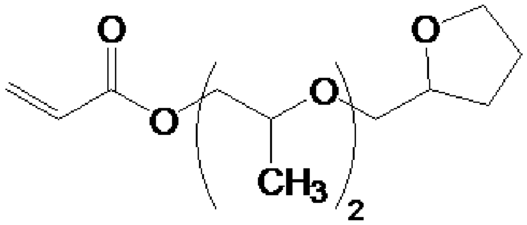
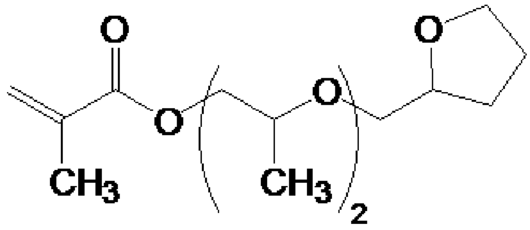
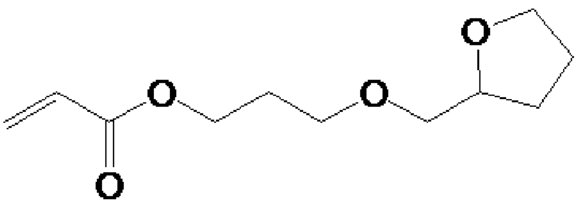
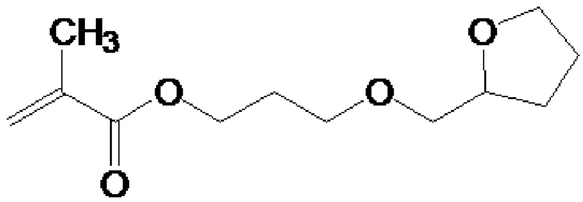
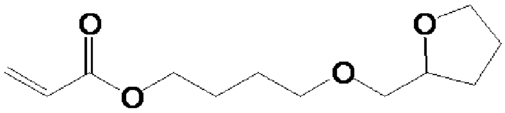
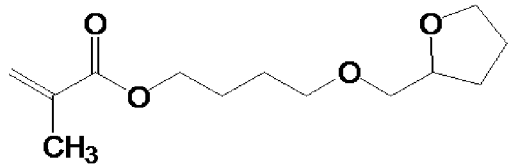
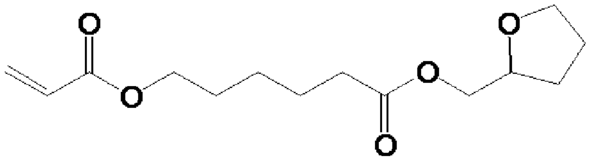
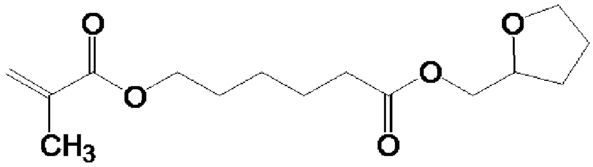
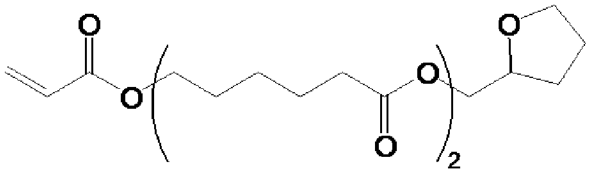
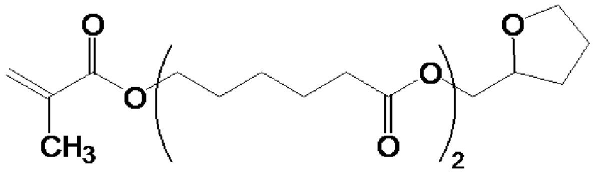
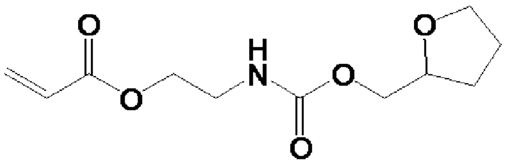
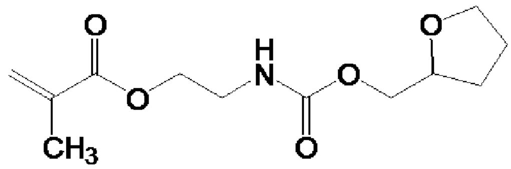

Among these, tetrahydrofurfuryl acrylate and tetrahydrofurfuryl methacrylate are preferred, and tetrahydrofurfuryl acrylate is more preferred.

<Compound represented by Formula III>

It is preferable that the ink composition of the invention includes a compound represented by Formula III.

When the ink composition includes a compound represented by Formula III, an ink composition having excellent curability and adhesiveness is obtained.

The compound represented by Formula III may be an acrylate compound, or may be a methacrylate compound; however, from the viewpoint of the curing rate, it is preferable that the compound is an acrylate compound, that is, $R^2$ is a hydrogen atom.

The divalent linking group for $A^2$ is not particularly limited as long as the effects of the invention are not significantly impaired; however, the divalent linking group is preferably an alkylene group, or a divalent group obtained by combining

an alkylene group and an ether bond.

$A^2$ is preferably an alkylene group, a poly(alkyleneoxy) group, a poly(alkyleneoxy)alkyl group, or an (alkyleneoxy)alkyl group; more preferably an alkylene group or an (alkyleneoxy)methyl group; even more preferably an alkylene group; and particularly preferably a methylene group. The number of carbon atoms of $A^2$ is preferably 0 to 61, more preferably 1 to 21, and even more preferably 1 to 9.

Specific preferred examples of the compound represented by Formula III include, but are not limited to, Compound C-1 to Compound C-4 shown below.

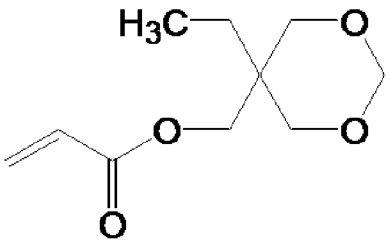

(C-1)

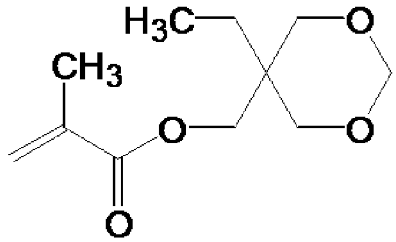

(C-2)

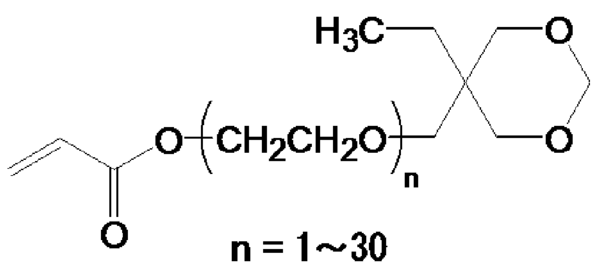

n = 1~30

(C-3)

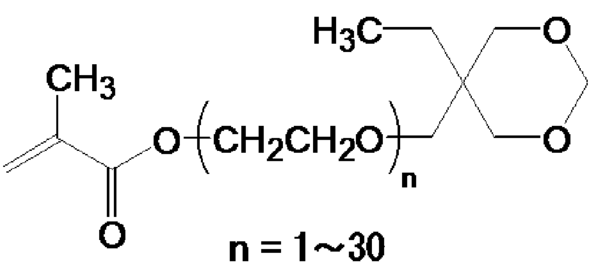

n = 1~30

(C-4)

Among these, cyclic trimethylolpropane formal (meth)acrylate C-1 and cyclic trimethylolpropane formal methacrylate C-2 are preferred, and cyclic trimethylolpropane formal acrylate C-1 is more preferred.

Component A-3 may be used singly, or two or more kinds thereof may be used in combination. The content of Component A-3 is 10% by mass to 50% by mass, more preferably 15% by mass to 45% by mass, and even more preferably 20% by mass to 40% by mass, relative to the total amount of the ink composition. When the content of Component A-3 is in the range described above, an inkjet ink composition having excellent curability, ejectability and storage stability is obtained.

Among the compounds each represented by any one of Formulae I, II and III, which compound is preferably used as Component A-3 of the invention may vary depending on the Component C: colored pigment that is included in the ink composition.

In the case of a cyan ink including Pigment Blue 28 as Component C, it is preferable that the ink composition includes a compound represented by Formula I, and it is preferable that the ink composition includes the compound represented by Formula I in an amount of 5% by mass to 30% by mass, and more preferably 10% by mass to 20% by mass, relative to the total mass of the ink composition. Furthermore, it is more preferable that the ink composition includes a compound represented by Formula II or Formula III in an amount of 60 parts by mass to 150 parts by mass, and even more preferably 80 parts by mass to 120 parts by mass, relative to 100 parts by mass of the compound represented by Formula I.

In a case in which the composition of Component A-3 in the ink composition follows the proportion described above, an inkjet ink composition having excellent curability, ejectability, adhesiveness and storage stability is obtained.

Furthermore, in the case of a magenta ink including a yellow ink including Pigment Yellow 42 or 184 as Component C, from the viewpoint of storage stability, the content of the compound represented by Formula I is preferably 10% by mass or less, and more preferably 5% by mass or less, relative to the total mass of the ink composition, and it is even more preferable that the ink composition does not include a compound represented by Formula I.

The total content of Component A-1, Component A-2 and Component A-3 in the ink composition of the invention is preferably 30% by mass to 90% by mass, more preferably 35% by mass to 80% by mass, and even more preferably 40% by mass to 70% by mass, relative to the total mass of the ink composition. When the total content is in the range described above, excellent curability and adhesiveness are obtained.

Component A-4: Other radical polymerizable compound

The ink composition of the invention may include another radical polymerizable compound in addition to Component A-1, Component A-2 and Component A-3.
The other radical polymerizable compound is preferably an ethylenically unsaturated compound.
Regarding the other radical polymerizable compound, any known radical polymerizable compound can be used, and examples thereof include a (meth)acrylate compound other than Component A-1, Component A-2 and Component A-3, a (meth)acrylamide compound, a vinyl ether compound, an allyl compound, a N-vinyl compound, and an unsaturated carboxylic acid. For example, the radical polymerizable monomers described in JP2009-221414A, the radical polymerizable compounds described in JP2009-209289A, and the ethylenically unsaturated compounds described in JP2009-191183A may be used.
The other radical polymerizable compound is preferably a (meth)acrylate compound, and more preferably an acrylate compound.
Specific examples of the other radical polymerizable compound include dipropylene glycol di(meth)acrylate, tris(2-hydroxyethyl) isocyanurate tri(meth)acrylate, propylene oxide (PO)-modified neopentyl glycol di(meth)acrylate, and ethylene oxide (EO)-modified trimethylolpropane tri(meth)acrylate. Dipropylene glycol diacrylate and tris(2-hydroxyethyl) isocyanurate triacrylate are preferred, and tris(2-hydroxyethyl) isocyanurate triacrylate is more preferred.
Furthermore, it is preferable that the ink composition of the invention includes a polyfunctional radical polymerizable compound, and more preferably a polyfunctional (meth)acrylate compound, as the other radical polymerizable compound.
Furthermore, examples of the other radical polymerizable compound include unsaturated carboxylic acids such as acrylic acid, methacrylic acid, itaconic acid, crotonic acid, isocrotonic acid and maleic acid, and salts thereof; anhydrides having ethylenically unsaturated groups; acrylonitrile, styrene, and various other radical polymerizable compounds such as unsaturated polyesters, unsaturated polyethers, unsaturated polyamides, and unsaturated urethanes.
More specifically, the commercially available products described in Yamashita, Shinzo, ed., "Kakyozai Handobukku (Handbook for Crosslinking Agents)", (1981, Taiseisha, Ltd.); Kato, Kiyomi, ed., "UV-EB Koka Handobukku (Handbook for UV-EB Curing) (Raw Materials Part)" (1985, Kobunshi Kankokai); RadTech Japan, ed., "UV-EB Koka Gijutsu no Oyo to Shijo (Application and Market for UV-EB Curing Technologies)", p. 79 (1989, CMC Publishing Co., Ltd.); Takiyama, Eiichiro, "Poriesuteru Jushi Handobukku (Handbook for Polyester Resins)", (1988, Nikkan Kogyo Shimbun, Ltd.), and the like; and radically polymerizable monomers, oligomers and polymers that are known in the art, can be used.
The molecular weight of the other radical polymerizable compound is preferably 80 to 1,000, more preferably 80 to 800, and even more preferably 80 to 500.
In a case in which the ink composition of the invention includes another radical polymerizable compound, the content of the other radical polymerizable compound in the ink composition of the invention is preferably 1% by mass to 35% by mass, more preferably 5% by mass to 30% by mass, and particularly preferably 10% by mass to 25% by mass, relative to the total mass of the ink composition.
The total content of Component A in the ink composition of the invention is preferably 30% by mass to 90% by mass, more preferably 50% by mass to 90% by mass, and even more preferably 55% by mass to 85% by mass, relative to the total mass of the ink composition.
Furthermore, the total content of the monofunctional (meth)acrylate compound in the ink composition of the invention is preferably 80% by mass to 100% by mass, and more preferably 90% by mass to 100% by mass, relative to the total mass of Component A, and the total content of the monofunctional acrylate compound is more preferably 80% by mass to 100% by mass, and particularly preferably 90% by mass to 100% by mass, relative to the total mass of Component A.
When the proportion of the monofunctional acrylate compound is in the range described above, curing shrinkage at the time of curing of the ink composition is suppressed, and an ink film having excellent hardness after curing can be obtained.

Component B: Radical polymerization initiator

The ink composition of the invention includes a radical polymerization initiator as Component B. The ink composition ejected on a support is cured when irradiated with active light rays. This is because the radical polymerization initiator included in the ink composition of the invention is decomposed by irradiation with active light rays, thereby a polymerization initiating species such as a radical is generated, and a polymerization reaction of the radical polymerizable compound is started and accelerated through the function of that initiating species.
Meanwhile, the radical polymerization initiator according to the invention includes not only a compound which absorbs external energy such as active light rays and produces a polymerization initiating species, but also a compound which absorbs particular active radiation and accelerates decomposition of the radical polymerization initiator (so-called

sensitizer).

In regard to the ink composition of the invention, when a sensitizer is present together with a radical polymerization initiator, the sensitizer in the system absorbs active radiation and enters an excited state, and accelerates decomposition of the radical polymerization initiator by being brought into contact with the radical polymerization initiator. Thus, a curing reaction with higher sensitivity can be achieved. Examples of the sensitizer include the agents described in JP2008-208190A.

The radical polymerization initiator is a polymerization initiator used for a radical polymerization reaction, and preferred examples of the radical polymerization initiator included in the ink composition of the invention include Component B-1: an acylphosphine oxide compound, Component B-2: a thioxanthone compound, Component B-3: an α-hydroxyketone compound, Component B-4: a benzophenone compound, and Component B-5: an α-aminoketone compound.

Component B-1 to Component B-5 will be explained below.

Component B-1: Acylphosphine oxide compound

According to the invention, a preferred example of Component B: radical polymerization initiator is Component B-1: an acylphosphine oxide compound. Examples of Component B-1 include Component B-1-1: a bisacylphosphine oxide compound, and Component B-1-2: a monoacylphosphine oxide compound. Preferred examples of Component B-1 include the bisacylphosphine oxide compounds and monoacylphosphine compounds described in paragraphs 0080 to 0098 of JP2009-096985A.

Component B-1-1: Bisacylphosphine oxide compound

It is preferable that Component B-1-1 has a partial structure represented by Formula b-1-1 in the structure of the compound.

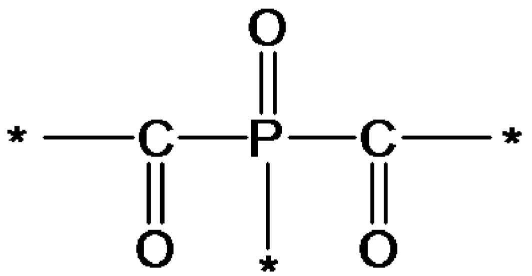

(b-1-1)

In Formula b-1-1, symbol * represents a bonding position.

Component B-1-1 is particularly preferably a compound represented by Formula b-1-2.

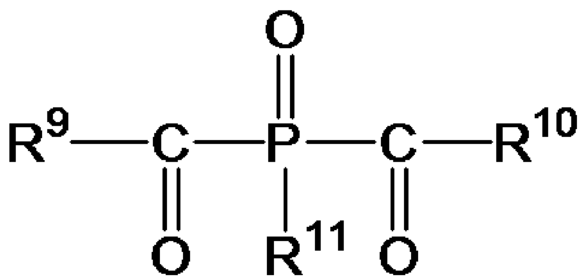

(b-1-2)

In Formula b-1-2, $R^9$, $R^{10}$ and $R^{11}$ each represent an aromatic hydrocarbon group which may have a methyl group or an ethyl group as a substituent.

Regarding the bisacylphosphine oxide compound represented by Formula b-1-2, it is preferable that $R^9$, $R^{10}$ and $R^{11}$ each represent a phenyl group which may have a methyl group as a substituent, and it is more preferable that $R^{11}$ represents a phenyl group, while $R^9$ and $R^{10}$ each represent a phenyl group having 1 to 3 methyl groups.

Among them, the bisacylphosphine oxide compound represented by formula b-1-2 is preferably bis(2,4,6-trimethylbenzoyl) phenylphosphine oxide (IRGACURE 819, manufactured by BASF SE).

Component B-1-2: Monoacylphosphine oxide compound

According to the invention, a preferred example of Component B: radical polymerization initiator is Component B-1-2: a monoacylphosphine compound.

Regarding Component B-1-2, it is preferable that the compound has a partial structure represented by Formula b-2-1 in the structure of the compound.

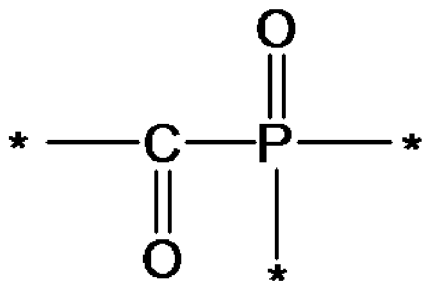

(b-2-1)

In Formula b-2-1, symbol * represents a bonding position.

Component B-1-2 is particularly preferably a compound represented by Formula b-2-2.

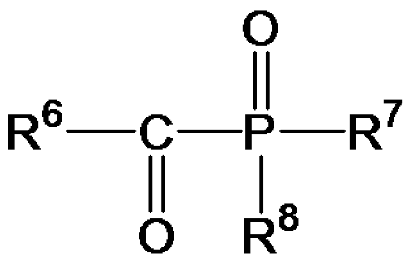

(b-2-2)

In Formula b-2-2, $R^6$, $R^7$, and $R^8$ each represent an aromatic hydrocarbon group which may have a methyl group or an ethyl group as a substituent.

Regarding the monoacylphosphine oxide compound represented by Formula b-2-2, it is preferable that $R^6$, $R^7$ and $R^8$ each represent a phenyl group which may have a methyl group as a substituent, and it is more preferable that $R^7$ and $R^8$ each represent a phenyl group, while $R^6$ represents a phenyl group having 1 to 3 methyl groups.

Among them, the monoacylphosphine oxide compound represented by Formula b-2-2 is preferably 2,4,6-trimethylbenzoyl diphenylphosphine oxide (LUCIRIN TPO: manufactured by BASF SE).

It is preferable that the ink composition of the invention includes Component B-1: an acylphosphine oxide compound. Above all, it is preferable to use a bisacylphosphine oxide compound and a monoacylphosphine oxide compound in combination.

Particularly, when a bisacylphosphine oxide compound is used, high sensitivity is obtained even at a small amount of addition. Meanwhile, a bisacylphosphine oxide can increase the sensitivity of the ink at a low amount of addition, as compared to a monoacylphosphine oxide; however, from the viewpoint that printed matters are colored yellow, the compound is not suitable for clear ink. For this reason, for a colored ink with which yellowing of images is not very noticeable, it is preferable to use a bisacylphosphine oxide and a monoacylphosphine oxide in combination.

In regard to the ink composition, the total content of Component B-1 is preferably 3% by mass to 20% by mass, more preferably 3% by mass to 15% by mass, and even more preferably 3% by mass to 10% by mass, relative to the total mass of the ink composition.

Component B-2: Thioxanthone compound

The ink composition of the invention may preferably include Component B-2: a thioxanthone compound.

The thioxanthone compound is not particularly limited, and any known compound can be used; however, the thioxanthone compound is preferably a compound represented by Formula b-2.

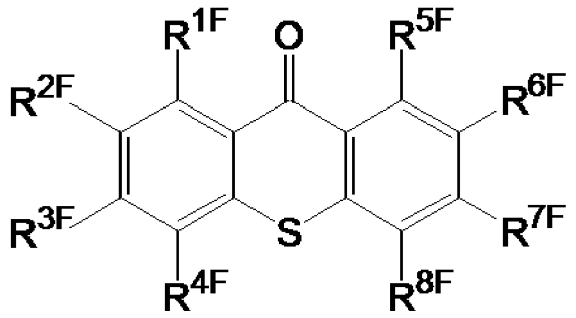

(b-2)

In regard to Formula b-2, $R^{1F}$, $R^{2F}$, $R^{3F}$, $R^{4F}$, $R^{5F}$, $R^{6F}$, $R^{7F}$ and $R^{8F}$ each independently represent a hydrogen atom, an alkyl group, a halogen atom, a hydroxy group, a cyano group, a nitro group, an amino group, an alkylthio group, an alkylamino group (including the cases of monosubstituted and bisubstituted groups; hereinafter, the same applies), an alkoxy group, an alkoxycarbonyl group, an acyloxy group, an acyl group, a carboxy group, or a sulfo group. The number of carbon atoms of the alkyl moiety in the alkyl group, alkylthio group, alkylamino group, alkoxy group, alkoxycarbonyl group, acyloxy group and acyl group is preferably 1 to 20, more preferably 1 to 8, and even more preferably 1 to 4.

Regarding $R^{1F}$, $R^{2F}$, $R^{3F}$, $R^{4F}$, $R^{5F}$, $R^{6F}$, $R^{7F}$ and $R^{8F}$, any adjacent two moieties may be respectively linked to each other and form a ring. Examples of the cyclic structure in a case in which these form rings include an aliphatic ring and an aromatic ring having a 5-membered or 6-membered ring, and the ring may be a heterocyclic ring containing elements other than carbon atoms. Furthermore, rings thus formed may be further combined to form a binuclear ring, for example, a fused ring. These ring structures may further have substituents. Examples of the substituent include a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, and a sulfo group. Examples of heteroatoms in a case in which the ring structure thus formed is a heterocyclic ring, include N, O and S.

Examples of the thioxanthone compound include thioxanthone, 2-isopropylthioxanthone, 4-isopropylthioxanthone, 2-chlorothioxanthone, 2-dodecylthioxanthone, 2,4-dichlorothioxanthone, 2,3-diethylthioxanthone, 1-chloro-4-propoxythioxanthone, 2-cyclohexylthioxanthone, 4-cyclohexylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboximide, n-octylthioxanthone-3,4-dicarboximide, N-(1,1,3,3-tetramethylbutyl)thioxanthone-3,4-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthon-2-yloxy)-N,N,N-trimethyl-1-propanaminiu m chloride. Among these, from the viewpoints of easy availability and curability, thioxanthone, 2,3-diethylthioxanthone, 2,4-diethylthioxanthone, 2,4-dichlorothioxanthone, 1-chloro-4-propoxythioxanthone, 2-cyclohexylthioxanthone, 4-cyclohexylthioxanthone, 2-isopropylthioxanthone, and 4-isopropylthioxanthone are preferred, and 2,4-diethylthioxanthone, 2-isopropylthioxanthone, and 4-isopropylthioxanthone are more preferred.

The content of Component B-2 is preferably 0.1% by mass to 5.0% by mass, and more preferably 0.5% by mass to 4.0% by mass, relative to the total amount of the ink composition.

Component B-3: α-Hydroxyketone compound

The ink composition of the invention preferably includes Component B-3: an α-hydroxyketone compound.

The α-hydroxyketone compound is preferably an α-hydroxyalkyl phenyl ketone compound, and examples thereof include 1-[4-(2-hydroxyethoxy)-phenyl]-2-hydroxy-2-methyl-1-propan-1-one, 2-hydroxy-2-methyl-1-phenyl-propan-1-one, and 1-hydroxycyclohexyl phenyl ketone. Among them, a 1-hydroxycyclohexyl phenyl ketone compound is preferred. Meanwhile, according to the invention, the 1-hydroxycyclohexyl phenyl ketone compound also includes a compound resulting from 1-hydroxycyclohexyl phenyl ketone being substituted with an arbitrary substituent. The substituent can

be arbitrarily selected in the range of substituents capable of exhibiting capability as radical polymerization initiators, and a specific example thereof is an alkyl group having 1 to 4 carbon atoms. Among them, 1-hydroxycyclohexyl phenyl ketone (IRGACURE 184, manufactured by BASF SE) is more preferred.

The content of Component B-3 is preferably 1.0% by mass to 5.0% by mass, and more preferably 2.0% by mass to 4.0% by mass, relative to the total amount of the ink composition.

Component B-4: Benzophenone compound

The ink composition of the invention can preferably include Component B-4: a benzophenone compound.

Regarding the benzophenone compound, any known compound can be used, and examples thereof include benzophenone, 4-phenylbenzophenone, isophthalophenone, and 4-benzoyl-4'-methylphenyl sulfide. Among them, a benzophenone compound and a 4-phenylbenzophenone compound are preferred. Meanwhile, according to the invention, a benzophenone compound and a 4-phenylbenzophenone compound also include compounds resulting from benzophenone or 4-phenylbenzophenone being substituted with an arbitrary substituent. The substituent can be arbitrarily selected in the range of substituents capable of exhibiting capability as radical polymerization initiators, and a specific example thereof is an alkyl group having 1 to 4 carbon atoms. Among them, benzophenone (SPEEDCURE BP, manufactured by Lambson Limited) and 4-phenylbenzophenone (SPEEDCURE PBP, manufactured by Lambson Limited) are more preferred.

The content of Component B-4 is preferably 1.0% by mass to 5.0% by mass, and more preferably 1.0% by mass to 3.0% by mass, relative to the total amount of the ink composition.

Component B-5: $\alpha$-Aminoketone compound

The ink composition of the invention can preferably include Component B-5: an $\alpha$-aminoketone compound.

The $\alpha$-aminoketone compound is preferably an $\alpha$-aminoalkyl phenyl ketone compound, and examples thereof include 2-methyl-1-phenyl-2-morpholinopropan-1-one, 2-methyl-1-(4-hexylphenyl)-2-morpholinopropan-1-one, 2-ethyl-2-dimethylamino-1-(4-morpholinophenyl)-butan-1-one, 2-methyl-1-(4-methylthiophenyl)-2-morpholinopropan-1-one, 2-benzyl-2-dimethylamino-1-(4-morpholinophenyl)butan-1-one, 2-benzyl-2-dimethylamino-1-(4-dimethylaminophenyl)butan-1-one, and 2-dimethylamino-2-[(4-methylphenyl)methyl]-1-[4-(4-morpholinyl)phenyl]butan-1-one. Among them, 2-benzyl-2-dimethylamino-1-(4-morpholinophenyl)butan-1-one (IRGACURE 369, manufactured by BASF SE), 2-dimethylamino-2-[(4-methylphenyl)methyl]-1-[4-(4-morpholinyl)phenyl]butan-1-one (IRGACURE 379, manufactured by BASF SE), and 2-methyl-1-(4-methylthiophenyl)-2-morpholinopropan-1-one (IRGACURE 907, manufactured by BASF SE) are preferred, and 2-benzyl-2-dimethylamino-1-(4-morpholinophenyl)butan-1-one (IRGACURE 369, manufactured by BASF SE) is more preferred.

The content of Component B-5 is preferably 0.5% by mass to 5.0% by mass, and more preferably 1.0% by mass to 3.0% by mass, relative to the total amount of the ink composition.

The ink composition of the invention may also include another radical polymerization initiator in addition to the radical polymerization initiators of Components B-1 to B-5. Examples of the other radical polymerization initiator include an aromatic ketone, an aromatic onium chloride, an organic peroxide, a thio compound, a hexaarylbiimidazole compound, a keto oxime ester compound, a borate compound, an azinium compound, a metallocene compound, an active ester compound, and a compound having a carbon-halogen bond.

The details of the polymerization initiators described above are known to those ordinarily skilled in the art and are described in, for example, paragraphs 0090 to 0116 of JP2009-185186A.

The total content of Component B according to the invention is preferably 1.0% by mass to 20.0% by mass, more preferably 3.0% by mass to 18.0% by mass, and even more preferably 5.0% by mass to 15.0% by mass, relative to the total amount of the ink composition.

When the total content is in the range described above, an ink composition having excellent curability is obtained.

Regarding the ink composition of the invention, it is preferable to use Component B-1-1 and Component B-1-2 in combination as the radical polymerization initiator; it is more preferable to use Component B-1-1, Component B-1-2, and Component B-2 in combination, or to use Component B-1-1, Component B-1-2, and Component B-3 in combination; and it is even more preferable to use Component B-1-1, Component B-1-2, Component B-2, and Component B-3 in combination.

In a case in which Component B-1-1 is used not in combination with Component B-1-2, it is preferable to use Component B-1-1, Component B-2, and Component B-3 in combination.

In a case in which Component B-1-2 is used not in combination with Compound B-1-1, it is preferable to use Component B-1-2, Component B-4, and Component B-5 in combination.

According to the embodiment described above, an ink composition having excellent curing sensitivity is obtained.

Component C: Colored pigment

The ink composition of the invention includes Component C: a colored pigment. The colored pigment is at least one inorganic pigment selected from the group consisting of Pigment Blue 28, Pigment Yellow 42, and Pigment Yellow 184.

When the ink composition includes the inorganic pigments described above, an ink composition having excellent weather resistance is obtained.

Furthermore, these inorganic pigments may be incorporated into the ink composition as pigment dispersions.

Since these inorganic pigments have superior color developability as the average particle size is smaller, in a case in which the inorganic pigments are applied to pigment dispersions, the volume average particle size of the pigment included in a pigment dispersion is preferably about 0.01 μm to 0.4 μm, and more preferably in the range of 0.02 μm to 0.3 μm.

Furthermore, the maximum particle size of the pigment is preferably 3 μm or less, and more preferably 1 μm or less. The particle size of a pigment can be adjusted by the selection of the pigment, dispersing agent, and dispersion medium, setting of the conditions for dispersion and the conditions for filtration, and the like.

The content of the inorganic pigment in the ink composition of the invention greatly depends on the various physical properties of the inorganic pigment used, the conditions for pigment dispersion that will be described below, and the system conditions for the inkjet printer in which the ink is mounted; however, the content is preferably 0.01% by mass to 30% by mass, more preferably 1% by mass to 25% by mass, and particularly preferably 5% by mass to 15% by mass, relative to the total mass of the ink composition.

When the content is in the value range described above, an ink composition having satisfactory storage stability and color development can be obtained.

The Pigment Blue 28, Pigment Yellow 42, and Pigment Yellow 184 that are incorporated into the ink composition of the invention will be explained below.

<Pigment Blue 28>

It is preferable that the ink composition of the invention includes Pigment Blue 28 (C.I. Pigment Blue 28; hereinafter, also referred to as PB28).

PB28 is an inorganic cyan pigment composed of cobalt aluminate. PB28 that can be used for the invention is not particularly limited; however, commercially available pigments described below can be preferably used.

Examples include LUCONYL EH0843, SICOPAL L6210, SICOPAL K6310, and XFAST 6310 (all manufactured by BASF SE).

<Pigment Red 101> (not included in the inventive ink composition)

An ink composition not falling under the scope of the invention may include Pigment Red 101 (C.I. Pigment Red 101; hereinafter, also referred to as PR101).

PR101 is an inorganic magenta pigment composed of iron(III) oxide. PR101 that can be used is not particularly limited; however, commercially available pigments described below can be preferably used.

Examples include SICOTRANS L2715, SICOTRANS L2816, SICOTRANS L2817, SICOTRANS L2818, SICOTRANS L2915 (all manufactured by BASF SE), CAPPOXYT RED 4434B, CAPPOXYT RED 4435B, CAPPOXYT RED 4437B, and CAPPOXYT RED 4438B (all manufactured by Cappelle Pigments NV).

<Pigment Yellow 42>

It is preferable that the ink composition of the invention includes Pigment Yellow 42 (C.I. Pigment Yellow 42; hereinafter, also referred to as PY42).

PY42 is an inorganic yellow pigment composed of iron oxide. PY42 that can be used for the invention is not particularly limited; however, commercially available pigments described below can be preferably used.

Examples include SICOTRANS L1915, SICOTRANS L1916 (all manufactured by BASF SE), CAPPOXYT YELLOW 4212X, and CAPPOXYT YELLOW 4214X (all manufactured by Cappelle Pigments NV).

<Pigment Yellow 184>

It is preferable that the ink composition of the invention includes Pigment Yellow 184 (C.I. Pigment Yellow 184; hereinafter, also referred to as PY184).

PY184 is an inorganic yellow pigment composed of bismuth vanadate. PY184 that can be used for the invention is not particularly limited; however, commercially available pigments described below can be preferably used.

Examples include SICOPAL L1100, SICOPAL L1110, SICOPAL L1120, SICOPAL L1600 (all manufactured by BASF SE), LYSOPAC YELLOW 6601B, LYSOPAC YELLOW 6611B, LYSOPAC YELLOW 6615B, and LYSOPAC YELLOW 6616B (all manufactured by Cappelle Pigments NV).

The above-mentioned inorganic pigments that are used for the invention may be used singly, or two or more kinds selected from the above-mentioned inorganic pigments may be used in combination. These inorganic pigments may be used in combination of colored pigments other than the inorganic pigments described above; however, it is preferable to use the inorganic pigments singly, or to use two or more kinds selected from the above-mentioned inorganic pigments in combination, and it is more preferable to use the inorganic pigments singly.

The content ratio in the case of using the inorganic pigments described above together with colored pigments other than the inorganic pigments may be adjusted to any arbitrary value; however, the mass ratio of the above-mentioned inorganic pigment:colored pigment other than Component C is preferably 51:49 to 99:1, more preferably 60:40 to 99:1, and even more preferably 70:30 to 99:1.

The colored pigment other than the above-mentioned inorganic pigments is not particularly limited, and can be appropriately selected according to the purpose. Examples thereof include known organic pigments and inorganic pigments, as well as resin particles dyed with dyes, commercially available pigment dispersions, and surface-treated pigments (for example, a dispersion in which a pigment is dispersed in water, a liquid organic compound, an insoluble resin or the like as a dispersing medium, and a pigment having the surface treated with a resin, a pigment derivative or the like). For example, pigments described in Ito, Seijiro, ed., "Ganryo no Jiten (Dictionary of Pigments)" (2000, published by Asakura Publishing Co., Ltd.); Hashimoto, Isao, "Yuki Ganryo Handobukku (Handbook of Organic Pigments)" (2006, published by Color Office Co., Ltd.); W. Herbst and K. Hunger, ed., "Industrial Organic Pigments" (1992, published by Wiley-VCH Verlag GmbH & Co. KGaA); JP2002-12607A; JP2002-188025A; JP2003-26978A; and JP2003-342503A, may be used.

Component D: Dispersing agent

The ink composition of the invention includes Component D: a dispersing agent.

The dispersing agent according to the invention is a polymer compound which acts or functions as a dispersing agent for Component C, and it is preferable that the dispersing agent has adsorbability and/or bindability to Component C.

Furthermore, it is preferable that the dispersing agent does not have an aromatic group.

The weight average molecular weight Mw of the dispersing agentt is preferably in the range of 2,000 to 300,000, more preferably 3,000 to 200,000, even more preferably 10,000 to 100,000, and particularly preferably 20,000 to 100,000. When the weight average molecular weight of the dispersing agent is in the range described above, dispersibility of the pigment is increased, and storage stability and ejectability of the ink composition are improved.

An example of the method for measuring the weight average molecular weight is a method of measuring the weight average molecular weight by gel permeation chromatography (GPC). Specifically, for example, the weight average molecular weight can be measured by conducting a GPC analysis under the conditions as described below.

1) Instrument apparatus: HLC-8220GPC manufactured by Tosoh Corporation
2) Column (manufacturer, column nature): three TSKgel SuperAWM-H columns connected (6.0 mm I.D. × 15 cm × 3 columns) manufactured by Tosoh Corporation, microparticulate gel based on a hydrophilic vinyl polymer
3) Solvent: N-methylpyrrolidone (10 mM LiBr)
4) Flow rate: 0.5 mL/min
5) Sample concentration: 0.1% by mass
6) Injection amount: 60 μL
7) Temperature: 40°C
8) Detector: Differential refractometer (RI)

The main chain skeleton of the dispersing agent is not particularly limited, and examples thereof include a polyurethane skeleton, a polyacrylic skeleton, a polyester skeleton, a polyamide skeleton, a polyimide skeleton, and a polyurea skeleton. From the viewpoint of the storage stability of the ink composition, a polyurethane skeleton and a polyester skeleton are preferred. Furthermore, the structure of the dispersing agent is also not particularly limited, and examples thereof include a random structure, a block structure, a comb-like structure, and a star-like structure.

Examples of the dispersing agent include wetting dispersing agent DISPER BYK Series commercially available from BYK Chemie GmbH, including 101, 102, 103, 106, 108, 109, 110, 111, 112, 116, 130, 140, 142, 145, 161, 162, 163, 164, 166, 167, 168, 170, 171, 174, 180, 182, 183, 184, 185, 2000, 2001, 2020, 2050, 2070, 2096, and 2150; EFKA Series commercially available from BASF SE, including 4008, 4009, 4010, 4015, 4020, 4046, 4047, 4050, 4055, 4060, 4080, 4300, 4330, 4340, 4400, 4401, 4402, 4403, 4406, 4800, 5010, 5044, 5054, 5055, 5063, 5064, 5065, 5066, 5070, 5244, 7701, 7731, and 7469; SOLSPERSE Series commercially available from Lubrizol Corporation, including 3000,

11200, 13240, 13650, 13940, 16000, 17000, 18000, 20000, 21000, 24000SC, 24000GR, 26000, 28000, 31845, 32000, 32500, 32550, 32600, 33000, 34750, 35100, 35200, 36000, 36600, 37500, 38500, 39000, 41000, 53095, 54000, 55000, 56000, and 71000; DISPARLON Series commercially available from Kusumoto Chemicals, Ltd., including 1210, 1220, 1831, 1850, 1860, 2100, 2150, 2200, 7004, KS-260, KS-273N, KS-860, KS-873N, PW-36, DN-900, DA-234, DA-325, DA-375, DA-550, DA-1200, DA-1401, and DA-7301; AJISPER Series commercially available from Ajinomoto Fine-Techno Co., Inc., including PB-711, PB-821, PB-822, PN-411, and PA-111; SURFYNOL Series commercially available from Air Products & Chemicals, Inc., including 104A, 104C, 104E, 104H, 104S, 104BC, 104DPM, 104PA, 104PG-50, 420, 440, DF110D, DF110L, DF37, DF58, DF75, DF210, CT111, CT121, CT131, CT136, GA, TG, and TGE; OLFINE Series commercially available from Nissin Chemical Industry Co., Ltd., including STG and E1004; SN-SPERSE Series manufactured by San Nopco Limited., including 70, 2120, and 2190; ADEKA COL Series and ADEKA TOL Series commercially available from Adeka Corporation; SANNONIC Series, NAROACTY CL Series, EMULMIN Series, NEWPOL PE Series, IONET M Series, IONET D Series, IONET S Series, IONET T Series, and SANSEPARA 100, commercially available from Sanyo Chemical Industries, Ltd.

The concentration of addition of the dispersing agent to a pigment dispersion is not particularly limited, and it is preferable to determine the concentration of addition by considering the chemical structure of the dispersing agent used or the concentration of the pigment.

The content of the dispersing agent in the ink composition of the invention is preferably 1% by mass to 75% by mass, more preferably 2% by mass to 50% by mass, and particularly preferably 5% by mass to 40% by mass, relative to the total mass of Component C in the ink composition, from the viewpoint of the dispersibility of Component A.

In the following description, various components that may be included in the ink composition of the invention, in addition to Component A to Component D, will be explained.

Component E: At least one polymer or oligomer selected from group consisting of acrylic resin, polyester resin, epoxy resin, and polyurethane resin

It is preferable that the ink composition of the invention includes, as Component E, at least one polymer or oligomer selected from the group consisting of an acrylic resin, a polyester resin, an epoxy resin, and a polyurethane resin, and from the viewpoint of weather resistance, it is preferable that the ink composition includes at least one polymer or oligomer selected from the group consisting of an acrylic resin and a polyester resin, while it is more preferable that the ink composition includes an acrylic resin.

The oligomer according to the invention is defined as a compound having a weight average molecular weight of 1,000 to 10,000, and the polymer according to the invention is defined as a compound having a weight average molecular weight of more than 10,000.

The polymer or oligomer may be radically polymerizable; however, it is preferable that the polymer or oligomer is an inactive resin that is not radically polymerizable. In a case in which the polymer or oligomer is radically polymerizable, it is preferable that the polymer or oligomer has an ethylenically unsaturated group as a radically polymerizable group, and it is more preferable that the polymer or oligomer has a (meth)acryloxy group.

According to the invention, a compound having a weight average molecular weight of more than 1,000 does not correspond to Component A even if the compound has a radically polymerizable group, and is denoted as Component E.

The glass transition temperature (Tg) of Component E is preferably 0°C or higher, more preferably 20°C or higher, even more preferably 40°C or higher, and particularly preferably 60°C or higher. Furthermore, the upper limit is not particularly limited; however, from the viewpoint of easy availability of the polymer or oligomer, the glass transition temperature is preferably 120°C or lower.

In a case in which the glass transition temperature of Component E is in the range described above, an ink composition having excellent adhesiveness can be obtained.

Furthermore, regarding the glass transition temperature (Tg) of a polymer compound according to the invention, a measured Tg that is obtained by actual measurement is to be applied. Specifically, for the measured Tg, a value measured using a differential scanning calorimeter (DSC) EXSTAR6220 manufactured by Seiko Instruments Inc., under conventional conditions for measurement can be used.

However, in a case in which measurement is difficult due to decomposition of the polymer or the like, a calculated Tg calculated by the following calculation formula is applied. The calculated Tg is calculated by the following Formula T:

$$1/Tg = \Sigma\ (Xi\ /Tgi) \qquad (T)$$

Here, the polymer as an object of calculation is assumed such that n kinds of monomer components from i = 1 to i = n are copolymerized. Xi represents the weight fraction of the i-th monomer ($\Sigma$ Xi = 1), and Tgi represents the glass transition temperature (absolute temperature) of a homopolymer of the i-th monomer. However, $\Sigma$ takes the sum

of values from i = 1 to i = n. Meanwhile, for the values of the glass transition temperatures of homopolymers of the respective monomers (Tgi), the values given in Polymer Handbook (3rd Edition) (J. Brandrup and E.H. Immergut (Wiley Intersicence, 1989)) are employed.

<Acrylic resin>

It is preferable that the ink composition of the invention includes an acrylic resin as Component E.

The acrylic resin may be a homopolymer of a (meth)acrylate compound, or may be a copolymer of the compound; however, from the viewpoint of allowing easy control of Tg, having satisfactory compatibility with the ink, and being inexpensive, the acrylic resin is preferably a homopolymer or a copolymer of a monofunctional (meth)acrylate compound, more preferably a copolymer of two or more kinds of monofunctional (meth)acrylate compounds, and even more preferably a copolymer of methyl methacrylate and a monofunctional (meth)acrylate compound.

The acrylic resin is preferably an inactive acrylic resin which does not have a polymerizable group. The "inert acrylic resin" according to the invention means that the acrylic resin is a polymer which does not have a polymerizable functional group that is capable of a chain polymerization reaction, and does not have a crosslinkable and/or crosslinked functional group that is capable of a successive crosslinking reaction. That is, the acrylic resin refers to an acrylic resin in a state in which the resin substantially does not undergo a polymerization reaction and a crosslinking reaction.

Furthermore, the weight average molecular weight of the acrylic resin is preferably 5,000 to 300,000, more preferably 10,000 to 250,000, even more preferably 15,000 to 200,000, and particularly preferably 20,000 to 150,000.

When the molecular weight of the acrylic resin is in the range described above, an ink composition having excellent curability, ejectability and adhesiveness and having satisfactory weather resistance is obtained.

Examples of the (meth)acrylate compound that is used to synthesize the acrylic resin include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-penyl (meth)acrylate, isopentyl (meth)acrylate, t-pentyl (meth)acrylate, neopentyl (meth)acrylate, 1-naphthyl (meth)acrylate, 2-naphthyl (meth)acrylate, 2-$\alpha$-naphthoxyethyl (meth)acrylate, 2-$\beta$-naphthoxyethyl (meth)acrylate, 2-anthryl (meth)acrylate, 9-anthryl (meth)acrylate, 1-phenanthryl (meth)acrylate, 2-phenanthryl (meth)acrylate, ethylene oxide-modified cresol (meth)acrylate, p-nonylphenoxyethyl (meth)acrylate, p-nonylphenoxy polyethylene glycol (meth)acrylate, p-cumylphenoxy ethylene glycol (meth)acrylate, 2-furyl (meth)acrylate, 2-furfuryl (meth)acrylate, 2-thienyl (meth)acrylate, 2-thenyl (meth)acrylate, 1-pyrrolyl (meth)acrylate, 2-pyridyl (meth)acrylate, 2-quinolyl (meth)acrylate, norbornyl (meth)acrylate, isobornyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, 3,3,5-trimethylcyclohexyl (meth)acrylate, 4-t-butylcyclohexyl (meth)acrylate, acryloylmorpholine, N-phthalimidoethyl (meth)acrylate, pentamethylpiperidyl (meth)acrylate, tetramethylpiperidyl (meth)acrylate, 5-(meth)acryloyloxymethyl-5-ethyl-1,3-dioxacyclohexane, 2-ethylhexyl (meth)acrylate, 2-hydroxyethyl (meth)acrylate, butoxyethyl (meth)acrylate, carbitol (meth)acrylate, n-butyl (meth)acrylate, allyl (meth)acrylate, glycidyl (meth)acrylate, dimethylaminomethyl (meth)acrylate, and an oligoester (meth)acrylate.

The acrylic resin is preferably a homopolymer or a copolymer of a methacrylate compound.

Furthermore, from the viewpoint of allowing easy control of Tg, having satisfactory compatibility with the ink, and being inexpensive, the acrylic resin is preferably a copolymer of two or more kinds of methacrylic compounds selected from the group consisting of methyl methacrylate, n-butyl methacrylate, phenoxyethyl methacrylate, tetrahydrofurfuryl methacrylate, 2-ethylhexyl methacrylate, isodecyl methacrylate, methoxypolyethylene glycol methacrylate, n-lauryl methacrylate, cyclohexyl methacrylate, 2-ethylhexyl methacrylate, and t-butyl methacrylate; more preferably a copolymer of methyl methacrylate and a methacrylate compound selected from the group consisting of n-butyl methacrylate, phenoxyethyl methacrylate, tetrahydrofurfuryl methacrylate, 2-ethylhexyl methacrylate, isodecyl methacrylate, methoxypolyethylene glycol methacrylate, and n-lauryl methacrylate; and is even more preferably a copolymer of methyl methacrylate and n-butyl methacrylate.

The acrylic resin that can be used for the invention is not particularly limited, and examples thereof include DIANAL MB-2588, DIANAL BR-101, and DIANAL BR-113 (all manufactured by Mitsubishi Rayon Co., Ltd.).

<Polyester resin>

It is preferable that the ink composition of the invention includes a polyester resin as Component E.

The weight average molecular weight of the polyester resin is preferably 1,000 to 10,000, and more preferably 1,000 to 5,000.

The polyester resin is preferably a polyester (meth)acrylate having a (meth)acryloxy group as a polymerizable group.

Preferred examples of the polyester (meth)acrylate include an aliphatic polyester (meth)acrylate and an aromatic polyester (meth)acrylate, and an aliphatic polyester (meth)acrylate is more preferred.

Furthermore, the polyester (meth)acrylate is preferably a tetrafunctional or lower-functional polyester (meth)acrylate, and more preferably a bifunctional or lower-functional polyester (meth)acrylate.
The polyester (meth)acrylate that can be used for the invention is not particularly limited, and examples thereof include EBECRYL Series (for example, EBECRYL 770, IRR467, 81, 84, 83, 80, 675, 800, 810, 812, 1657, 1810, IRR302, 450, 670, 830, 870, 1830, 1870, 2870, IRR267, 813, IRR483, and 811) manufactured by Daicel-Cytec Co., Ltd.; ARONIX M-6100, M-6200, M-6250, M-6500, M-7100, M-8030, M-8060, M-8100, M-8530, M-8560, and M-9050 manufactured by Toagosei Co., Ltd.; and CN292, CN293, CN294E, CN255, CN2256, CN2257, CN2259, CN2281, CN2505, CN2881, CN2271E, CN292, CN203, CN UVP210, CN2282, CN2255, CN2540, CN2560, and CN2619 manufactured by Sartomer USA, LLC.

<Epoxy resin>

It is preferable that the ink composition of the invention includes an epoxy resin as Component E.
The weight average molecular weight of the epoxy resin is preferably 1,000 to 10,000, and more preferably 2,000 to 10,000.
The epoxy resin is preferably an epoxy (meth)acrylate obtained by reacting a bisphenol A type or novolac type epoxy resin with a (meth)acrylate.
The epoxy (meth)acrylate that can be used for the invention is not particularly limited, and examples thereof include EBECRYL Series (for example, EBECRYL 600, 860, 2958, 3411, 3600, 3605, 3700, 3701, 3703, 3702, 3708, RDX63182, and 6040) manufactured by Daicel-Cytec Co., Ltd.; and CN173, CN1300, CN111, CN112, CN118, CN104, CN186, CN132, CN156, CN116, and CN133 manufactured by Sartomer USA, LLC.

<Polyurethane resin>

It is preferable that the ink composition of the invention includes a polyurethane resin as Component E.
The weight average molecular weight of the polyurethane is preferably 1,000 to 10,000, and more preferably 2,000 to 10,000.
The polyurethane is preferably a urethane (meth)acrylate having a (meth)acryloxy group as a polymerizable group.
Preferred examples of the urethane (meth)acrylate include an aliphatic urethane (meth)acrylate and an aromatic urethane (meth)acrylate, and an aliphatic urethane (meth)acrylate is more preferably used.
Furthermore, the urethane (meth)acrylate is preferably a tetrafunctional or lower-functional urethane (meth)acrylate, and more preferably a bifunctional or lower-functional urethane (meth)acrylate.
Examples of the urethane (meth)acrylate include R1204, R1211, R1213, R1217, R1218, R1301, R1302, R1303, R1304, R1306, R1308, R1901, and R1150 manufactured by DKS Co., Ltd.; EBECRYL Series (for example, EBECRYL 230, 270, 4858, 8402, 8804, 8807, 8803, 9260, 1290, 1290K, 5129, 4842, 8210, 210, 4827, 6700, 4450, and 220) manufactured by Daicel-Cytec Co., Ltd.; NK OLIGO U-4HA, U-6HA, U-15HA, U-108A, and U200AX manufactured by Shin Nakamura Chemical Co., Ltd.; ARONIX M-1100, M-1200, M-1210, M-1310, M-1600, and M-1960 manufactured by Toagosei Co., Ltd.; and CN964, CN996, CN984, CN969, and CN9001 manufactured by Sartomer USA, LLC.

Component E may be used singly or in combination of two or more kinds thereof.

The content of Component E in the ink composition fo the invention is preferably 0% by mass to 10% by mass, more preferably 0.1% by mass to 5% by mass, even more preferably 0.5% by mass to 3% by mass, and particularly preferably 1.5% by mass to 3% by mass, relative to the total mass of the ink composition.
When the content of Component E is in the range described above, an ink composition having excellent curability, ejectability and adhesiveness is obtained.

<Polymerization accelerator>

It is preferable that the ink composition that can be used for the invention includes a polymerization accelerator from the viewpoint of curability.
The polymerization accelerator is not particularly limited; however, a preferred example thereof is an amine compound, and a more preferred example is an aminobenzoate derivative. These are compounds which reduce inhibition of polymerization caused by oxygen.
Examples of the aminobenzoate derivative include, without being particularly limited, ethyl-4-dimethylaminobenzoate and 2-ethylhexyl-4-dimethylaminobenzoate.
Furthermore, examples of the polymerization accelerator as commercially available products include SPEEDCURE EHA and SPEEDCURE EDB (manufactured by Lambson Limited)

The content of the polymerization accelerator is preferably 0% by mass to 5% by mass, and more preferably 0.1% by mass to 3% by mass, relative to the total mass of the ink composition.

<Polymerization inhibitor>

It is preferable that the ink composition of the invention includes a polymerization inhibitor, from the viewpoints of storability and suppression of head clogging.

It is preferable that the polymerization inhibitor is added at a proportion of 200 ppm to 20,000 ppm relative to the total amount of the ink composition of the invention.

Examples of the polymerization inhibitor include a nitroso-based polymerization inhibitor, a hindered amine-based polymerization inhibitor, hydroquinone, benzoquinone, p-methoxyphenol, TEMPO (2,2,6,6-tetramethylpiperidine-1-oxyl), TEMPOL (4-hydroxy-2,2,6,6-tetramethylpiperidine-1-oxyl), and CUPERONE Al.

The content of the polymerization inhibitor is preferably 0% by mass to 2% by mass, and more preferably 0.01% by mass to 1% by mass, relative to the total mass of the ink composition.

<Surfactant>

It is preferable that the ink composition of the invention includes a surfactant in order to impart stable ejectability for a long time period.

Regarding the surfactant, those described in JP1987-173463A (JP-S62-173463A) and JP1987-183457A (JP-S62-183457A) may be used. Examples thereof include anionic surfactants such as dialkylsulfosuccinic acid salts, alkylnaphthalenesulfonic acid salts, and fatty acid salts; nonionic surfactants such as polyoxyethylene alkyl ethers, polyoxyethylene alkyl allyl ethers, acetylene glycols, and polyoxyethylene-polyoxypropylene block copolymers; and cationic surfactants such as alkylamine salts and quaternary ammonium salts. Furthermore, a fluorine-based surfactant (for example, an organic fluoro compound) or a silicone-based surfactant (for example, a polysiloxane compound) may also be used as the surfactant. It is preferable that the organic fluoro compound is hydrophobic. Examples of the organic fluoro compound include a fluorine-based surfactant, an oily fluorine-based compound (for example, fluorine oil), and a solid fluorine compound resin (for example, a tetrafluoroethylene resin), and those described in JP1982-9053B (JP-S57-9053B) (columns 8 to 17), and JP1987-135826A (JP-S62-135826A) may be used.

The polysiloxane compound is preferably a modified polysiloxane compound having an organic group introduced into some of the methyl groups of dimethylpolysiloxane. Examples of modification include, but are not limited to, polyether modification, methylstyrene modification, alcohol modification, alkyl modification, aralkyl modification, fatty acid ester modification, epoxy modification, amine modification, amino modification, and mercapto modification. These methods of modification can be used in combination. Furthermore, among them, a polyether-modified polysiloxane compound is preferred from the viewpoint of improving ejection stability during inkjetting.

Examples of the polyether-modified polysiloxane compound include SILWET L-7604, SILWET L-7607N, SILWET FZ-2104, and SILWET FZ-2161 (manufactured by Nippon Unicar Co., Ltd.); BYK306, BYK307, BYK331, BYK333, BYK347, and BYK348 (manufactured by BYK Chemie GmbH); KF-351A, KF-352A, KF-353, KF-354L, KF-355A, KF-615A, KF-945, KF-640, KF-642, KF-643, KF-6020, X-22-6191, X-22-4515, KF-6011, KF-6012, KF-6015, and KF-6017 (manufactured by Shin-Etsu Chemical Co., Ltd.); and TEGORAD-2100, 2200, 2250, 2500, and 2700 (manufactured by Evonik Tego Chemie GmbH).

Among these, preferred examples of the surfactant include silicone-based surfactants.

The content of the surfactant in the ink composition of the invention is appropriately selected depending on the purpose of use; however, the content is preferably 0% by mass to 2% by mass, and more preferably 0.0001% by mass to 1% by mass, relative to the total mass of the ink composition.

<Solvent>

In the ink composition of the invention, a solvent other than Component D: a dispersing agent may also be added as a dispersing medium for various components such as a pigment, in order to improve adhesiveness to building materials; however, it is preferable that the ink composition is solventless. This is because when a solvent remains in a cured ink image, solvent resistance may be deteriorated, or there may be a problem with the Volatile Organic Compound (VOC) of remaining solvent.

Examples of the solvent that may be used include ketone-based solvents such as acetone, methyl ethyl ketone, and diethyl ketone; alcohol-based solvents such as methanol, ethanol, 2-propanol, 1-propanol, 1-butanol, and tert-butanol; chlorine-based solvents such as chloroform and methylene chloride; aromatic solvents such as benzene and toluene; ester-based solvents such as ethyl acetate, butyl acetate, and isopropyl acetate; ether-based solvents such as

diethyl ether, tetrahydrofuran, and dioxane; glycol ether-based solvents such as ethylene glycol monomethyl ether, ethylene glycol dimethyl ether, and tripropylene glycol monomethyl ether; cyclic ester-based solvents such as γ-butyrolactone; and amide-based solvents such as 2-methylpyrrolidone and 2-pyrrolidone.

In a case in which a solvent is added, addition to the extent that there is no problem with solvent resistance or VOC is effective, and the amount of the solvent is preferably 0.1% by mass to 5% by mass, and more preferably 0.1% by mass to 3% by mass, relative to the total mass of the ink composition.

<Composition ratio of respective components>

Relative to the total mass of the ink composition, the content of Component A is preferably 30% by mass to 90% by mass, while the content of Component A-1 is 10% by mass to 50% by mass, the content of Component A-2 is 5% by mass to 40% by mass, and the content of Component A-3 is 10% by mass to 50% by mass; the content of Component B is preferably 1% by mass to 20% by mass; the content of Component C is preferably 0.01% by mass to 30% by mass; the content of Component D is preferably 0.1% by mass to 20% by mass; the content of Component E is preferably 0% by mass to 10% by mass; the content of the polymerization accelerator is preferably 0% by mass to 5% by mass; the content of the polymerization inhibitor is preferably 0% by mass to 1% by mass; the content of the surfactant is preferably 0% by mass to 1% by mass; and the content of the solvent is preferably 0% by mass to 5% by mass.

<Other components>

The ink composition of the invention includes, if necessary, an ultraviolet absorbent, an oxidation inhibitor, a decoloration inhibitor, a conductive salt, a polymer compound, a basic compound and the like, in addition to each of the components described above. Regarding these other components, any known components can be used, and for example, those described in JP2009-221416A may be used.

<Ink properties>

According to the invention, it is preferable to use an ink composition having a viscosity at 25°C of 40 mPa·s or less, in consideration of ejectability. The viscosity is more preferably 5 mPa·s to 40 mPa·s, and even more preferably 7 mPa·s to 30 mPa·s. Furthermore, the viscosity at the ejection temperature (preferably 25°C to 80°C, and more preferably 25°C to 50°C) is preferably 3 mPa·s to 15 mPa·s, and more preferably 3 mPa·s to 13 mPa·s. It is preferable for the ink composition of the invention to appropriately adjust the composition ratio so that the viscosity is in the range described above. When the viscosity at room temperature (25°C) is set to be high, even in the case of using a porous building material, infiltration of the ink composition into the building material can be avoided, and reduction of uncured monomer is enabled. Furthermore, ink bleeding at the time of landing of liquid droplets of the ink composition can be suppressed, and as a result, image quality is improved, which is preferable.

<Building material>

Specific examples of the building material (construction material) according to the invention include flooring (for example, board materials such as solid boards and plywood; tiles made of natural stone, glass, ceramics, stainless steel, and metals; cork flooring; sheets for floor, such as linoleum and vinyl; and paving materials such as stone materials, blocks, and bricks), wall materials (for example, sidings such as composite metal sidings, ceramic sidings, and wood sidings; exterior decorative materials such as decorative wood materials, sheet building materials, decorative film materials, external wall finish materials, and exterior finish materials; interior decorative materials such as interior finish materials, design materials, decorative laminated sheets, and wood interior finish materials; exterior louvers such as blind louvers, screens, and decorative louvers; exterior structural wall faces such as fence materials and blocks; wall paper, paper sliding doors, and wood sliding doors), roof materials (clay roof tiles, metal roof tiles, aluminum, asphalt shingles, copper plates, and the like), and ceiling materials. Among them, building material for which weather resistance is required are preferred, wall materials are more preferred, and the composite metal sidings or ceramic sidings according to JIS A 6711 or JIS A 5422 are preferred.

Furthermore, the composite metal sidings and ceramic sidings used for the invention may be provided with surface unevenness such as tile patterns, brick patterns and wood patterns through embossing processing, drawing processing or the like, or may be subjected to a prime coating treatment in advance by precoating processing or the like.

(Inkjet ink set for printing on building materials)

The inkjet ink set for printing on building materials of the invention (hereinafter, also simply referred to as "ink

set") includes three color ink compositions of a cyan ink, a magenta ink, and a yellow ink, and it is preferable to use the inkjet ink set of the invention as an inkjet ink set for printing on building on materials characterized by satisfying at least two among the following requirements i, ii or iii:

i: the cyan ink is the inkjet ink composition for printing on building materials of the invention, including Pigment Blue 28 as Component C;

ii: the magenta ink is an inkjet ink composition for printing on building materials comprising: a radical polymerizable compound as Component A; a radical polymerization initiator as Component B; a colored pigment as Component C; and a dispersing agent as Component D, wherein Component A includes benzyl (meth)acrylate and/or 2-phenoxyethyl (meth)acrylate as Component A-1; a monofunctional or bifunctional (meth)acrylate compound having an aliphatic hydrocarbon group having 6 or more carbon atoms as Component A-2; and at least one selected from the group consisting of compounds each represented by any one of the following Formulae I, II, and III as Component A-3, the total content of Component A-1 is 10% by mass to 50% by mass relative to the total mass of the ink composition, the total content of Component A-2 is 5% by mass to 40% by mass relative to the total mass of the ink composition, the total content of Component A-3 is 10% by mass to 50% by mass relative to the total mass of the ink composition, the inkjet ink composition comprises Pigment Red 101 as Component C, and

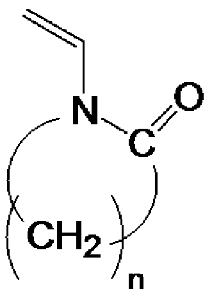
( I )

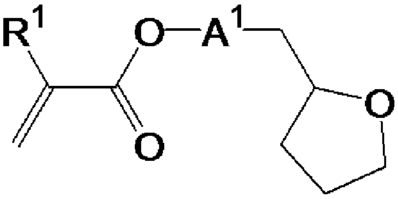
( II )

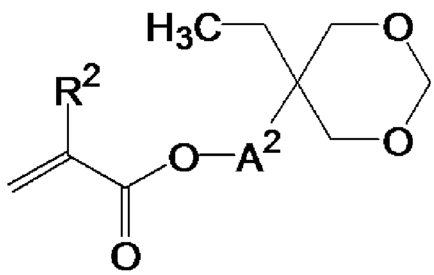
( III )

in Formulae I to III, n represents an integer from 2 to 6; $R^1$ and $R^2$ each independently represent a hydrogen atom or a methyl group; and $A^1$ and $A^2$ each independently represent a single bond or a divalent linking group; and

iii: the yellow ink is the ink composition of the invention, including Pigment Yellow 42 and/or Pigment Yellow 184 as Component C.

It is preferable that the ink set of the invention satisfies all of the requirements i to iii, from the viewpoint of weather resistance. Furthermore, the ink set of the invention is preferably an ink set composed of the three color ink compositions described above.

Furthermore, from the viewpoints of curability, ejectability, adhesiveness and storage stability, it is preferable that the cyan ink includes a compound represented by Formula I described above, and it is preferable that the cyan ink includes the compound represented by Formula I at a proportion of 5% by mass to 30% by mass, and more preferably 10% by mass to 20% by mass, relative to the total mass of the ink composition. Furthermore, it is more preferable that the cyan ink includes a compound represented by Formula II or Formula III described above in an amount of 60 parts by mass to 150 parts by mass, and even more preferably 80 parts by mass to 120 parts by mass, relative to 100 parts by mass of the compound represented by Formula I.

From the viewpoint of storage stability, it is preferable that the content of the compound represented by Formula I in the yellow ink is preferably 10% by mass or less, and more preferably 5% by mass or less, relative to the total mass of the ink composition, and it is even more preferable that the yellow ink does not include the compound represented by the compound represented by Formula I.

Furthermore, it is preferable that the ink set of the invention is an ink set composed of the three color ink compositions described above, and it is more preferable that the ink set is composed of the three color ink compositions described above, and the yellow ink includes Pigment Yellow 42 as Component C.

Furthermore, from the viewpoint of storage stability, it is preferable that the content of the compound represented by Formula I in the magenta ink is preferably 15% by mass or less, more preferably 10% by mass or less, and even more preferably 5% by mass or less, relative to the total mass of the ink composition.

<Black ink>

It is preferable that the ink set of the invention further includes a black ink that includes a radical polymerizable compound as Component A, a radical polymerization initiator as Component B, a colored pigment as Component C, and a dispersing agent as Component D, Component A including benzyl (meth)acrylate and/or 2-phenoxyethyl (meth)acrylate as A-1; a monofunctional or bifunctional (meth)acrylate compound having an aliphatic hydrocarbon group having 6 or more carbon atoms as A-2; and at least one of compounds each represented by any one of Formulae I, II and III as A-3, in which the total content of Component A-1 is 10% by mass to 50% by mass relative to the total mass of the ink composition, the total content of Component A-2 is 5% by mass to 40% by mass relative to the total mass of the ink composition, the total content of Component A-3 is 10% by mass to 50% by mass relative to the total mass of the ink composition, total content of the monofunctional radical polymerizable compounds is 80% by mass to 100% by mass relative to the total mass of Component A, and the black ink includes Pigment Black 7 as Component C.
Furthermore, it is preferable that the ink set of the invention is an ink set composed of the cyan ink, the magenta ink, the yellow ink, and the black ink.
Pigment Black 7 is an inorganic black pigment formed from carbon black. Pigment Black 7 that can be used for the invention is not particularly limited; however, commercially available pigments described below can be preferably used.
Examples include LUCONYL NG 0060, 0061 and 0066, and MICROLITH BLACK 0066 (all manufactured by BASF SE).
The black ink described above may include a pigment other than Pigment Black 7 as a colored pigment; however, it is preferable that the black ink does not include any pigment other than Pigment Black 7.
The content ratio in the case in which the black ink includes a colored pigment other than Pigment Black 7 may take any arbitrary value; however, the mass ratio of the Pigment Black 7:colored pigment other than Pigment Black 7 is preferably 51:49 to 99:1, more preferably 60:40 to 99:1, and even more preferably 70:40 to 99:1.
The colored pigment other than the Pigment Black 7 is not particularly limited and can be appropriately selected according to the purpose. Examples thereof include known organic pigments and inorganic pigments, as well as resin particles dyed with dyes, commercially available pigment dispersions, and surface-treated pigments (for example, a dispersion in which a pigment is dispersed in water, a liquid organic compound, an insoluble resin or the like as a dispersing medium, and a pigment having the surface treated with a resin, a pigment derivative or the like). For example, pigments described in Ito, Seijiro, ed., "Ganryo no Jiten (Dictionary of Pigments)" (2000, published by Asakura Publishing Co., Ltd.); Hashimoto, Isao, "Yuki Ganryo Handobukku (Handbook of Organic Pigments)" (2006, published by Color Office Co., Ltd.); W. Herbst and K. Hunger, ed., "Industrial Organic Pigments" (1992, published by Wiley-VCH Verlag GmbH & Co. KGaA); JP2002-12607A; JP2002-188025A; JP2003-26978A; and JP2003-342503A, may be used.
Furthermore, preferred embodiments of each of the components other than the colored pigment, which are included in the black ink, are similarly to the preferred embodiments of each of the components included in the ink composition of the invention.
The ink set of the invention may be a five-color ink set obtained by adding a black ink and a white ink to the ink compositions of cyan, magenta and yellow, which are three primary colors of the subtractive color process, and for the purpose of enhancing color tone reproducibility, the ink set of the invention may be an ink set including ink compositions of light cyan, light magenta, light black and the like, which are intermediate colors.
Furthermore, the ink set of the invention may also include a colorless clear ink, or may include inks such as an orange ink, a green ink, and a violet ink, which are special color inks, for the purpose of enhancing color tone reproducibility.

(Inkjet recording method and decorative building material)

The inkjet recording method of the invention is a method of ejecting the ink composition of the invention on a building material by an inkjet method, irradiating the ejected ink composition with active radiation, and curing the ink to form an image.
More specifically, the inkjet recording method of the invention includes, as step a, an image forming step of ejecting the inkjet ink composition for printing on building materials of the invention, and forming an image on a building material; and as step b, a curing step of irradiating the image thus obtained with active radiation, and thereby curing the ink composition.
Alternatively, the inkjet recording method of the invention includes, as step a', an image forming step of respectively ejecting the ink compositions included in the ink set of the invention by an inkjet system, and thereby forming an image on a building material; and as step b', a curing step of irradiating the image thus obtained with active radiation, and thereby curing the ink compositions.
Hereinafter, step a and step a' may be collectively referred to simply as "image forming step", and step b and step b' may be collectively referred to simply as "curing step".

As the inkjet recording method of the invention includes the image forming step and the curing step, an image is formed on a building material by cured ink compositions.

Furthermore, from another preferable viewpoint of the invention, there is provided a decorative building material obtained by the inkjet recording method of the invention; from a more preferable viewpoint, the decorative building material includes, as printed layers, the three color inks that are included in the ink set of the invention; and from an even more preferable viewpoint, the ink set satisfies all of the requirements i to iii. From another preferable viewpoint, there is provided a decorative building material having, on a building material, a primer layer that will be described below, a printed layer, and an overcoat layer that will be described below in this order.

<Image forming step>

In the image forming step according to the inkjet recording method of the invention, the inkjet recording apparatus that will be described in detail below can be used.

[Inkjet recording apparatus]

The inkjet recording apparatus that can be used for the invention is not particularly limited, and any known inkjet recording apparatus that can achieve an intended resolution can be arbitrarily selected and used. That is, when known inkjet recording apparatuses, including commercially available products, are used, the process of ink ejection on a building material in the image forming step and the curing step of the inkjet recording method of the invention can be carried out with all of the apparatuses.

Regarding the inkjet recording apparatus that can be used for the invention, for example, an apparatus including an ink supply system, a temperature sensor, and an active radiation source may be used.

The ink supply system is composed of, for example, a stock tank containing the ink composition of the invention, supply piping, an ink supply tank immediately before an inkjet head, a filter, and a piezoelectric type inkjet head. The piezoelectric type inkjet head can be driven to eject multi-sized dots of preferably 1 pl to 100 pl, and more preferably 8 pl to 30 pl, at a resolution of preferably 320 × 320 dpi to 4,000 × 4,000 dpi, more preferably 400 × 400 dpi to 1,600 × 1,600 dpi, and even more preferably 720 × 720 dpi. Meanwhile, the unit dpi as used herein represents the number of dots per 2.54 cm.

As described above, regarding the ink composition of the invention, it is preferable to adjust the ink composition to be ejected, to a constant temperature. Therefore, it is preferable that the inkjet recording apparatus comprises a means for stabilizing the ink composition temperature. The site to be adjusted to a constant temperature covers the piping system from the ink tank (in a case in which an intermediate tank is available, including the intermediate tank) to the nozzle injection face, and all of the members. That is, sites ranging from the ink supply tank to the inkjet head part can be subjected to thermal insulation and heating.

The method for controlling the temperature is not particularly limited; however, for example, it is preferable to provide plural temperature sensors at various piping sites, and to control heating in accordance with the ink flow rate and the environment temperature. The temperature sensors can be provided in the vicinity of the ink supply tank and the nozzle of the inkjet head. Furthermore, it is preferable that the head unit to be heated is thermally blocked or thermally insulated, so that the apparatus body is not affected by the temperature of external air. In order to shorten the printer booting time required for heating, or in order to reduce the loss of heat energy, it is preferable to implement thermal insulation with other sites, and to also make the overall heat capacity of the heating unit small.

In a case in which the inkjet recording apparatus described above is used, it is preferable that ejection of the ink composition of the invention is performed after heating the ink composition preferably to 25°C to 80°C, and more preferably to 25°C to 50°C, and thereby decreasing the viscosity of the ink composition preferably to 3 mPa·s to 15 mPa·s, and more preferably to 3 mPa·s to 13 mPa·s. Particularly, when an ink composition having an ink viscosity at 25°C of 50 mPa·s or less is used as the ink composition of the invention, ejection can be carried out satisfactorily, which is preferable. When this method is used, high ejection stability can be realized.

Since radiation-curable type ink compositions such as the ink composition of the invention generally have higher viscosities than those of the aqueous inks that are conventionally used as ink for inkjet recording, the viscosity fluctuation caused by temperature variation at the time of ejection is large. Viscosity fluctuation of ink greatly affects the change in the liquid droplet size and the change in the liquid droplet ejection speed, and further causes deterioration in the image quality. Therefore, it is necessary to maintain the temperature of the ink at the time of ejection as constant as possible. Therefore, according to the invention, it is appropriate to set the width of control of the ink temperature preferably to ±5°C of the set temperature, more preferably to ±2°C of the set temperature, and even more preferably to ±1°C of the set temperature.

<Curing step>

Next, the curing step will be explained.

The ink composition of the invention ejected on a building material is cured when irradiated with active radiation. This is because the radical polymerization initiator included in the ink composition of the invention is decomposed by irradiation with active radiation and generates a polymerization initiating species such as a radical, and the polymerization reaction of the polymerizable compound is started and accelerated by the function of the initiating species. At this time, when a polymerization initiator exists together with a sensitizer in the ink composition, the sensitizer in the system absorbs the active radiation and enters an excited state, and the sensitizer accelerates decomposition of the polymerization initiator as a result of an interaction with the polymerization initiator. Thus, a curing reaction with higher sensitivity can be achieved.

Here, regarding the active radiation used, $\alpha$-radiation, $\gamma$-radiation, an electron beam, X-radiation, ultraviolet radiation, visible light, infrared light, or the like can be used. The peak wavelength of the active radiation may vary with the absorption characteristics of the sensitizer; however, the peak wavelength is preferably 200 nm to 600 nm, more preferably 300 nm to 450 nm, and even more preferably 320 nm to 420 nm, and it is particularly preferable that the active radiation is ultraviolet radiation having a peak wavelength in the range of 340 nm to 400 nm.

Furthermore, the polymerization initiation system of the ink composition of the invention also has sufficient sensitivity, even if low output active radiation is used. Therefore, it is appropriate to cure the ink composition such that the exposed surface illuminance is preferably 10 $mW/cm^2$ to 4,000 $mW/cm^2$, and more preferably 20 $mW/cm^2$ to 2,500 $mW/cm^2$.

Widely known examples of the light source used for curing an ultraviolet light-curable ink composition for inkjet recording include a mercury lamp and a metal halide lamp. However, from the viewpoint of current environmental protection, mercury-free products are strongly desirable, and replacement with GaN-based semiconductor ultraviolet light emitting devices is very useful industrially and environmentally. Furthermore, LED (UV-LED) and LD (UV-LD) are small-sized, have long service lives and high efficiency, and are inexpensive, and thus these are expected as light sources for photocurable inkjet inks.

Furthermore, it is also possible to use a light emitting diode (LED) and a laser diode (LD) as active radiation sources. Particularly, in a case in which an ultraviolet light source is needed, an ultraviolet LED and an ultraviolet LD can be used. For example, a violet LED with a main emission spectrum having a wavelength between 365 nm and 420 nm is commercially available from Nichia Corporation. In a case in which a much shorter wavelength is required, US6084250A discloses a LED which can emit active radiation at a wavelength centered around between 300 nm to 370 nm. Furthermore, other ultraviolet LED's are also available and can irradiate radiation in different ultraviolet ranges. A particularly preferred active radiation source for the invention is a UV-LED, and particularly preferably, a UV-LED having a peak wavelength at 340 nm to 400 nm.

Meanwhile, the maximum illuminance of the LED on a building material is preferably 10 $mW/cm^2$ to 2,000 $mW/cm^2$, more preferably 20 $mW/cm^2$ to 1,000 $mW/cm^2$, and particularly preferably 50 $mW/cm^2$ to 800 $mW/cm^2$.

The ink composition of the invention is irradiated with such active radiation preferably for 0.01 seconds to 120 seconds, and more preferably 0.1 seconds to 90 seconds.

The irradiation conditions for active radiation and the basic irradiation method are disclosed in JP1985-132767A (JP-S60-132767A). Specifically, irradiation is carried out by providing a light source at either side of a head unit including an ejection apparatus for an ink composition, and scanning the head unit and the light source by a so-called shuttle system. Irradiation of active radiation is performed, after the landing of the ink composition, for a certain time period (preferably 0.01 seconds to 0.5 seconds, more preferably 0.01 seconds to 0.3 seconds, and even more preferably 0.01 seconds to 0.15 seconds). When the time taken from the landing of the ink composition to the irradiation is controlled to be a very short time as such, the ink composition landed on the building material can be prevented from seeping into the building material before curing. Furthermore, also for a porous building material, since the ink composition can be exposed before the ink composition penetrates into a deep part where the light source does not reach, remaining of unreacted monomer molecules can be suppressed, which is preferable.

Furthermore, it is also acceptable to complete curing by means of a separate light source which does not require driving. WO99/54415A discloses a method of using an optical fiber as a method for irradiation, or a method of irradiating a recording area with UV light by causing a collimated light source to hit a mirror surface provided on a lateral side of the head unit. Such a curing method can also be applied as the inkjet recording method of the invention.

Curing may also be completed by a line system (single pass system). A single pass system is a method of forming an image over the entire surface of a base material by an operation of using a full-line head that covers the entire area of the base material, and moving the full-line head and the base material relatively to each other only one time.

When such an inkjet recording method as described above is employed, the dot diameters of the landed ink composition can be maintained constantly on various building materials having different surface wetting properties, and thus the image quality is enhanced. Meanwhile, in order to obtain a color image, it is preferable to repeat printing in

order from a color with higher brightness. When printing is repeated in order from an ink composition having higher brightness, the emitted radiation can easily reach to the ink composition in the lower part, and satisfactory curing sensitivity, reduction of residual monomer molecules, and enhancement of adhesiveness can be expected. For example, in the case of using yellow, cyan, magenta, and black, it is preferable to apply the inks in the order of yellow → cyan → magenta → black on the building material. Furthermore, in the case of using white in addition to these, it is preferable to apply the inks in the order of white → yellow → cyan → magenta → black on the building material. In the case of using yellow, cyan, magenta, black, white, light cyan, and light magenta, it is preferable to apply the inks in the order of white → light cyan → light magenta → yellow → cyan → magenta → black on the building material. Also, the irradiation can be carried out such that all the colors are ejected, and then the inks can be collectively exposed; however, it is preferable to expose one color at a time, from the viewpoint of accelerating curing.

In this manner, when the ink composition of the invention is cured with high sensitivity by irradiating the ink composition with active radiation, a decorative building material having a desired image formed on the building material surface can be obtained.

Also, according to the invention, a cured layer of the ink composition of the invention formed on a building material may also be referred to as "printed layer".

<Preliminary treatment step>

It is preferable that the inkjet recording method of the invention includes, before the image forming step, a preliminary treatment step of forming a primer layer (undercoat layer) in advance on the printed surface of the building material.

When a primer layer is provided, the surface of the building material is flattened, infiltration of the ink into the building material is suppressed, and thus adhesiveness of the ink is improved. The preliminary treatment step may also be carried out before shipping of the building material.

In regard to the preliminary treatment step, various methods can be used as the method of applying a primer material that forms the primer layer. Examples thereof include an inkjet method, a screen printing method, a bar coater coating method, a spin coating method, a spray coating method, a curtain coating method, a dip coating method, an air knife coating method, a blade coating method, and a roll coating method. Among these, it is preferable that the primer layer is formed by an inkjet method.

The amount of formation or the thickness of the primer layer is not particularly limited; however, it is preferable that the primer layer is formed in an amount of 0.01 $g/m^2$ to 100 $g/m^2$, and it is more preferable that the primer layer is formed in an amount of 0.1 $g/m^2$ to 20 $g/m^2$. Furthermore, the thickness of the primer layer is preferably 0.01 $\mu$m to 100 $\mu$m, and more preferably 0.1 $\mu$m to 20 $\mu$m.

Regarding the primer material, any known primer material can be used without any particular limitations; however, it is preferable to use a primer material which can be cured by heat or active light rays. Regarding the base resin component of the primer material, various resins such as resins based on an acrylic resin, a polyester resin, an alkyd resin, a silicone resin, a fluororesin, an acrylic silicon resin, a polyurethane resin, and an epoxy resin can be used, and if necessary, crosslinking agents such as a polyisocyanate compound, an amino resin, an epoxy group-containing compound, and a carboxyl group-containing compound can also be used. These may be thermosetting type resins, or may be resins cured by active light rays. Also, it is preferable to have the primer material cured by heat or active light rays before the image forming step is performed.

<Post-treatment step>

It is preferable that the inkjet recording method of the invention includes a post-treatment step of forming a topcoat layer (protective layer) on the cured ink composition, after the curing step.

When a topcoat layer is provided, the cured ink composition is protected from scratches or dirt, and weather resistance is improved.

In regard to the post-treatment step, various methods can be used as the method of applying a topcoat material that forms the topcoat layer. Examples thereof include an inkjet method, a screen printing method, a bar coater coating method, a spin coating method, a spray coating method, a curtain coating method, a dip coating method, an air knife coating method, a blade coating method, and a roll coating method. Among these, it is preferable that the topcoat layer is formed by an inkjet method.

The amount of formation or the thickness of the topcoat layer is not particularly limited; however, it is preferable that the topcoat layer is formed in an amount of 0.01 $g/m^2$ to 100 $g/m^2$, and it is more preferable that the topcoat layer is formed in an amount of 0.1 $g/m^2$ to 20 $g/m^2$. Furthermore, the thickness of the topcoat layer is preferably 0.01 $\mu$m to 100 $\mu$m, and more preferably 0.1 $\mu$m to 20 $\mu$m.

Regarding the overcoat material, any known overcoat material can be used without any particular limitations;

however, it is preferable to use various clear coating materials, coating agents, varnishes, and the like. Furthermore, it is preferable to use a topcoat material having satisfactory weather resistance.

Regarding the base resin component of the topcoat material, various resins such as resins based on an acrylic resin, a polyester resin, an alkyd resin, a silicone resin, a fluororesin, an acrylic silicon resin, a polyurethane resin, and an epoxy resin can be used, and if necessary, crosslinking agents such as a polyisocyanate compound, an amino resin, an epoxy group-containing compound, and a carboxyl group-containing compound can also be used. These may be thermosetting type resins, or may be resins cured by active light rays.

Furthermore, from the viewpoint of weather resistance, it is preferable that the topcoat layer contains an ultraviolet absorbent and/or a photo stabilizer. Examples of the ultraviolet absorbent include benzophenone-based, benzotriazole-based, triazine-based, formamidine-based, cyanoacrylate-based, salicylate-based and oxalic anilide-based compounds, and examples of the photostabilizer include hindered amine-based compounds. However, the examples are not limited to these.

It is also preferable that the overcoat layer contains an oxidation inhibitor, from the viewpoint of weather resistance. Examples of the oxidation inhibitor include phenolic, phosphite-based and thioether-based compounds; however, the examples are not limited to these.

EXAMPLES

Hereinafter, the present invention will be explained more specifically by way of Examples and Comparative Examples. However, the present invention is not intended to be limited to these Examples. The unit "parts" as used in the following description is intended to indicate "parts by mass", unless particularly stated otherwise.

Materials of the ink compositions used in Examples and Comparative Examples are as described below.

- SICOPAL BLUE K 6310 (cyan pigment, C.I. Pigment Blue 28, manufactured by BASF SE)
- SICOTRANS RED L 2818 (magenta pigment, C.I. Pigment Red 101, manufactured by BASF SE)
- SICOTRANS GELB L 1915 (yellow pigment, C.I. Pigment Yellow 42, manufactured by BASF SE)
- LYSOPAC YELLOW 6615B (yellow pigment, C.I. Pigment Yellow 184, manufactured by Cappelle Pigments NV)
- HELIOGEN BLUE D7110F (cyan pigment, C.I. Pigment Blue 15:4, manufactured by BASF SE)
- CINQUASIA RED D4100 (magenta pigment, C.I. Pigment Violet 19, manufactured by BASF SE)
- CROMOPHTAL YELLOW D1085 (yellow pigment, C.I. Pigment Yellow 150, manufactured by BASF SE)
- MOGUL E (black pigment, C.I. Pigment Black 7, manufactured by Cabot Corporation)
- SOLSPERSE 32000 (dispersing agent that does not contain any aromatic group, manufactured by Lubrizol Japan, Limited.)
- SOLSPERSE 41000 (dispersing agent that does not contain any aromatic group, manufactured by Lubrizol Japan, Limited.)
- EFKA 7731 (dispersing agent that does not contain any aromatic group, manufactured by Evonik Degussa Japan, Co., Ltd.)
- SR339A (2-phenoxyethyl acrylate, manufactured by Sartomer Japan, Inc.)
- FA-BZA (benzyl acrylate, manufactured by Hitachi Chemical Co., Ltd.)
- VISCOAT #155 (cyclohexyl acrylate, manufactured by Osaka Organic Chemical Industry, Ltd.)
- CD420 (3,3,5-trimethylcyclohexyl acrylate, manufactured by Sartomer Japan, Inc.)
- SR506D (isobornyl acrylate, manufactured by Sartomer Japan, Inc.)
- SR217 (4-t-butylcyclohexyl acrylate, manufactured by Sartomer Japan, Inc.)
- FA-511AS (dicyclopentenyl acrylate, manufactured by Hitachi Chemical Co., Ltd.)
- FA-513AS (dicyclopentanyl acrylate, manufactured by Hitachi Chemical Co., Ltd.)
- SR440 (isooctyl acrylate, manufactured by Sartomer Japan, Inc.)
- SR395 (isodecyl acrylate, manufactured by Sartomer Japan, Inc.)
- SR335 (lauryl acrylate, manufactured by Sartomer Japan, Inc.)
- SR489 (tridecyl acrylate, manufactured by Sartomer Japan, Inc.)
- CD585 (cetyl acrylate, manufactured by Sartomer Japan, Inc.)
- CD587 (behenyl acrylate, manufactured by Sartomer Japan, Inc.)
- SR341 (3-methyl-1,5-pentanediol diacrylate, manufactured by Sartomer Japan, Inc.)
- SR238 (1,6-hexanediol diacrylate, manufactured by Sartomer Japan, Inc.)
- FA-129AS (1,9-nonanediol diacrylate, manufactured by Hitachi Chemical Co., Ltd.)
- SR833 (tricyclodecane dimethanol diacrylate, manufactured by Hitachi Chemical Co., Ltd.)
- NVC (N-vinylcaprolactam, manufactured by BASF SE)
- SR285 (tetrahydrofurfuryl acrylate, manufactured by Sartomer Japan, Inc.)
- SR531 (cyclic trimethylolpropane formal acrylate, CTFA, manufactured by Sartomer Japan, Inc.)

- SR508 (dipropylene glycol diacrylate, manufactured by Sartomer Japan, Inc.)
- SR368 (tris(2-hydroxyethyl) isocyanurate triacrylate, manufactured by Sartomer Japan, Inc.)
- LUCIRIN TPO (photopolymerization initiator, 2,4,6-trimethylbenzoyl diphenylphosphine oxide, manufactured by BASF SE)
- IRGACURE 819 (photopolymerization initiator, bis(2,4,6-trimethylbenzoyl) phenylphosphine oxide, manufactured by BASF SE)
- IRGACURE 184 (photopolymerization initiator, 1-hydroxy-cyclohexyl phenyl ketone, manufactured by BASF SE)
- IRGACURE 369 (photopolymerization initiator, 2-benzyl-2-dimethylamino-1-(4-morpholinophenyl)-butanone-1, manufactured by BASF SE)
- SPEEDCURE ITX (photopolymerization initiator, isopropylthioxanthone, manufactured by Lambson Limited)
- SPEEDCURE DETX (photopolymerization initiator, 2,4-diethylthioxanthone, manufactured by Lambson Limited)
- SPEEDCURE BP (photopolymerization initiator, benzophenone, manufactured by Lambson Limited)
- SPEEDCURE PBZ (photopolymerization initiator, 4-phenylbenzophenone, manufactured by Lambson Limited)
- SPEEDCURE EDB (amine co-initiator (polymerization accelerator), ethyl 4-dimethylaminobenzoate, manufactured by Lambson Limited)
- FLORSTAB UV12 (polymerization inhibitor, manufactured by Kromachem Ltd)
- BYK-307 (silicone surfactant, manufactured by BYK Chemie Japan K.K.)
- TEGORAD 2100 (silicone surfactant, manufactured by BYK Chemie Japan K.K.)
- DIANAL MB-2588 (acrylic resin, Tg = 49°C, manufactured by Mitsubishi Rayon Co., Ltd.)
- DIANAL BR-101 (acrylic resin, Tg = 60°C, manufactured by Mitsubishi Rayon Co., Ltd.)
- DIANAL BR-113 (acrylic resin, Tg = 78°C, manufactured by Mitsubishi Rayon Co., Ltd.)
- CN964 (urethane acrylate oligomer, Tg = -24°C, manufactured by Sartomer Japan, Inc.)
- CN996 (urethane acrylate oligomer, Tg = 8°C, manufactured by Sartomer Japan, Inc.)
- CN984 (urethane acrylate oligomer, Tg = 24°C, manufactured by Sartomer Japan, Inc.)
- CN969 (urethane acrylate oligomer, Tg = 40°C, manufactured by Sartomer Japan, Inc.)
- CN9001 (urethane acrylate oligomer, Tg = 60°C, manufactured by Sartomer Japan, Inc.)
- CN2256 (polyester acrylate oligomer, Tg = -22°C, manufactured by Sartomer Japan, Inc.)
- CN292 (polyester acrylate oligomer, Tg = 1°C, manufactured by Sartomer Japan, Inc.)
- CN293 (polyester acrylate oligomer, Tg = 21°C, manufactured by Sartomer Japan, Inc.)
- CN2259 (polyester acrylate oligomer, Tg = 45°C, manufactured by Sartomer Japan, Inc.)
- CN2257 (polyester acrylate oligomer, Tg = 63°C, manufactured by Sartomer Japan, Inc.)
- CN111 (epoxy acrylate oligomer, Tg = 30°C, manufactured by Sartomer Japan, Inc.)
- CN118 (epoxy acrylate oligomer, Tg = 48°C, manufactured by Sartomer Japan, Inc.)
- CN112 (epoxy acrylate oligomer, Tg = 67°C, manufactured by Sartomer Japan, Inc.)

(Preparation of mill base)

Each of the mill bases of cyan, magenta, yellow, and black was mixed at the composition described in Table 1, and the mill base was stirred for 10 minutes at a rate of 2,500 rotations/min using a mixer (L4R manufactured by Silverson Machines, Inc.). Thereafter, the mill base was introduced into a bead mill dispersing machine, DISPERMAT LS (manufactured by VMA-Getzmann GmbH), and dispersion was performed for 6 hours at a rate of 2,500 rotations/min using YTZ balls (manufactured by Nikkato Corporation) having a diameter of 0.65 mm.

[Table 1]

| (Unit: parts by mass) | Mill base | | | | | | | | |
|---|---|---|---|---|---|---|---|---|---|
| | Cyan | | | Magenta | | Yellow | | | Black |
| | 1 | 2 | 3 | 1 | 2 | 1 | 2 | 3 | 1 |
| SICOPAL BLUE K 6310 | 40.0 | 40.0 | -- | - | - | - | - | - | - |
| HELIOGEN BLUE D7110F | - | | 30.0 | - | - | - | - | - | - |
| SICOTRANS RED L 2818 | - | - | - | 30.0 | | - | - | - | - |
| CINQUASIA RED D4100 | - | - | - | - | 30.0 | - | - | - | - |
| SICOTRANS GELB L 1915 | - | - | - | - | - | 30.0 | - | - | - |
| LYSOPAC YELLOW 6615B | - | - | - | - | - | - | 40.0 | - | - |

(continued)

| (Unit: parts by mass) | Mill base | | | | | | | | |
|---|---|---|---|---|---|---|---|---|---|
| | Cyan | | | Magenta | | Yellow | | | Black |
| | 1 | 2 | 3 | 1 | 2 | 1 | 2 | 3 | 1 |
| CROMOPHTAL YELLOW D1085 | - | - | - | - | - | - | - | 30.0 | - |
| MOGULE | - | - | - | - | - | - | - | - | 40.0 |
| SOLSPERSE 32000 | 10.0 | 10.0 | 10.0 | 10.0 | 10.0 | 10.0 | - | 10.0 | - |
| SOLSPERSE 41000<br>EFKA 7731 | -<br>- | -<br>- | -<br>- | -<br>- | -<br>- | -<br>- | 10.0<br>- | -<br>- | -<br>10.0 |
| SR339A | 49.0 | - | 59.0 | 59.0 | 59.0 | 59.0 | 49.0 | 59.0 | 49.0 |
| FA-BZA | - | 49.0 | - | - | - | - | - | - | - |
| FLORSTAB UV12 | 1.0 | 1.0 | 1.0 | 1.0 | 1.0 | 1.0 | 1.0 | 1.0 | 1.0 |

(Example 1)

<Preparation of ink composition>

Components described below were stirred for 15 minutes at a rate of 2,500 rotations/min using a mixer (L4R manufactured by Silverson Machines, Inc.). Thereafter, the mixture was filtered using a cartridge filter manufactured by Pall Corporation (product name: PROFILE II AB01A01014J), and thus a cyan ink C1 was obtianed.

The viscosity measured at 25°C using TVE-22LT manufactured by Toki Sangyo Co., Ltd. was 22.1 mPa·s, and the surface tension measured at 25°C using an automatic surface tension meter, CBVP-Z, manufactured by Kyowa Interface Science Co., Ltd. was 22.4 mN/m.

Furthermore, an evaluation of storage stability was carried out using the cyan ink C1 thus obtained, according to the criteria described below.

- Cyan ink C1 -

- Cyan mill base 1: 25.0 parts by mass
- NVC: 14.0 parts by mass
- SR339A: 11.6 parts by mass
- SR335: 6.0 parts by mass
- SR489: 9.0 parts by mass
- SR531: 7.2 parts by mass
- SR238: 16.0 parts by mass
- SPEEDCURE BP: 1.2 parts by mass
- LUCIRIN TPO: 5.2 parts by mass
- SPEEDCURE ITX: 1.4 parts by mass
- SPEEDCURE EDB: 1.7 parts by mass
- FLORSTAB UV12: 0.1 parts by mass
- DIANAL BR113: 1.4 parts by mass
- BYK-307: 0.2 parts by mass

<Printing>

A UV inkjet printer, LUXELJET UV550GTW manufactured by Fujifilm Corporation was charged with the cyan ink C1 thus produced, and A2-sized test images formed from halftone images having areas of 0% to 100% (5% pitch) were formed on a substrate according to the "Siding S for field coating" described in "3. Type" of JIS A 5422 "Ceramic Sidings", under the conditions of production mode and lamp 7. The images were cured (printed). Using these test images, evaluations of curability, ejectability, adhesiveness (initial), weather resistance, and adhesiveness (over time) were

carried out according to the following criteria.

<Evaluation>

[Curability]

Regarding curability, stickiness of the printed material surface based on the tactile sensation at the 100% density area, and the presence or absence of transfer of image areas occurring after superposing a coated paper (manufactured by Oji Holdings Corporation, OK TOP COAT+) on each of the printed materials and leaving the printed material to stand for 1 day, were evaluated according to the following criteria. When the evaluation rate is 3 or higher, there is no problem for practical use.

5: There was no stickiness on the surface of the printed material, and there was no transfer.
4: There was slight stickiness on the surface of the printed material, but there was no transfer.
3: There was slight stickiness on the surface of the printed material, and there was slight transfer.
2: The surface of the printed material was sticky, and transfer occurred.
1: The surface of the printed material was very sticky, and severe transfer occurred.

[Ejectability]

The printer was conditioned so that the number of non-ejecting nozzles would be zero, and then 20 sheets of test images were continuously printed. Thereafter, the printer was left to stand still without performing printing for 24 hours, and then nozzle-checking images were printed. The number of nozzles that became non-ejecting was determined. As the number of non-ejecting nozzles is smaller, ejectability is more satisfactory. When the number of non-ejecting nozzles is 3 or more, streaks attributable to missing nozzles becomes noticeable, and the value of the printed matter is impaired.

[Adhesiveness (initial)]

An evaluation was carried out by the crosscut method according to ISO2409:2007 (JIS K5600-5-6). When the number of the evaluation rate is larger than 3, the handling operation of printed matter is hindered, and the value of the printed matter is impaired.

0: The periphery of the cutting is perfect and smooth, and there is no peeling in any of the lattice grids.
1: Slight peeling of film was observed at the intersections of the cutting. Not more than 5% of the crosscut parts were affected.
2: Peeling occurred along the periphery of the cutting of the film, and/or at the intersections. More than 5% but not more than 15% of the crosscut parts were affected.
3: Serious peeling occurred partially or fully along the periphery of the cutting of the film, and/or peeling occurred partially or fully in various parts of the lattice grids. More than 15% but not more than 35% of the crosscut parts were affected.
4: Serious peeling occurred partially or fully along the periphery of the cutting of the film, and/or peeling occurred partially or fully in numerous lattice grids. More than 35% but not more than 65% of the crosscut parts were affected.
5: The extent of peeling was higher than the case of Criterion 4.

[Evaluation of weather resistance and adhesiveness (over time)]

The printed matter thus produced were subjected to an accelerated weather resistance test according to ISO 4892-2 using a Weather-Ometer, Ci4000, manufactured by Atlas Material Testing Technology. For a 100% density area, the CIELAB values (L*, a*, and b*) of a sample at the beginning and the sample after the passage of 2,000 hours were measured under the conditions of light source: D65, view angle: 2°, and SCE (elimination of regular reflection light), using a spectrophotometer, CM-2600d, manufactured by Konica Minolta Optics, Inc., and the color difference ΔE was determined. Generally, when the value of ΔE is 3.0 or less, the human eye cannot recognize any color change. Furthermore, the adhesiveness (over time) after the passage of 2,000 hours was also evaluated by the same method as that for the adhesiveness (initial). The results are presented in Table 2.

[Storage stability]

An ink composition thus obtained was charged into a glass vial, and the increase ratio of viscosity after storage for 4 weeks at 60°C was evaluated. As the increase ratio is smaller, the storage stability is more satisfactory. Generally, when the increase ratio is 20% or less, there is no problem for practical use.

$$\text{Increase ratio (\%)} = ((\text{Viscosity after storage} - \text{viscosity before storage}) / \text{viscosity before storage}) \times 100$$

(Examples 2, 4 to 97 and 103 to 110, Reference Examples 3 and 98 to 102, and Comparative Examples 1 to 20)

Inks having the compositions described in Tables 2 to 18 were respectively produced in the same manner as in Example 1, and the inks were evaluated. The results are presented in Tables 2 to 18.

[Table 2]

| (unit: parts by mass) | Example | | | | | Comparative Example | | |
|---|---|---|---|---|---|---|---|---|
| | 1 | 2 | 3 | 4 | 5 | 1 | 2 | 3 |
| Ink | C1 | C2 | M1 | Y1 | Y2 | CC1 | CM1 | CY1 |
| Cyan mill base 1 | 25.0 | - | - | - | - | - | - | - |
| Cyan mill base 2 | - | 25.0 | - | - | - | - | - | - |
| Magenta mill base 1 | - | - | 15.0 | - | - | - | - | - |
| Yellow mill base 1 | - | - | - | 15.0 | - | - | - | - |
| Yellow mill base 2 | - | - | - | - | 15.0 | - | - | - |
| Cyan mill base 3 | - | - | - | - | - | 25.0 | - | - |
| Magenta mill base 2 | - | | - | - | - | - | 15.0 | - |
| Yellow mill base 3 | - | - | - | - | - | - | - | 15.0 |
| NVC | 14.0 | 14.0 | 14.0 | 14.0 | 14.0 | 14.0 | 14.0 | 14.0 |
| SR339A | 11.6 | 11.6 | 11.6 | 11.6 | 11.6 | 11.6 | 11.6 | 11.6 |
| SR335 | 6.0 | 6.0 | 6.0 | 6.0 | 6.0 | 6.0 | 6.0 | 6.0 |
| SR489 | 9.0 | 9.0 | 9.0 | 9.0 | 9.0 | 9.0 | 9.0 | 9.0 |
| SR531 | 7.2 | 7.2 | 17.2 | 17.2 | 17.2 | 7.2 | 17.2 | 17.2 |
| SR238 | 16.0 | 16.0 | 16.0 | 16.0 | 16.0 | 16.0 | 16.0 | 16.0 |
| SPEEDCURE BP | 1.2 | 1.2 | 1.2 | 1.2 | 1.2 | 1.2 | 1.2 | 1.2 |
| LUCIRIN TPO | 5.2 | 5.2 | 5.2 | 5.2 | 5.2 | 5.2 | 5.2 | 5.2 |
| SPEEDCURE ITX | 1.4 | 1.4 | 1.4 | 1.4 | 1.4 | 1.4 | 1.4 | 1.4 |
| SPEEDCURE EDB | 1.7 | 1.7 | 1.7 | 1.7 | 1.7 | 1.7 | 1.7 | 1.7 |
| FLORSTAB UV12 | 0.1 | 0.1 | 0.1 | 0.1 | 0.1 | 0.1 | 0.1 | 0.1 |
| DIANALBR113 | 1.4 | 1.4 | 1.4 | 1.4 | 1.4 | 1.4 | 1.4 | 1.4 |
| BYK-307 | 0.2 | 0.2 | 0.2 | 0.2 | 0.2 | 0.2 | 0.2 | 0.2 |
| Curability | 5 | 5 | 5 | 5 | 5 | 5 | 5 | 5 |
| Ejectability (number) | 1 | 3 | 0 | 0 | 0 | 0 | 0 | 0 |
| Weather resistance (ΔE) | 1.5 | 1.7 | 1.3 | 1.2 | 1.3 | 5.2 | 7.7 | 17.8 |
| Adhesiveness (initial) | 0 | 0 | 0 | 0 | 0 | 0 | 0 | 0 |

(continued)

| (unit: parts by mass) | Example | | | | | Comparative Example | | |
|---|---|---|---|---|---|---|---|---|
| | 1 | 2 | 3 | 4 | 5 | 1 | 2 | 3 |
| Adhesiveness (over time) | 0 | 0 | 0 | 0 | 0 | 1 | 1 | 1 |
| Storage stability (%) | 10 | 14 | 14 | 13 | 18 | 16 | 11 | 13 |

In Table 2, Example 3 is a Reference Example.

[Table 3]

| (unit: parts by mass) | Example | | | | | |
|---|---|---|---|---|---|---|
| | 6 | 7 | 8 | 9 | 10 | 11 |
| Cyan ink | C4 | C5 | C6 | C7 | C8 | C10 |
| Cyan mill base 1 | 25.0 | 25.0 | 25.0 | 25.0 | 25.0 | - |
| Cyan mill base 2 | - | - | - | - | - | 25.0 |
| SR339A | 5.0 | 10.0 | 25.0 | 30.0 | 35.0 | - |
| FA-BZA | - | - | - | - | - | 5.0 |
| SR531 | 46.0 | 41.0 | 26.0 | 21.0 | 16.0 | 46.0 |
| SR833 | 11.0 | 11.0 | 11.0 | 11.0 | 11.0 | 11.0 |
| IRGACURE 184 | 2.4 | 2.4 | 2.4 | 2.4 | 2.4 | 2.4 |
| LUCIRIN TPO | 3.0 | 3.0 | 3.0 | 3.0 | 3.0 | 3.0 |
| IRGACURE 819 | 3.0 | 3.0 | 3.0 | 3.0 | 3.0 | 3.0 |
| SPEEDCURE DETX | 2.1 | 2.1 | 2.1 | 2.1 | 2.1 | 2.1 |
| FLORSTAB UV12 | 0.1 | 0.1 | 0.1 | 0.1 | 0.1 | 0.1 |
| DIANAL BR113 | 2.4 | 2.4 | 2.4 | 2.4 | 2.4 | 2.4 |
| Curability | 4 | 5 | 5 | 4 | 3 | 4 |
| Ejectability (number) | 0 | 0 | 0 | 1 | 2 | 0 |
| Weather resistance ($\Delta$E) | 1.1 | 1.2 | 1.2 | 1.3 | 1.5 | 1.2 |
| Adhesiveness (initial) | 1 | 0 | 0 | 0 | 0 | 0 |
| Adhesiveness (over time) | 2 | 0 | 0 | 0 | 0 | 1 |
| Storage stability (%) | 9 | 9 | 9 | 9 | 9 | 9 |

[Table 4]

| (unit: parts by mass) | Example | | | | | | Comparative Example | | |
|---|---|---|---|---|---|---|---|---|---|
| | 12 | 13 | 14 | 15 | 16 | 17 | 4 | 5 | 6 |
| Cyan ink | C11 | C12 | C13 | C14 | C15 | C16 | CC2 | CC3 | CC4 |
| Cyan mill base 1 | - | - | - | - | 25.0 | 25.0 | 25.0 | 25.0 | - |
| Cyan mill base 2 | 25.0 | 25.0 | 25.0 | 25.0 | - | - | - | - | 25.0 |
| SR339A | - | - | - | - | - | 10.0 | 40.0 | 15.0 | - |
| FA-BZA | 10.0 | 25.0 | 30.0 | 35.0 | 10.0 | 15.0 | - | 25.0 | 40.0 |
| SR531 | 41.0 | 26.0 | 21.0 | 16.0 | 41.0 | 26.0 | 11.0 | 11.0 | 11.0 |

(continued)

| (unit: parts by mass) | Example | | | | | | Comparative Example | | |
|---|---|---|---|---|---|---|---|---|---|
| | 12 | 13 | 14 | 15 | 16 | 17 | 4 | 5 | 6 |
| SR833 | 11.0 | 11.0 | 11.0 | 11.0 | 11.0 | 11.0 | 11.0 | 11.0 | 11.0 |
| IRGACURE 184 | 2.4 | 2.4 | 2.4 | 2.4 | 2.4 | 2.4 | 2.4 | 2.4 | 2.4 |
| LUCIRIN TPO | 3.0 | 3.0 | 3.0 | 3.0 | 3.0 | 3.0 | 3.0 | 3.0 | 3.0 |
| IRGACURE 819 | 3.0 | 3.0 | 3.0 | 3.0 | 3.0 | 3.0 | 3.0 | 3.0 | 3.0 |
| SPEEDCURE DETX | 2.1 | 2.1 | 2.1 | 2.1 | 2.1 | 2.1 | 2.1 | 2.1 | 2.1 |
| FLORSTAB UV12 | 0.1 | 0.1 | 0.1 | 0.1 | 0.1 | 0.1 | 0.1 | 0.1 | 0.1 |
| DIANAL BR113 | 2.4 | 2.4 | 2.4 | 2.4 | 2.4 | 2.4 | 2.4 | 2.4 | 2.4 |
| Curability | 5 | 5 | 4 | 4 | 5 | 5 | 2 | 3 | 3 |
| Ejectability (number) | 0 | 0 | 2 | 2 | 0 | 0 | 3 | 3 | 4 |
| Weather resistance ($\Delta E$) | 1.3 | 1.4 | 1.5 | 1.7 | 1.3 | 1.3 | 1.6 | 1.8 | 2.0 |
| Adhesiveness (initial) | 0 | 0 | 0 | 0 | 0 | 0 | 0 | 0 | 0 |
| Adhesiveness (over time) | 0 | 0 | 0 | 0 | 0 | 0 | 0 | 0 | 0 |
| Storage stability (%) | 10 | 10 | 10 | 11 | 10 | 10 | 10 | 11 | 13 |

[Table 5]

| (unit: parts by mass) | Example | | | | | | | |
|---|---|---|---|---|---|---|---|---|
| | 18 | 19 | 20 | 21 | 22 | 23 | 24 | 25 |
| Cyan ink | C17 | C18 | C19 | C20 | C21 | C22 | C23 | C24 |
| Cyan mill base 1 | 25.0 | 25.0 | 25.0 | 25.0 | 25.0 | 25.0 | 25.0 | 25.0 |
| SR339A | 8.0 | 8.0 | 8.0 | 8.0 | 8.0 | 8.0 | 8.0 | 8.0 |
| NVC | 12.0 | 17.0 | 22.0 | 37.0 | 42.0 | 47.0 | - | - |
| SR285 | - | - | - | - | - | - | 12.0 | 17.0 |
| SR506D | 40.0 | 35.0 | 30.0 | 15.0 | 10.0 | 5.0 | 40.0 | 35.0 |
| SR368 | 6.0 | 6.0 | 6.0 | 6.0 | 6.0 | 6.0 | 6.0 | 6.0 |
| LUCIRIN TPO | 4.0 | 4.0 | 4.0 | 4.0 | 4.0 | 4.0 | 4.0 | 4.0 |
| IRGACURE 819 | 1.2 | 1.2 | 1.2 | 1.2 | 1.2 | 1.2 | 1.2 | 1.2 |
| SPEEDCURE DETX | 1.6 | 1.6 | 1.6 | 1.6 | 1.6 | 1.6 | 1.6 | 1.6 |
| SPEEDCURE EDB | 1.2 | 1.2 | 1.2 | 1.2 | 1.2 | 1.2 | 1.2 | 1.2 |
| FLORSTAB UV12 | 0.1 | 0.1 | 0.1 | 0.1 | 0.1 | 0.1 | 0.1 | 0.1 |
| DIANAL BR113 | 0.9 | 0.9 | 0.9 | 0.9 | 0.9 | 0.9 | 0.9 | 0.9 |
| Curability | 4 | 5 | 5 | 5 | 4 | 3 | 3 | 3 |
| Ejectability (number) | 2 | 1 | 0 | 0 | 0 | 1 | 3 | 2 |
| Weather resistance (AE) | 1.2 | 1.4 | 1.6 | 2.0 | 2.4 | 2.9 | 0.9 | 0.9 |
| Adhesiveness (initial) | 2 | 1 | 0 | 0 | 0 | 0 | 2 | 1 |
| Adhesiveness (over time) | 2 | 2 | 1 | 1 | 2 | 2 | 2 | 1 |
| Storage stability (%) | 10 | 11 | 12 | 14 | 16 | 19 | 7 | 7 |

[Table 6]

| (unit: parts by mass) | Example | | | | Comparative Example | | | | |
|---|---|---|---|---|---|---|---|---|---|
| | 26 | 27 | 28 | 29 | 7 | 8 | 9 | 10 | 11 |
| Cyan ink | C25 | C26 | C27 | C28 | CC5 | CC6 | CC7 | CC8 | CC9 |
| Cyan mill base 1 | 25.0 | 25.0 | 25.0 | 25.0 | 25.0 | 25.0 | 25.0 | 25.0 | 25.0 |
| SR339A | 8.0 | 8.0 | 8.0 | 8.0 | 8.0 | 8.0 | 8.0 | 8.0 | 8.0 |
| NVC | - | - | - | - | - | 7.0 | 52.0 | - | - |
| SR285 | 22.0 | 37.0 | 42.0 | 47.0 | - | - | - | 7.0 | 52.0 |
| SR506D | 30.0 | 15.0 | 10.0 | 5.0 | 52.0 | 45.0 | - | 45.0 | - |
| SR368 | 6.0 | 6.0 | 6.0 | 6.0 | 6.0 | 6.0 | 6.0 | 6.0 | 6.0 |
| LUCIRIN TPO | 4.0 | 4.0 | 4.0 | 4.0 | 4.0 | 4.0 | 4.0 | 4.0 | 4.0 |
| IRGACURE 819 | 1.2 | 1.2 | 1.2 | 1.2 | 1.2 | 1.2 | 1.2 | 1.2 | 1.2 |
| SPEEDCURE DETX | 1.6 | 1.6 | 1.6 | 1.6 | 1.6 | 1.6 | 1.6 | 1.6 | 1.6 |
| SPEEDCURE EDB | 1.2 | 1.2 | 1.2 | 1.2 | 1.2 | 1.2 | 1.2 | 1.2 | 1.2 |
| FLORSTAB UV12 | 0.1 | 0.1 | 0.1 | 0.1 | 0.1 | 0.1 | 0.1 | 0.1 | 0.1 |
| DIANALBR113 | 0.9 | 0.9 | 0.9 | 0.9 | 0.9 | 0.9 | 0.9 | 0.9 | 0.9 |
| Curability | 4 | 4 | 3 | 3 | 3 | 3 | 2 | 3 | 1 |
| Ejectability (number) | 1 | 1 | 1 | 1 | 5 | 4 | 2 | 4 | 1 |
| Weather resistance ($\Delta$E) | 1.0 | 1.0 | 1.0 | 1.0 | 0.9 | 1.0 | 3.8 | 0.9 | 1.0 |
| Adhesiveness (initial) | 0 | 0 | 0 | 0 | 4 | 3 | 0 | 3 | 0 |
| Adhesiveness (over time) | 0 | 0 | 0 | 0 | 4 | 3 | 3 | 3 | 0 |
| Storage stability (%) | 8 | 8 | 8 | 8 | 7 | 8 | 27 | 7 | 8 |

[Table 7]

| (unit: parts by mass) | Example | | | | | | | | |
|---|---|---|---|---|---|---|---|---|---|
| | 30 | 31 | 32 | 33 | 34 | 35 | 36 | 37 | 38 |
| Cyan ink | C29 | C30 | C31 | C32 | C33 | C34 | C35 | C36 | C37 |
| Cyan mill base 1 | 25.0 | 25.0 | 25.0 | 25.0 | 25.0 | 25.0 | 25.0 | 25.0 | 25.0 |
| SR339A | 8.0 | 8.0 | 8.0 | 8.0 | 8.0 | 8.0 | 8.0 | 8.0 | 8.0 |
| NVC | - | - | - | - | - | - | 13.0 | 18.0 | 23.0 |
| SR285 | - | - | - | - | - | - | 23.0 | 18.0 | 13.0 |
| SR531 | 12.0 | 17.0 | 22.0 | 37.0 | 42.0 | 47.0 | - | - | - |
| SR506D | 40.0 | 35.0 | 30.0 | 15.0 | 10.0 | 5.0 | 16.0 | 16.0 | 16.0 |
| SR368 | 6.0 | 6.0 | 6.0 | 6.0 | 6.0 | 6.0 | 6.0 | 6.0 | 6.0 |
| LUCIRIN TPO | 4.0 | 4.0 | 4.0 | 4.0 | 4.0 | 4.0 | 4.0 | 4.0 | 4.0 |
| IRGACURE 819 | 1.2 | 1.2 | 1.2 | 1.2 | 1.2 | 1.2 | 1.2 | 1.2 | 1.2 |
| SPEEDCURE DETX | 1.6 | 1.6 | 1.6 | 1.6 | 1.6 | 1.6 | 1.6 | 1.6 | 1.6 |
| SPEEDCURE EDB | 1.2 | 1.2 | 1.2 | 1.2 | 1.2 | 1.2 | 1.2 | 1.2 | 1.2 |
| FLORSTAB UV12 | 0.1 | 0.1 | 0.1 | 0.1 | 0.1 | 0.1 | 0.1 | 0.1 | 0.1 |

(continued)

| (unit: parts by mass) | Example | | | | | | | | |
|---|---|---|---|---|---|---|---|---|---|
| | 30 | 31 | 32 | 33 | 34 | 35 | 36 | 37 | 38 |
| DIANALBR113 | 0.9 | 0.9 | 0.9 | 0.9 | 0.9 | 0.9 | 0.9 | 0.9 | 0.9 |
| Curability | 3 | 4 | 5 | 5 | 5 | 5 | 4 | 5 | 5 |
| Ejectability (number) | 2 | 1 | 0 | 0 | 0 | 1 | 2 | 1 | 1 |
| Weather resistance (ΔE) | 0.9 | 0.9 | 1.0 | 1.0 | 1.1 | 1.1 | 1.2 | 1.3 | 1.5 |
| Adhesiveness (initial) | 2 | 1 | 1 | 1 | 1 | 2 | 0 | 0 | 0 |
| Adhesiveness (over time) | 2 | 1 | 1 | 1 | 2 | 2 | 0 | 1 | 1 |
| Storage stability (%) | 9 | 10 | 12 | 13 | 16 | 18 | 10 | 11 | 12 |

[Table 8]

| (unit: parts by mass) | Example | | | | | | | Comparative Example | | |
|---|---|---|---|---|---|---|---|---|---|---|
| | 39 | 40 | 41 | 42 | 43 | 44 | 45 | 12 | 13 | 14 |
| Cyan ink | C38 | C39 | C40 | C41 | C42 | C43 | C44 | CC10 | CC11 | CC12 |
| Cyan mill base 1 | 25.0 | 25.0 | 25.0 | 25.0 | 25.0 | 25.0 | 25.0 | 25.0 | 25.0 | 25.0 |
| SR339A | 8.0 | 8.0 | 8.0 | 8.0 | 8.0 | 8.0 | 8.0 | 8.0 | 8.0 | 8.0 |
| NVC | 13.0 | 18.0 | 23.0 | - | - | - | 12.0 | - | - | 17.0 |
| SR285 | - | - | - | 13.0 | 18.0 | 23.0 | 12.0 | - | | 17.0 |
| SR531 | 23.0 | 18.0 | 13.0 | 23.0 | 18.0 | 13.0 | 12.0 | 7.0 | 52.0 | 17.0 |
| SR506D | 16.0 | 16.0 | 16.0 | 16.0 | 16.0 | 16.0 | 16.0 | 45.0 | - | 1.0 |
| SR368 | 6.0 | 6.0 | 6.0 | 6.0 | 6.0 | 6.0 | 6.0 | 6.0 | 6.0 | 6.0 |
| LUCIRIN TPO | 4.0 | 4.0 | 4.0 | 4.0 | 4.0 | 4.0 | 4.0 | 4.0 | 4.0 | 4.0 |
| IRGACURE 819 | 1.2 | 1.2 | 1.2 | 1.2 | 1.2 | 1.2 | 1.2 | 1.2 | 1.2 | 1.2 |
| SPEEDCURE DETX | 1.6 | 1.6 | 1.6 | 1.6 | 1.6 | 1.6 | 1.6 | 1.6 | 1.6 | 1.6 |
| SPEEDCURE EDB | 1.2 | 1.2 | 1.2 | 1.2 | 1.2 | 1.2 | 1.2 | 1.2 | 1.2 | 1.2 |
| FLORSTAB UV12 | 0.1 | 0.1 | 0.1 | 0.1 | 0.1 | 0.1 | 0.1 | 0.1 | 0.1 | 0.1 |
| DIANAL BR113 | 0.9 | 0.9 | 0.9 | 0.9 | 0.9 | 0.9 | 0.9 | 0.9 | 0.9 | 0.9 |
| Curability | 5 | 5 | 5 | 4 | 4 | 3 | 5 | 3 | 5 | 5 |
| Ejectability (number) | 1 | 1 | 0 | 1 | 1 | 1 | 2 | 3 | 3 | 3 |
| Weather resistance (ΔE) | 1.2 | 1.3 | 1.6 | 1.1 | 1.0 | 1.0 | 1.2 | 0.9 | 1.2 | 1.5 |
| Adhesiveness (initial) | 1 | 0 | 0 | 1 | 0 | 0 | 0 | 4 | 3 | 0 |
| Adhesiveness (over time) | 2 | 1 | 2 | 1 | 0 | 0 | 2 | 4 | 4 | 3 |
| Storage stability (%) | 16 | 18 | 19 | 9 | 10 | 10 | 12 | 8 | 21 | 20 |

[Table 9]

| (unit: parts by mass) | Example | | | | |
|---|---|---|---|---|---|
| | 46 | 47 | 48 | 49 | 50 |
| Cyan ink | C45 | C46 | C47 | C48 | C49 |

(continued)

| (unit: parts by mass) | Example | | | | |
|---|---|---|---|---|---|
| | 46 | 47 | 48 | 49 | 50 |
| Cyan mill base 1 | 25.0 | 25.0 | 25.0 | 25.0 | 25.0 |
| SR339A | 3.0 | 7.0 | 11.0 | 33.0 | 37.0 |
| NVC | 9.0 | 9.0 | 9.0 | 9.0 | 9.0 |
| SR285 | 5.0 | 5.0 | 5.0 | 5.0 | 5.0 |
| FA-513AS | 9.0 | 9.0 | 9.0 | 9.0 | 9.0 |
| SR238 | 38.0 | 34.0 | 30.0 | 8.0 | 4.0 |
| SR508 | - | - | - | - | - |
| IRGACURE 184 | 4.3 | 4.3 | 4.3 | 4.3 | 4.3 |
| IRGACURE 819 | 4.5 | 4.5 | 4.5 | 4.5 | 4.5 |
| SPEEDCURE ITX | 2.0 | 2.0 | 2.0 | 2.0 | 2.0 |
| FLORSTAB UV12 | 0.1 | 0.1 | 0.1 | 0.1 | 0.1 |
| BYK-307 | 0.1 | 0.1 | 0.1 | 0.1 | 0.1 |
| Monofunctional monomer ratio (%) | 50.2 | 55.4 | 60.7 | 89.5 | 94.8 |
| Curability | 5 | 5 | 5 | 5 | 4 |
| Ejectability (number) | 0 | 0 | 0 | 0 | 0 |
| Weather resistance (AE) | 1.1 | 1.1 | 1.2 | 1.5 | 1.6 |
| Adhesiveness (initial) | 0 | 0 | 0 | 0 | 0 |
| Adhesiveness (over time) | 2 | 1 | 0 | 0 | 0 |
| Storage stability (%) | 12 | 11 | 11 | 11 | 11 |

[Table 10]

| (unit: parts by mass) | Example | | | | | Comparative Example |
|---|---|---|---|---|---|---|
| | 51 | 52 | 53 | 54 | 55 | 15 |
| Cyan ink | C51 | C52 | C53 | C54 | C55 | CC13 |
| Cyan mill base 1 | 25.0 | 25.0 | 25.0 | 25.0 | 25.0 | 25.0 |
| SR339A | 3.0 | 7.0 | 11.0 | 33.0 | 37.0 | - |
| NVC | 9.0 | 9.0 | 9.0 | 9.0 | 9.0 | 9.0 |
| SR285 | 5.0 | 5.0 | 5.0 | 5.0 | 5.0 | 5.0 |
| FA-513AS | 9.0 | 9.0 | 9.0 | 9.0 | 9.0 | 9.0 |
| SR238 | - | - | - | - | - | 41.0 |
| SR508 | 38.0 | 34.0 | 30.0 | 8.0 | 4.0 | - |
| IRGACURE 184 | 4.3 | 4.3 | 4.3 | 4.3 | 4.3 | 4.3 |
| IRGACURE 819 | 4.5 | 4.5 | 4.5 | 4.5 | 4.5 | 4.5 |
| SPEEDCURE ITX | 2.0 | 2.0 | 2.0 | 2.0 | 2.0 | 2.0 |
| FLORSTAB UV12 | 0.1 | 0.1 | 0.1 | 0.1 | 0.1 | 0.1 |
| BYK-307 | 0.1 | 0.1 | 0.1 | 0.1 | 0.1 | 0.1 |

(continued)

| (unit: parts by mass) | Example | | | | | Comparative Example |
|---|---|---|---|---|---|---|
| | 51 | 52 | 53 | 54 | 55 | 15 |
| Monofunctional monomer ratio (%) | 50.2 | 55.4 | 60.7 | 89.5 | 94.8 | 46.2 |
| Curability | 5 | 5 | 5 | 5 | 4 | 5 |
| Ejectability (number) | 0 | 0 | 0 | 0 | 0 | 0 |
| Weather resistance (ΔE) | 1.1 | 1.1 | 1.2 | 1.5 | 1.6 | 1.1 |
| Adhesiveness (initial) | 0 | 0 | 0 | 0 | 0 | 0 |
| Adhesiveness (over time) | 2 | 1 | 0 | 0 | 0 | 3 |
| Storage stability (%) | 19 | 16 | 14 | 12 | 11 | 12 |

[Table 11]

| (unit: parts by mass) | Example | | | | | |
|---|---|---|---|---|---|---|
| | 56 | 57 | 58 | 59 | 60 | 61 |
| Cyan ink | C57 | C58 | C59 | C60 | C61 | C63 |
| Cyan mill base 1 | 25.0 | 25.0 | 25.0 | 25.0 | 25.0 | 25.0 |
| FA-BZA | 8.0 | 8.0 | 8.0 | 8.0 | 8.0 | 8.0 |
| SR285 | 9.0 | 9.0 | 9.0 | 9.0 | 9.0 | 9.0 |
| SR531 | 39.0 | 34.0 | 24.0 | 19.0 | 14.0 | 39.0 |
| SR217 | 12.0 | 17.0 | 27.0 | 32.0 | 37.0 | - |
| SR341 | - | - | - | - | - | 12.0 |
| SPEEDCURE PBZ | 1.5 | 1.5 | 1.5 | 1.5 | 1.5 | 1.5 |
| LUCIRIN TPO | 3.8 | 3.8 | 3.8 | 3.8 | 3.8 | 3.8 |
| IRGACURE 369 | 1.2 | 1.2 | 1.2 | 1.2 | 1.2 | 1.2 |
| SPEEDCURE EDB | 0.3 | 0.3 | 0.3 | 0.3 | 0.3 | 0.3 |
| FLORSTAB UV12 | 0.1 | 0.1 | 0.1 | 0.1 | 0.1 | 0.1 |
| BYK-307 | 0.1 | 0.1 | 0.1 | 0.1 | 0.1 | 0.1 |
| Curability | 4 | 4 | 4 | 4 | 3 | 5 |
| Ejectability (number) | 0 | 0 | 0 | 1 | 2 | 0 |
| Weather resistance (ΔE) | 1.6 | 1.5 | 1.6 | 1.5 | 1.5 | 1.6 |
| Adhesiveness (initial) | 0 | 0 | 0 | 0 | 0 | 0 |
| Adhesiveness (over time) | 0 | 0 | 0 | 0 | 0 | 0 |
| Storage stability (%) | 13 | 12 | 12 | 11 | 10 | 17 |

[Table 12]

| (unit: parts by mass) | Example | | | | Comparative Example | | | |
|---|---|---|---|---|---|---|---|---|
| | 62 | 63 | 64 | 65 | 16 | 17 | 18 | 19 |
| Cyan ink | C64 | C65 | C66 | C67 | CC14 | CC15 | CC16 | CC17 |
| Cyan mill base 1 | 25.0 | 25.0 | 25.0 | 25.0 | 25.0 | 25.0 | 25.0 | 25.0 |

(continued)

| (unit: parts by mass) | Example | | | | Comparative Example | | | |
|---|---|---|---|---|---|---|---|---|
| | 62 | 63 | 64 | 65 | 16 | 17 | 18 | 19 |
| FA-BZA | 8.0 | 8.0 | 8.0 | 8.0 | 8.0 | 8.0 | 8.0 | 8.0 |
| SR285 | 9.0 | 9.0 | 9.0 | 9.0 | 9.0 | 9.0 | 9.0 | 9.0 |
| SR531 | 34.0 | 24.0 | 19.0 | 14.0 | 19.0 | 14.0 | 19.0 | 14.0 |
| SR217 | - | - | - | - | 2.0 | 42.0 | - | - |
| SR341 | 17.0 | 27.0 | 32.0 | 37.0 | - | - | 2.0 | 42.0 |
| SPEEDCURE PBZ | 1.5 | 1.5 | 1.5 | 1.5 | 1.5 | 1.5 | 1.5 | 1.5 |
| LUCIRIN TPO | 3.8 | 3.8 | 3.8 | 3.8 | 3.8 | 3.8 | 3.8 | 3.8 |
| IRGACURE 369 | 1.2 | 1.2 | 1.2 | 1.2 | 1.2 | 1.2 | 1.2 | 1.2 |
| SPEEDCURE EDB | 0.3 | 0.3 | 0.3 | 0.3 | 0.3 | 0.3 | 0.3 | 0.3 |
| FLORSTAB UV12 | 0.1 | 0.1 | 0.1 | 0.1 | 0.1 | 0.1 | 0.1 | 0.1 |
| BYK-307 | 0.1 | 0.1 | 0.1 | 0.1 | 0.1 | 0.1 | 0.1 | 0.1 |
| Curability | 5 | 5 | 5 | 5 | 4 | 2 | 4 | 5 |
| Ejectability (number) | 0 | 0 | 0 | 0 | 0 | 3 | 0 | 0 |
| Weather resistance (ΑE) | 1.5 | 1.5 | 1.5 | 1.5 | 1.6 | 1.5 | 1.5 | 1.5 |
| Adhesiveness (initial) | 0 | 0 | 0 | 0 | 0 | 0 | 0 | 0 |
| Adhesiveness (over time) | 0 | 0 | 1 | 2 | 0 | 0 | 0 | 3 |
| Storage stability (%) | 15 | 15 | 17 | 19 | 23 | 10 | 23 | 26 |

[Table 13]

| (unit: parts by mass) | Example | | | | | | | |
|---|---|---|---|---|---|---|---|---|
| | 66 | 67 | 68 | 69 | 70 | 71 | 72 | 73 |
| Cyan ink | C72 | C73 | C74 | C75 | C76 | C77 | C68 | C69 |
| Cyan mill base 1 | 25.0 | 25.0 | 25.0 | 25.0 | 25.0 | 25.0 | 25.0 | 25.0 |
| SR339A | 24.0 | 24.0 | 24.0 | 24.0 | 24.0 | 24.0 | 24.0 | 24.0 |
| SR285 | 18.0 | 18.0 | 18.0 | 18.0 | 18.0 | 18.0 | 18.0 | 18.0 |
| SR531 | 10.0 | 10.0 | 10.0 | 10.0 | 10.0 | 10.0 | 10.0 | 10.0 |
| SR440 | 16.0 | - | - | - | - | - | - | - |
| SR395 | - | 16.0 | - | - | - | - | - | - |
| SR335 | - | - | 16.0 | - | - | - | - | - |
| SR489 | - | - | - | 16.0 | - | - | - | - |
| CD585 | - | - | - | - | 16.0 | - | - | - |
| CD587 | - | - | - | - | - | 16.0 | - | - |
| VISCOAT #155 | - | - | - | - | - | - | 16.0 | - |
| CD420 | - | - | - | - | - | - | - | 16.0 |
| SR506D | - | - | - | - | - | - | - | - |
| SR217 | - | - | - | - | - | - | - | - |

(continued)

| (unit: parts by mass) | Example | | | | | | | |
|---|---|---|---|---|---|---|---|---|
| | 66 | 67 | 68 | 69 | 70 | 71 | 72 | 73 |
| FA-513AS | - | - | - | - | - | - | - | - |
| FA-511AS | - | - | - | - | - | - | - | - |
| SR341 | - | - | - | - | - | - | - | - |
| SR238 | - | - | - | - | - | - | - | - |
| FA-129AS | - | - | - | - | - | - | - | - |
| SR833 | - | - | - | - | - | - | - | - |
| IRGACURE 184 | 1.9 | 1.9 | 1.9 | 1.9 | 1.9 | 1.9 | 1.9 | 1.9 |
| IRGACURE 819 | 4.2 | 4.2 | 4.2 | 4.2 | 4.2 | 4.2 | 4.2 | 4.2 |
| SPEEDCURE ITX | 0.8 | 0.8 | 0.8 | 0.8 | 0.8 | 0.8 | 0.8 | 0.8 |
| FLORSTAB UV12 | 0.1 | 0.1 | 0.1 | 0.1 | 0.1 | 0.1 | 0.1 | 0.1 |
| Curability | 4 | 4 | 4 | 4 | 3 | 3 | 5 | 5 |
| Ejectability (number) | 1 | 0 | 0 | 0 | 0 | 0 | 2 | 0 |
| Weather resistance (ΔE) | 1.3 | 1.3 | 1.3 | 1.3 | 1.3 | 1.3 | 1.3 | 1.3 |
| Adhesiveness (initial) | 0 | 0 | 0 | 0 | 0 | 1 | 0 | 0 |
| Adhesiveness (over time) | 0 | 0 | 0 | 0 | 0 | 1 | 0 | 0 |
| Storage stability (%) | 11 | 11 | 11 | 11 | 11 | 11 | 11 | 11 |

[Table 14]

| (unit: parts by mass) | Example | | | | | | | | Comparative Example |
|---|---|---|---|---|---|---|---|---|---|
| | 74 | 75 | 76 | 77 | 78 | 79 | 80 | 81 | 20 |
| Cyan ink | C70 | C71 | C78 | C79 | C80 | C81 | C82 | C83 | CC18 |
| Cyan mill base 1 | 25.0 | 25.0 | 25.0 | 25.0 | 25.0 | 25.0 | 25.0 | 25.0 | 25.0 |
| SR339A | 24.0 | 24.0 | 24.0 | 24.0 | 24.0 | 24.0 | 24.0 | 24.0 | 40.0 |
| SR285 | 18.0 | 18.0 | 18.0 | 18.0 | 18.0 | 18.0 | 18.0 | 18.0 | 18.0 |
| SR531 | 10.0 | 10.0 | 10.0 | 10.0 | 10.0 | 10.0 | 10.0 | 10.0 | 10.0 |
| SR440 | - | - | - | - | - | - | - | - | - |
| SR395 | - | - | - | - | - | - | - | - | - |
| SR335 | - | - | - | - | - | - | - | - | - |
| SR489 | - | - | - | - | - | - | - | - | - |
| CD585 | - | - | - | - | - | - | - | - | - |
| CD587 | - | - | - | - | - | - | - | - | - |
| VISCOAT #155 | | | | | | | | | |
| CD420 | - | - | - | - | - | - | - | - | - |
| SR506D | 16.0 | - | - | - | - | - | - | - | - |
| SR217 | - | 16.0 | - | - | - | - | - | - | - |
| FA-513AS | - | - | 16.0 | - | - | - | - | - | - |

(continued)

| (unit: parts by mass) | Example | | | | | | | | Comparative Example |
|---|---|---|---|---|---|---|---|---|---|
| | 74 | 75 | 76 | 77 | 78 | 79 | 80 | 81 | 20 |
| FA-511AS | - | - | - | 16.0 | - | - | - | - | - |
| SR341 | - | - | - | - | 16.0 | - | - | - | - |
| SR238 | | | | | | 16.0 | | | |
| FA-129AS | - | - | - | - | - | - | 16.0 | - | - |
| SR833 | - | - | - | - | - | - | - | 16.0 | - |
| IRGACURE 184 | 1.9 | 1.9 | 1.9 | 1.9 | 1.9 | 1.9 | 1.9 | 1.9 | 1.9 |
| IRGACURE 819 | 4.2 | 4.2 | 4.2 | 4.2 | 4.2 | 4.2 | 4.2 | 4.2 | 4.2 |
| SPEEDCURE ITX | 0.8 | 0.8 | 0.8 | 0.8 | 0.8 | 0.8 | 0.8 | 0.8 | 0.8 |
| FLORSTAB UV12 | 0.1 | 0.1 | 0.1 | 0.1 | 0.1 | 0.1 | 0.1 | 0.1 | 0.1 |
| Curability | 5 | 5 | 5 | 5 | 5 | 5 | 5 | 5 | 2 |
| Ejectability (number) | 0 | 0 | 0 | 0 | 1 | 1 | 0 | 0 | 1 |
| Weather resistance (ΔE) | 1.3 | 1.3 | 1.3 | 1.3 | 1.3 | 1.3 | 1.3 | 1.3 | 1.3 |
| Adhesiveness (initial) | 0 | 0 | 0 | 0 | 0 | 0 | 0 | 0 | 0 |
| Adhesiveness (over time) | 0 | 0 | 0 | 0 | 1 | 1 | 0 | 0 | 1 |
| Storage stability (%) | 11 | 11 | 11 | 11 | 15 | 15 | 13 | 12 | 23 |

[Table 15]

| (unit: parts by mass) | Example | | | | | | | |
|---|---|---|---|---|---|---|---|---|
| | 82 | 83 | 84 | 85 | 86 | 87 | 88 | 89 |
| Cyan ink | C84 | C85 | C86 | C87 | C88 | C89 | C90 | C91 |
| Cyan mill base 1 | 25.0 | 25.0 | 25.0 | 25.0 | 25.0 | 25.0 | 25.0 | 25.0 |
| NVC | 16.0 | 16.0 | 16.0 | 16.0 | 16.0 | 16.0 | 16.0 | 16.0 |
| SR531 | 23.8 | 23.8 | 23.8 | 23.8 | 23.8 | 23.8 | 23.8 | 23.8 |
| SR506D | 15.0 | 15.0 | 15.0 | 15.0 | 15.0 | 15.0 | 15.0 | 15.0 |
| SR341 | 9.0 | 9.0 | 9.0 | 9.0 | 9.0 | 9.0 | 9.0 | 9.0 |
| DIANALMB-2588 | 2.7 | - | - | - | - | - | - | - |
| DIANALBR-101 | - | 2.7 | - | - | - | - | - | - |
| DIANALBR-113 | - | - | 2.7 | - | - | - | - | - |
| CN964 | - | - | - | 2.7 | - | - | - | - |
| CN996 | - | - | - | - | 2.7 | - | - | - |
| CN984 | - | - | - | - | - | 2.7 | - | - |
| CN969 | - | - | - | - | - | - | 2.7 | - |
| CN9001 | - | - | - | - | - | - | - | 2.7 |
| CN2256 | | | | | | | | |
| CN292 | - | - | - | - | - | - | - | - |
| CN293 | - | - | - | - | - | - | - | - |

(continued)

| (unit: parts by mass) | Example | | | | | | | |
|---|---|---|---|---|---|---|---|---|
| | 82 | 83 | 84 | 85 | 86 | 87 | 88 | 89 |
| CN2259 | - | - | - | - | - | - | - | - |
| CN2257 | - | - | - | - | - | - | - | - |
| CN111 | - | - | - | - | - | - | - | - |
| CN118 | - | - | - | - | - | - | - | - |
| IRGACURE 184 | 1.0 | 1.0 | 1.0 | 1.0 | 1.0 | 1.0 | 1.0 | 1.0 |
| LUCIRIN TPO | 3.8 | 3.8 | 3.8 | 3.8 | 3.8 | 3.8 | 3.8 | 3.8 |
| IRGACURE 819 | 1.6 | 1.6 | 1.6 | 1.6 | 1.6 | 1.6 | 1.6 | 1.6 |
| SPEEDCURE ITX | 1.0 | 1.0 | 1.0 | 1.0 | 1.0 | 1.0 | 1.0 | 1.0 |
| TEGORAD2100 | 1.1 | 1.1 | 1.1 | 1.1 | 1.1 | 1.1 | 1.1 | 1.1 |
| Curability | 5 | 5 | 5 | 4 | 4 | 4 | 5 | 5 |
| Ejectability (number) | 0 | 0 | 0 | 1 | 1 | 1 | 1 | 1 |
| Weather resistance (ΔE) | 1.5 | 1.5 | 1.5 | 2.4 | 2.5 | 2.4 | 2.4 | 2.5 |
| Adhesiveness (initial) | 0 | 0 | 0 | 2 | 1 | 1 | 0 | 0 |
| Adhesiveness (over time) | 1 | 0 | 0 | 2 | 2 | 1 | 1 | 0 |
| Storage stability (%) | 11 | 11 | 11 | 16 | 15 | 15 | 16 | 15 |

[Table 16]

| (unit: parts by mass) | Example | | | | | | | |
|---|---|---|---|---|---|---|---|---|
| | 90 | 91 | 92 | 93 | 94 | 95 | 96 | 97 |
| Cyan ink | C92 | C93 | C94 | C95 | C96 | C97 | C98 | C99 |
| Cyan mill base 1 | 25.0 | 25.0 | 25.0 | 25.0 | 25.0 | 25 0 | 25.0 | 25.0 |
| NVC | 16.0 | 16.0 | 16.0 | 16.0 | 16.0 | 16.0 | 16.0 | 16.0 |
| SR531 | 23.8 | 23.8 | 23.8 | 23.8 | 23.8 | 23.8 | 23.8 | 23.8 |
| SR506D | 15.0 | 15.0 | 15.0 | 15.0 | 15.0 | 15.0 | 15.0 | 15.0 |
| SR341 | 9.0 | 9.0 | 9.0 | 9.0 | 9.0 | 9.0 | 9.0 | 9.0 |
| DIANALMB-2588 | - | - | - | - | - | - | - | - |
| DIANALBR-101 | - | - | - | - | - | - | - | - |
| DIANALBR-113 | - | - | - | - | - | - | - | - |
| CN964 | - | - | - | - | - | - | - | - |
| CN996 | - | - | - | - | - | - | - | - |
| CN984 | - | - | - | - | - | - | - | - |
| CN969 | - | - | - | - | - | - | - | - |
| CN9001 | - | - | - | - | - | - | - | - |
| CN2256 | 2.7 | - | - | - | - | - | - | - |
| CN292 | - | 2.7 | - | - | - | - | - | - |
| CN293 | - | - | 2.7 | - | - | - | - | - |

(continued)

| (unit: parts by mass) | Example | | | | | | | |
|---|---|---|---|---|---|---|---|---|
| | 90 | 91 | 92 | 93 | 94 | 95 | 96 | 97 |
| CN2259 | | | | 2.7 | | | | |
| CN2257 | - | - | - | - | 2.7 | - | - | - |
| CN111 | - | - | - | - | - | 2.7 | - | - |
| CN118 | - | - | - | - | - | - | 2.7 | - |
| IRGACURE 184 | 1.0 | 1.0 | 1.0 | 1.0 | 1.0 | 1.0 | 1.0 | 1.0 |
| LUCIRIN TPO | 3.8 | 3.8 | 3.8 | 3.8 | 3.8 | 3.8 | 3.8 | 3.8 |
| IRGACURE 819 | 1.6 | 1.6 | 1.6 | 1.6 | 1.6 | 1.6 | 1.6 | 1.6 |
| SPEEDCURE ITX | 1.0 | 1.0 | 1.0 | 1.0 | 1.0 | 1.0 | 1.0 | 1.0 |
| TEGORAD2100 | 1.1 | 1.1 | 1.1 | 1.1 | 1.1 | 1.1 | 1.1 | 1.1 |
| Curability | 4 | 4 | 5 | 5 | 5 | 5 | 5 | 3 |
| Ejectability (number) | 0 | 0 | 0 | 0 | 0 | 2 | 2 | 1 |
| Weather resistance ($\Delta E$) | 1.8 | 1.8 | 1.8 | 1.8 | 1.8 | 2.1 | 2.1 | 1.5 |
| Adhesiveness (initial) | 1 | 1 | 1 | 0 | 0 | 1 | 0 | 2 |
| Adhesiveness (over time) | 2 | 1 | 1 | 1 | 0 | 1 | 1 | 2 |
| Storage stability (%) | 14 | 14 | 13 | 13 | 13 | 15 | 15 | 11 |

[Table 17]

| (unit: parts by mass) | Example | | | | | | |
|---|---|---|---|---|---|---|---|
| | 98 | 99 | 100 | 101 | 102 | 103 | 104 |
| | M3 | M4 | M5 | M6 | M7 | Y5 | Y6 |
| Magenta mill base 1 | 15.0 | 15.0 | 15.0 | 15.0 | 15.0 | | |
| Yellow mill base 1 | - | - | - | - | - | 15.0 | 15.0 |
| Yellow mill base 2 | - | - | - | - | - | - | - |
| NVC | 19.0 | 14.0 | 9.0 | 4.0 | 0 | 14.0 | 9.0 |
| SR531 | 2.9 | 7.9 | 12.9 | 17.9 | 21.9 | 7.9 | 12.9 |
| SR285 | 12.5 | 12.5 | 12.5 | 12.5 | 12.5 | 12.5 | 12.5 |
| SR339A | 7.0 | 7.0 | 7.0 | 7.0 | 7.0 | 7.0 | 7.0 |
| SR395 | 6.0 | 6.0 | 6.0 | 6.0 | 6.0 | 6.0 | 6.0 |
| SR217 | 15.0 | 15.0 | 15.0 | 15.0 | 15.0 | 15.0 | 15.0 |
| SR341 | 12.0 | 12.0 | 12.0 | 12.0 | 12.0 | 12.0 | 12.0 |
| IRGACURE 184 | 1.8 | 1.8 | 1.8 | 1.8 | 1.8 | 1.8 | 1.8 |
| LUCIRIN TPO | 3.8 | 3.8 | 3.8 | 3.8 | 3.8 | 3.8 | 3.8 |
| IRGACURE 369 | 1.5 | 1.5 | 1.5 | 1.5 | 1.5 | 1.5 | 1.5 |
| SPEEDCURE ITX | 0.5 | 0.5 | 0.5 | 0.5 | 0.5 | 0.5 | 0.5 |
| FLORSTAB UV12 | 0.3 | 0.3 | 0.3 | 0.3 | 0.3 | 0.3 | 0.3 |
| DIANAL BR113 | 2.7 | 2.7 | 2.7 | 2.7 | 2.7 | 2.7 | 2.7 |

(continued)

| (unit: parts by mass) | Example | | | | | | |
|---|---|---|---|---|---|---|---|
| | 98 | 99 | 100 | 101 | 102 | 103 | 104 |
| | M3 | M4 | M5 | M6 | M7 | Y5 | Y6 |
| Curability | 5 | 5 | 5 | 5 | 5 | 5 | 5 |
| Ejectability (number) | 1 | 1 | 0 | 0 | 0 | 0 | 0 |
| Weather resistance (ΔE) | 1.7 | 1.5 | 1.3 | 1.2 | 1.2 | 1.8 | 1.6 |
| Adhesiveness (initial) | 0 | 0 | 0 | 0 | 0 | 0 | 0 |
| Adhesiveness (over time) | 0 | 0 | 0 | 0 | 0 | 0 | 1 |
| Storage stability (%) | 16 | 13 | 11 | 8 | 7 | 15 | 13 |

In Table 17, Examples 98 to 102 are a Reference Examples.

[Table 18]

| (unit: parts by mass) | Example | | | | | |
|---|---|---|---|---|---|---|
| | 105 | 106 | 107 | 108 | 109 | 110 |
| | Y7 | Y8 | Y9 | Y10 | Y11 | Y12 |
| Magenta mill base 1 | - | - | - | - | - | - |
| Yellow mill base 1 | 15.0 | 15.0 | - | - | - | - |
| Yellow mill base 2 | - | - | 15.0 | 15.0 | 15.0 | 15.0 |
| NVC | 4.0 | 0 | 14.0 | 9.0 | 4.0 | 0 |
| SR531 | 17.9 | 21.9 | 7.9 | 12.9 | 17.9 | 21.9 |
| SR285 | 12.5 | 12.5 | 12.5 | 12.5 | 12.5 | 12.5 |
| SR339A | 7.0 | 7.0 | 7.0 | 7.0 | 7.0 | 7.0 |
| SR395 | 6.0 | 6.0 | 6.0 | 6.0 | 6.0 | 6.0 |
| SR217 | 15.0 | 15.0 | 15.0 | 15.0 | 15.0 | 15.0 |
| SR341 | 12.0 | 12.0 | 12.0 | 12.0 | 12.0 | 12.0 |
| IRGACURE 184 | 1.8 | 1.8 | 1.8 | 1.8 | 1.8 | 1.8 |
| LUCIRIN TPO | 3.8 | 3.8 | 3.8 | 3.8 | 3.8 | 3.8 |
| IRGACURE 369 | 1.5 | 1.5 | 1.5 | 1.5 | 1.5 | 1.5 |
| SPEEDCURE ITX | 0.5 | 0.5 | 0.5 | 0.5 | 0.5 | 0.5 |
| FLORSTAB UV12 | 0.3 | 0.3 | 0.3 | 0.3 | 0.3 | 0.3 |
| DIANALBR113 | 2.7 | 2.7 | 2.7 | 2.7 | 2.7 | 2.7 |
| Curability | 5 | 5 | 4 | 4 | 4 | 4 |
| Ejectability (number) | 0 | 0 | 1 | 1 | 1 | 1 |
| Weather resistance (ΔE) | 1.2 | 1.1 | 1.4 | 1.2 | 1.0 | 0.7 |
| Adhesiveness (initial) | 0 | 0 | 0 | 0 | 0 | 0 |
| Adhesiveness (over time) | 1 | 0 | 0 | 0 | 0 | 0 |
| Storage stability (%) | 12 | 9 | 19 | 18 | 16 | 13 |

(Example 111)

<Production of black ink>

A black ink K1 having the composition described below was produced in the same manner as in Example 1.

- Black mill base 1: 6.5 parts by mass
- NVC: 15.0 parts by mass
- SR339A: 10.6 parts by mass
- SR335: 6.0 parts by mass
- SR489: 9.0 parts by mass
- SR531: 25.7 parts by mass
- SR238: 16.0 parts by mass
- SPEEDCURE BP: 1.2 parts by mass
- LUCIRIN TPO: 5.2 parts by mass
- SPEEDCURE ITX: 1.4 parts by mass
- SPEEDCURE EDB: 1.7 parts by mass
- FLORSTAB UV12: 0.1 parts by mass
- DIANAL BR113: 1.5 parts by mass
- BYK-307: 0.1 parts by mass

<Printing>

A UV inkjet printer, LUXELJET UV550GTW manufactured by Fujifilm Corporation was charged with the cyan ink C1, magenta ink M1, yellow ink Y1, and black ink K1 thus produced, and A2-sized multicolor test images composed of 30% of cyan, 30% of magenta, 30% of yellow, and 10% of black were printed using a substrate according to the "Aluminum alloy foam sidings" described in JIS A 6711 "Composite metal sidings" "4. Type", under the conditions of production mode and lamp 7. The printed images were spray coated with an aqueous acrylic silicon resin coating material (product name: "VIEW TOP SILICON CLEAR", manufactured by Kikusui Chemical Industries Co., Ltd.) thereon in a wet coating amount of 250 $g/m^2$, and the coating material was dried.

<Evaluation>

Using these test images, an accelerated weather resistance test was carried out according to ISO 4892-2 using a Weather-Ometer, Ci4000, manufactured by Atlas Material Testing Technology. The CIELAB values (L*, a*, and b*) of a sample at the beginning and the sample after the passage of 4,000 hours were measured under the conditions of light source: D65, viewing angle: 2°, and SCE (elimination of regular reflection light), using a spectrophotometer, CM-2600d, manufactured by Konica Minolta Optics, Inc., and the color difference $\Delta E$ was determined.

(Examples 112 to 120 and Comparative Example 21)

Combinations of inks as described in Table 2 were respectively evaluated in the same manner as in Example 110. The results are presented in Table 19.

[Table 19]

| | Example | | | | | | | | | | Comparative Example |
|---|---|---|---|---|---|---|---|---|---|---|---|
| | 111 | 112 | 113 | 114 | 115 | 116 | 117 | 118 | 119 | 120 | 21 |
| Cyan ink | C1 | C2 | C3 | C1 | C1 | C1 | C1 | C3 | C3 | C3 | C3 |
| Magenta ink | M1 | M1 | M1 | M2 | M1 | M1 | M2 | M1 | M2 | M2 | M2 |
| Yellow ink | Y1 | Y1 | Y1 | Y1 | Y2 | Y3 | Y3 | Y3 | Y1 | Y2 | Y3 |
| Black ink | K1 | K1 | K1 | K1 | K1 | K1 | K1 | K1 | K1 | K1 | K1 |
| Weather resistance (ΔE) | 1.1 | 1.3 | 1.7 | 2.2 | 1.3 | 2.9 | 5.6 | 4.7 | 4.2 | 3.9 | 12.3 |

## Claims

1. An inkjet ink composition for printing on building materials, comprising:

   a radical polymerizable compound as Component A;
   a radical polymerization initiator as Component B;
   a colored pigment as Component C; and
   a dispersing agent as Component D,
   wherein Component A includes benzyl (meth)acrylate and/or 2-phenoxyethyl (meth)acrylate as Component A-1; a monofunctional or bifunctional (meth)acrylate compound having an aliphatic hydrocarbon group having 6 or more carbon atoms as Component A-2; and at least one selected from the group consisting of compounds each represented by any one of the following Formulae I, II, and III as Component A-3,
   the total content of Component A-1 is 10% by mass to 50% by mass relative to the total mass of the ink composition,
   the total content of Component A-2 is 5% by mass to 40% by mass relative to the total mass of the ink composition,
   the total content of Component A-3 is 10% by mass to 50% by mass relative to the total mass of the ink composition,
   the inkjet ink composition comprises at least one inorganic pigment selected from the group consisting of Pigment Blue 28, Pigment Yellow 42, and Pigment Yellow 184 as Component C, and

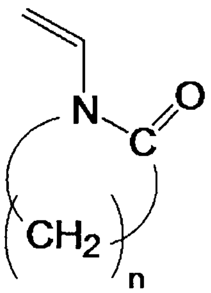

(I)

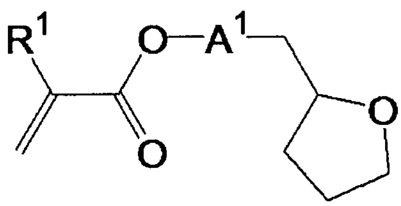

(II)

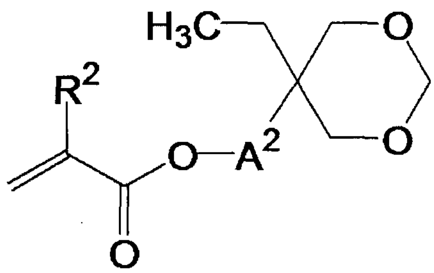

(III)

   in Formulae I to III, n represents an integer from 2 to 6; $R^1$ and $R^2$ each independently represent a hydrogen atom or a methyl group; and $A^1$ and $A^2$ each independently represent a single bond or a divalent linking group.

2. The inkjet ink composition for printing on building materials according to claim 1, wherein the aliphatic hydrocarbon group for Component A-2 is an aliphatic hydrocarbon group having 9 to 16 carbon atoms.

3. The inkjet ink composition for printing on building materials according to claim 1 or 2, wherein the aliphatic hydrocarbon group for Component A-2 has an alicyclic structure.

4. The inkjet ink composition for printing on building materials according to any one of claims 1 to 3, wherein the total

content of the monofunctional (meth)acrylate compounds is 80% by mass to 100% by mass relative to the total mass of Component A.

**5.** The inkjet ink composition for printing on building materials according to any one of claims 1 to 4, further comprising at least one polymer or oligomer selected from the group consisting of an acrylic resin, a polyester resin, an epoxy resin, and a polyurethane resin as Component E which is different from Component D.

**6.** The inkjet ink composition for printing on building materials according to claim 5, wherein the glass transition temperature Tg of Component E, measured using a differential scanning calorimeter EXSTAR6220 manufactured by Seiko Instruments Inc., under conventional conditions for measurement or calculated by the following calculation formula T:

$$1/Tg=\Sigma(Xi/Tgi) \qquad (T)$$

wherein Xi represents the weight fraction of the i-th monomer with $\sum Xi = 1$, and Tgi represents the glass transition temperature of a homopolymer of the i-th monomer, is 0°C or higher.

**7.** The inkjet ink composition for printing on building materials according to claim 5 or 6, comprising at least one polymer or oligomer selected from the group consisting of an acrylic resin and a polyester resin as Component E.

**8.** The inkjet ink composition for printing on building materials according to any one of claims 1 to 7, wherein the inkjet ink composition is intended for printing on composite metal sidings or ceramic sidings.

**9.** An inkjet ink set for printing on building materials, comprising three color ink compositions of a cyan ink, a magenta ink, and a yellow ink,
wherein the inkjet ink set satisfies at least two among the following requirements i, ii, or iii:

i: the cyan ink is the inkjet ink composition for printing on building materials according to any one of claims 1 to 8, which includes Pigment Blue 28 as Component C;
ii: the magenta ink which is an inkjet ink composition for printing on building materials, comprising:

a radical polymerizable compound as Component A;
a radical polymerization initiator as Component B;
a colored pigment as Component C; and
a dispersing agent as Component D,
wherein Component A includes benzyl (meth)acrylate and/or 2-phenoxyethyl (meth)acrylate as Component A-1; a monofunctional or bifunctional (meth)acrylate compound having an aliphatic hydrocarbon group having 6 or more carbon atoms as Component A-2; and at least one selected from the group consisting of compounds each represented by any one of the following Formulae I, II, and III as Component A-3,
the total content of Component A-1 is 10% by mass to 50% by mass relative to the total mass of the ink composition,
the total content of Component A-2 is 5% by mass to 40% by mass relative to the total mass of the ink composition,
the total content of Component A-3 is 10% by mass to 50% by mass relative to the total mass of the ink composition,
the inkjet ink composition comprises Pigment Red 101 as Component C, and

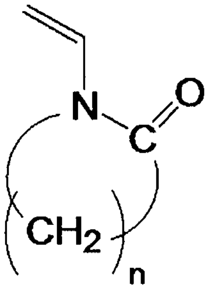

(I)

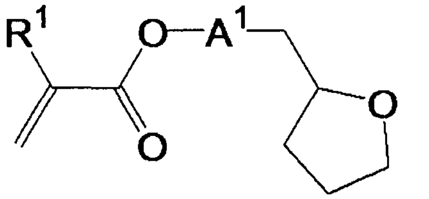

(II)

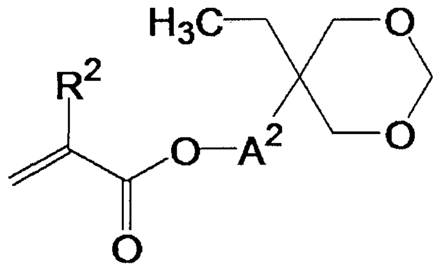

(III)

in Formulae I to III, n represents an integer from 2 to 6; $R^1$ and $R^2$ each independently represent a hydrogen atom or a methyl group; and $A^1$ and $A^2$ each independently represent a single bond or a divalent linking group; and

iii: the yellow ink is the inkjet ink composition for printing on building materials according to any one of claims 1 to 8, which includes Pigment Yellow 42 and/or Pigment Yellow 184 as Component C.

**10.** The inkjet ink set for printing on building materials according to claim 9, wherein the inkjet ink set satisfies all of the requirements i, ii, and iii.

**11.** The inkjet ink set for printing on building materials according to claim 9 or 10, further comprising a black ink composition which includes a radical polymerizable compound as Component A, a radical polymerization initiator as Component B, a colored pigment as Component C, and a dispersing agent as Component D,

wherein Component A includes benzyl (meth)acrylate and/or 2-phenoxyethyl (meth)acrylate as A-1; a monofunctional or bifunctional (meth)acrylate compound having an aliphatic hydrocarbon group having 6 or more carbon atoms as A-2; and at least one compound represented by any one of Formulae I, II, and III as A-3,
the total content of Component A-1 is 10% by mass to 50% by mass relative to the total mass of the ink composition, the total content of Component A-2 is 5% by mass to 40% by mass relative to the total mass of the ink composition, the total content of Component A-3 is 10% by mass to 50% by mass relative to the total mass of the ink composition, the total content of the monofunctional radical polymerizable compounds is 80% by mass to 100% by mass relative to the total mass of Component A, and
the black ink composition includes Pigment Black 7 as Component C.

**12.** A decorative building material comprising, on a building material, a printed layer obtained by curing the inkjet ink composition for printing on building materials according to any one of claims 1 to 8, or the three color ink compositions included in the inkjet ink set for printing on building materials according to claim 9 or 10, or the four color ink compositions included in the inkjet ink set for printing on building materials according to claim 11.

**13.** An inkjet recording method, comprising:

as step a, an image forming step of ejecting the inkjet ink composition for printing on building materials according to any one of claims 1 to 7 by an inkjet system, and thereby forming an image on a building material; and
as step b, a curing step of irradiating the image thus obtained with active radiation, and thereby curing the ink composition; or
as step a', an image forming step of respectively ejecting the ink compositions included in the inkjet ink set for printing on building materials according to any one of claims 9 to 11 by an inkjet system, and thereby forming an image on a building material; and
as step b', a curing step of irradiating the image thus obtained with active radiation, and thereby curing the ink compositions.

**14.** The inkjet recording method according to claim 13, comprising, before the image forming step, a preliminary treatment step of forming a primer layer on the printed surface of the building material.

**15.** The inkjet recording method according to claim 13 or 14, comprising, after the curing step, a posttreatment step of

forming a topcoat layer on the cured ink composition.

**Patentansprüche**

1. Tintenstrahltintenzusammensetzung zum Drucken auf Baumaterialien, umfassend:

eine radikalische polymerisierbare Verbindung als Komponente A;
einen radikalischen Polymerisationsinitiator als Komponente B;
ein farbiges Pigment als Komponente C; und
ein Dispergiermittel als Komponente D,
wobei Komponente A Benzyl(meth)acrylat und/oder 2-Phenoxyethyl(meth)acrylat als Komponente A-1; eine monofunktionale oder bifunktionale (Meth)acrylatverbindung mit einer aliphatischen Kohlenwasserstoffgruppe mit 6 oder mehr Kohlenstoffatomen als Komponente A-2; und mindestens eine Verbindung enthält, ausgewählt aus der Gruppe an Verbindungen, die jeweils durch eine der folgenden Formeln I, II und III dargestellt ist, als Komponente A-3,
wobei der Gesamtgehalt an Komponente A-1 10 Masse% bis 50 Masse%, bezogen auf die Gesamtmasse der Tintenzusammensetzung beträgt,
wobei der Gesamtgehalt an Komponente A-2 5 Masse% bis 40 Masse%, bezogen auf die Gesamtmasse der Tintenzusammensetzung beträgt,
wobei der Gesamtgehalt an Komponente A-3 10 Masse% bis 50 Masse%, bezogen auf die Gesamtmasse der Tintenzusammensetzung beträgt,
wobei die Tintenstrahltintenzusammensetzung mindestens ein anorganisches Pigment, ausgewählt aus der Gruppe bestehend aus Pigment Blue 28, Pigment Yellow 42 und Pigment Yellow 184 als Komponente C umfasst, und

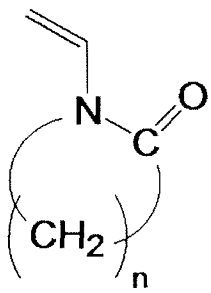
(I)

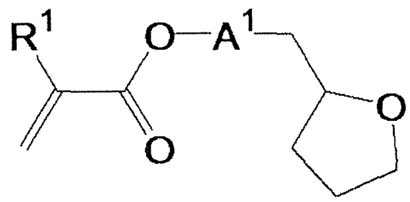
(II)

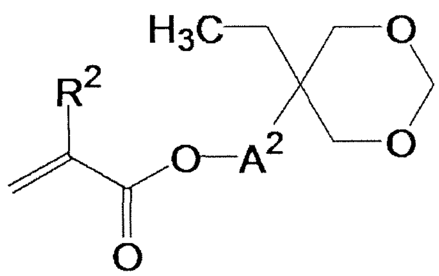
(III)

in Formeln I bis III, n eine ganze Zahl von 2 bis 6 darstellt; $R^1$ und $R^2$ jeweils unabhängig ein Wasserstoffatom oder eine Methylgruppe darstellen; und $A^1$ und $A^2$ jeweils unabhängig eine Einfachbindung oder eine divalente Verbindungsgruppe darstellen.

2. Tintenstrahltintenzusammensetzung zum Drucken auf Baumaterialien nach Anspruch 1, wobei die aliphatische Kohlenwasserstoffgruppe von Komponente A-2 eine aliphatische Kohlenwasserstoffgruppe mit 9 bis 16 Kohlenstoffatomen ist.

3. Tintenstrahltintenzusammensetzung zum Drucken auf Baumaterialien nach Anspruch 1 oder 2, wobei die aliphatische Kohlenwasserstoffgruppe von Komponente A-2 eine alicyclische Struktur aufweist.

4. Tintenstrahltintenzusammensetzung zum Drucken auf Baumaterialien nach einem der Ansprüche 1 bis 3, wobei der Gesamtgehalt der monofunktionalen (Meth)acrylatverbindungen 80 Masse% bis 100 Masse%, bezogen auf die Gesamtmasse an Komponente A beträgt.

5. Tintenstrahltintenzusammensetzung zum Drucken auf Baumaterialien Materialien nach einem der Ansprüche 1 bis 4, ferner umfassend mindestens ein Polymer oder Oligomer, ausgewählt aus der Gruppe bestehend aus einem Acrylharz, einem Polyesterharz, einem Epoxidharz und einem Polyurethanharz als Komponente E, die unterschiedlich zu Komponente D ist.

**6.** Tintenstrahltintenzusammensetzung zum Drucken auf Baumaterialien nach Anspruch 5, wobei die Glasübergangstemperatur Tg der Komponente E, gemessen unter Verwendung eines Differentialscanningkalorimeters EXSTAR6220, hergestellt durch Seiko Instruments Inc., unter herkömmlichen Bedingungen zum Messen oder Kalkulieren durch folgende Kalkulationsformel T:

$$1/Tg=\Sigma(Xi/Tgi) \qquad (T),$$

wobei Xi die Gewichtsfraktion des i-ten Monomers mit $\Sigma Xi = 1$, und Tgi die Glasübergangstemperatur eines Homopolymers des i-ten Monomers ist, 0°C oder mehr beträgt.

**7.** Tintenstrahltintenzusammensetzung zum Drucken auf Baumaterialien nach Anspruch 5 oder 6, umfassend mindestens ein Polymer oder Oligomer, ausgewählt aus der Gruppe bestehend aus einem Acrylharz und einem Polyesterharz als Komponente E.

**8.** Tintenstrahltintenzusammensetzung zum Drucken auf Baumaterialien nach einem der Ansprüche 1 bis 7, wobei die Tintenstrahltintenzusammensetzung zum Drucken auf Kompositmetallverkleidungen oder keramischen Verkleidungen gedacht ist.

**9.** Tintenstrahltintenset zum Drucken auf Baumaterialien, umfassend drei Farbtintenzusammensetzungen aus einer Cyantinte, einer Magentatinte und einer gelben Tinte,
wobei das Tintenstrahltintenset mindestens zwei der folgenden Anforderungen i, ii oder iii erfüllt:

i: die Cyantinte ist die Tintenstrahltintenzusammensetzung zum Drucken auf Baumaterialien nach einem der Ansprüche 1 bis 8, die Pigment Blue 28 als Komponente C enthält;
ii: die Magentatinte ist eine Tintenstrahltintenzusammensetzung zum Drucken auf Baumaterialien, umfassend:

eine radikalische polymerisierbare Verbindung als Komponente A;
einen radikalischen Polymerisationsinitiator als Komponente B;
ein farbiges Pigment als Komponente C; und
ein Dispergiermittel als Komponente D,
wobei Komponente A Benzyl(meth)acrylat und/oder 2-Phenoxyethyl(meth)acrylat als Komponente A-1; eine monofunktionale oder bifunktionale (Meth)acrylatverbindung mit einer aliphatischen Kohlenwasserstoffgruppe mit 6 oder mehr Kohlenstoffatomen als Komponente A-2; und mindestens eine Verbindung enthält, ausgewählt aus der Gruppe an Verbindungen, die jeweils durch eine der folgenden Formeln I, II und III dargestellt ist als Komponente A-3,
wobei der Gesamtgehalt an Komponente A-1 10 Masse% bis 50 Masse%, bezogen auf die Gesamtmasse der Tintenzusammensetzung beträgt,
wobei der Gesamtgehalt an Komponente A-2 5 Masse% bis 40 Masse%, bezogen auf die Gesamtmasse der Tintenzusammensetzung beträgt,
wobei der Gesamtgehalt an Komponente A-3 10 Masse% bis 50 Masse%, bezogen auf die Gesamtmasse der Tintenzusammensetzung beträgt,
wobei die Tintenstrahltintenzusammensetzung Pigment Red 101 als Komponente C umfasst, und

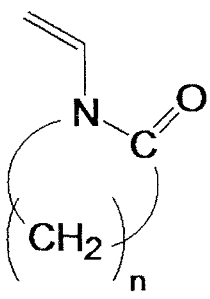
(I)

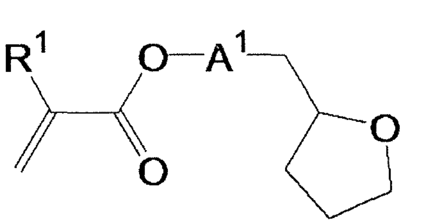
(II)

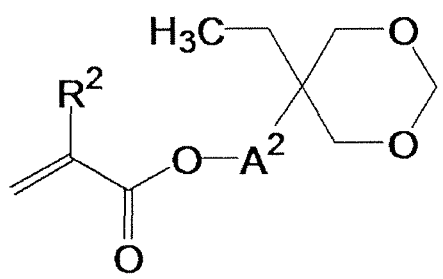
(III)

in Formeln I bis III, n eine ganze Zahl von 2 bis 6 darstellt; $R^1$ und $R^2$ jeweils unabhängig ein Wasserstoffatom oder eine Methylgruppe darstellen; und $A^1$ und $A^2$ jeweils unabhängig eine Einfachbindung oder eine divalente Verbindungsgruppe darstellen und

iii: die gelbe Tinte eine Tintenstrahltintenzusammensetzung zum Drucken auf Baumaterialien nach einem der Ansprüche 1 bis 8 ist, die Pigment Yellow 42 und/oder Pigment Yellow 184 als Komponente C umfasst.

**10.** Tintenstrahltintenset zum Drucken auf Baumaterialien nach Anspruch 9, wobei das Tintenstrahltintenset alle Anforderungen i, ii und iii erfüllt.

**11.** Tintenstrahltintenset zum Drucken auf Baumaterialien nach Anspruch 9 oder 10, ferner umfassend eine schwarze Tintenzusammensetzung, die eine radikalische polymerisierbare Verbindung als Komponente A, einen radikalischen Polymerisationsinitiator als Komponente B, ein farbiges Pigment als Komponente C und ein Dispergiermittel als Komponente D umfasst,

wobei Komponente A Benzyl(meth)acrylat und/oder 2-Phenoxyethyl(meth)acrylat als A-1; eine monofunktionale oder bifunktionale (Meth)acrylatverbindung mit einer aliphatischen Kohlenwasserstoffgruppe mit 6 oder mehr Kohlenstoffatomen als A-2; und mindestens eine durch eine der Formeln I, II und III dargestellte Verbindung als A-3 umfasst,
wobei der Gesamtgehalt an Komponente A-1 10 Masse% bis 50 Masse%, bezogen auf die Gesamtmasse der Tintenzusammensetzung, der Gesamtgehalt an Komponente A-2 5 Masse% bis 40 Masse%, bezogen auf die Gesamtmasse der Tintenzusammensetzung, der Gesamtgehalt an Komponente A-3 10 Masse% bis 50 Masse%, bezogen auf die Gesamtmasse der Tintenzusammensetzung, der Gesamtgehalt der monofunktionalen radikalischen polymerisierbaren Verbindungen 80 Masse% bis 100 Masse%, bezogen auf die Gesamtmasse an Komponente A beträgt, und
die schwarze Tintenzusammensetzung Pigment Black 7 als Komponente C enthält.

**12.** Dekoratives Baumaterial umfassend auf einem Baumaterial, eine gedruckte Schicht, erhalten durch Härten der Tintenstrahltintenzusammensetzung zum Drucken auf Baumaterialien nach einem der Ansprüche 1 bis 8 oder der drei Farbtintenzusammensetzungen, die in dem Tintenstrahltintenset zum Drucken auf Baumaterialien nach Anspruch 9 oder 10 enthalten sind, oder der vier Farbtintenzusammensetzungen, die in dem Tintenstrahltintenset zum Drucken auf Baumaterialien nach Anspruch 11 enthalten sind.

**13.** Tintenstrahlaufzeichnungsverfahren, umfassend:

als Schritt a, einen Bilderzeugungsschritt des Ausstoßens der Tintenstrahltintenzusammensetzung zum Drucken auf Baumaterialien nach einem der Ansprüche 1 bis 7 durch ein Tintenstrahlsystem, und dadurch Erzeugen eines Bildes auf einem Baumaterial; und
als Schritt b, einen Härtungsschritt des Belichtens des so erhaltenen Bildes mit aktiver Strahlung, und dadurch Härten der Tintenzusammensetzung; oder
als Schritt a', einen Bilderzeugungsschritt des entsprechenden Ausstoßens der Tintenzusammensetzungen, enthalten in dem Tintenstrahltintenset zum Drucken auf Baumaterialien nach einem der Ansprüche 9 bis 11 durch ein Tintenstrahlsystem, und dadurch Erzeugen eines Bildes auf einem Baumaterial; und
als Schritt b', einen Härtungsschritt des Belichtens des dadurch erhaltenen Bildes mit aktiver Strahlung und dadurch Härten der Tintenzusammensetzung.

**14.** Tintenstrahlaufzeichnungsverfahren nach Anspruch 13, umfassend vor dem Bilderzeugungsschritt einen vorbereitenden Behandlungsschritt des Bildens einer Grundierschicht auf der gedruckten Oberfläche des Baumaterials.

**15.** Tintenstrahlaufzeichnungsverfahren nach Anspruch 13 oder 14, umfassend nach dem Härtungsschritt einen Nachbehandlungsschritt des Bildens einer Decklackschicht auf der gehärteten Tintenzusammensetzung.

## Revendications

**1.** Composition d'encre pour jet d'encre destinée à imprimer sur des matériaux de construction, comprenant :

un composé pouvant subir une polymérisation par radicaux comme Composant A ;

un initiateur de polymérisation par radicaux comme Composant B ;
un pigment coloré comme Composant C ;
un agent de dispersion comme Composant D ;
dans laquelle le Composant A inclut un (méth)acrylate de benzyle et/ou un (méth)acrylate de 2-phénoxyéthyle comme Composant A-1 ; un composé (méth)acrylate monofonctionnel ou bifonctionnel présentant un groupe hydrocarboné aliphatique présentant 6 atomes de carbone ou plus comme Composant A-2, et au moins un élément sélectionné parmi le groupe consistant en des composés représentés chacun par l'une quelconque des formules suivantes I, II et III comme Composant A-3 ;
la teneur totale en Composant A-1 s'étend de 10 % en masse à 50 % en masse par rapport à la masse totale de la composition d'encre ;
la teneur totale en Composant A-2 s'étend de 5 % en masse à 40 % en masse par rapport à la masse totale de la composition d'encre ;
la teneur totale en Composant A-3 s'étend de 10 % en masse à 50 % en masse par rapport à la masse totale de la composition d'encre ;
la composition d'encre pour jet d'encre comprend au moins un pigment inorganique sélectionné parmi le groupe consistant en un pigment bleu 28, un pigment jaune 42, et un pigment jaune 184 comme Composant C, et

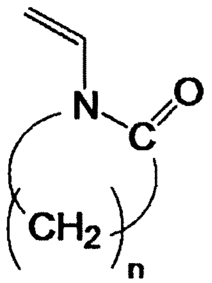

(I)

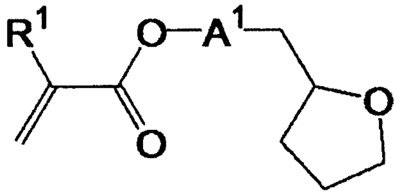

(II)

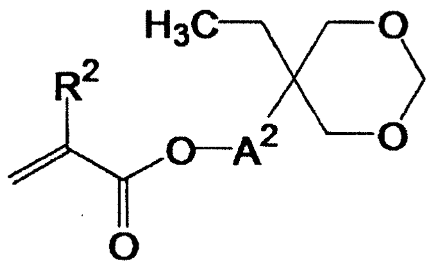

(III)

dans les formules I à III, n représente un entier de 2 à 6 ; $R^1$ et $R^2$ représentent chacun indépendamment un atome d'hydrogène ou un groupe méthyle, et $A^1$ et $A^2$ représentent chacun indépendamment une liaison simple ou un groupe de liaison divalent.

**2.** Composition d'encre pour jet d'encre destinée à imprimer sur des matériaux de construction selon la revendication 1, dans laquelle le groupe hydrocarboné aliphatique pour le Composant A-2 est un groupe hydrocarboné aliphatique présentant de 9 à 16 atomes de carbone.

**3.** Composition d'encre pour jet d'encre destinée à imprimer sur des matériaux de construction selon la revendication 1 ou 2, dans laquelle le groupe hydrocarboné aliphatique pour le Composant A-2 présente une structure alicyclique.

**4.** Composition d'encre pour jet d'encre destinée à imprimer sur des matériaux de construction selon l'une quelconque des revendications 1 à 3, dans laquelle la teneur totale en composés (méth)acrylate monofonctionnel s'étend de 80 % en masse à 100 % en masse par rapport à la masse totale du Composant A.

**5.** Composition d'encre pour jet d'encre destinée à imprimer sur des matériaux de construction selon l'une quelconque des revendications 1 à 4, comprenant en outre au moins un polymère ou oligomère sélectionné parmi le groupe consistant en une résine acrylique, une résine polyester, une résine époxy, et une résine polyuréthane comme Composant E, lequel est différent du Composant D.

**6.** Composition d'encre pour jet d'encre destinée à imprimer sur des matériaux de construction selon la revendication 5, dans laquelle la température de transition vitreuse Tg du Composant E, mesurée à l'aide d'un calorimètre à compensation de puissance EXSTAR6220 fabriqué par Seiko Instruments Inc., dans des conditions classiques pour la mesure, ou calculée par la formule de calcul suivante T :

$$1 / Tg = \Sigma(Xi/Tgi) \qquad \text{(Ti)}$$

où Xi représente la fraction de poids du $i^{ème}$ monomère avec $\sum Xi = 1$, et Tgi représente la température de transition vitreuse d'un homopolymère du $i^{ème}$ monomère,
est supérieure ou égale à 0 °C.

**7.** Composition d'encre pour jet d'encre destinée à imprimer sur des matériaux de construction selon la revendication 5 ou 6, comprenant en outre au moins un polymère ou oligomère sélectionné parmi le groupe consistant en une résine acrylique et une résine polyester comme Composant E.

**8.** Composition d'encre pour jet d'encre destinée à imprimer sur des matériaux de construction selon l'une quelconque des revendications 1 à 7, dans laquelle la composition d'encre pour jet d'encre est destinée à imprimer sur des bardages métalliques composites ou des bardages en céramique.

**9.** Jeu d'encres pour jet d'encre destiné à imprimer sur des matériaux de construction, comprenant trois compositions d'encre de couleur d'une encre cyan, une encre magenta, et une encre jaune,
dans lequel le jeu d'encres pour jet d'encre satisfait au moins deux des exigences suivantes i, ii, iii :

i : l'encre cyan est la composition d'encre pour jet d'encre destinée à imprimer sur des matériaux de construction selon l'une quelconque des revendications 1 à 8, laquelle inclut un pigment bleu 28 comme Composant C ;
ii : l'encre magenta est une composition d'encre pour jet d'encre destinée à imprimer sur des matériaux de construction, comprenant :

un composé pouvant subir une polymérisation par radicaux comme Composant A ;
un initiateur de polymérisation par radicaux comme Composant B ;
un pigment coloré comme Composant C, et
un agent de dispersion comme Composant D ;
dans laquelle le Composant A inclut un (méth)acrylate de benzyle et/ou un (méth)acrylate de 2-phénoxyéthyle comme Composant A-1 ; un composé (méth)acrylate monofonctionnel ou bifonctionnel présentant un groupe hydrocarboné aliphatique présentant 6 atomes de carbone ou plus comme Composant A-2, et au moins un élément sélectionné parmi le groupe consistant en des composés représentés chacun par l'une quelconque des formules suivantes I, II et III comme Composant A-3 ;
la teneur totale en Composant A-1 s'étend de 10 % en masse à 50 % en masse par rapport à la masse totale de la composition d'encre ;
la teneur totale en Composant A-2 s'étend de 5 % en masse à 40 % en masse par rapport à la masse totale de la composition d'encre ;
la teneur totale en Composant A-3 s'étend de 10 % en masse à 50 % en masse par rapport à la masse totale de la composition d'encre ;
la composition d'encre pour jet d'encre comprend un pigment rouge 101 comme Composant C, et

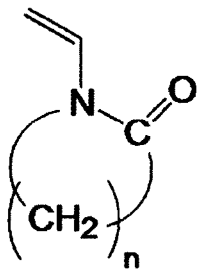
(I)

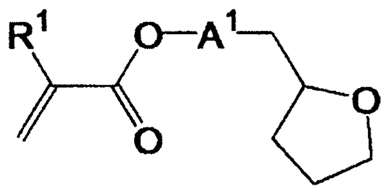
(II)

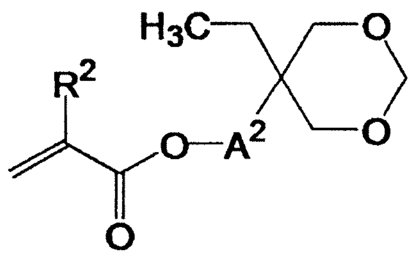
(III)

dans les formules I à III, n représente un entier de 2 à 6 ; $R^1$ et $R^2$ représentent chacun indépendamment un atome d'hydrogène ou un groupe méthyle, et $A^1$ et $A^2$ représentent chacun indépendamment une liaison simple ou un groupe de liaison divalent, et

iii : l'encre jaune est la composition d'encre pour jet d'encre destinée à imprimer sur des matériaux de construction selon l'une quelconque des revendications 1 à 8, laquelle inclut un pigment jaune 42 et/ou un pigment jaune 184 comme Composant C.

**10.** Jeu d'encres pour jet d'encre destiné à imprimer sur des matériaux de construction, selon la revendication 9, dans lequel le jeu d'encres pour jet d'encre satisfait toutes les exigences i, ii, et iii.

**11.** Jeu d'encres pour jet d'encre destiné à imprimer sur des matériaux de construction, selon la revendication 9 ou 10, comprenant en outre une composition d'encre noire, laquelle inclut un composé pouvant subir une polymérisation par radicaux comme Composant A, un initiateur de polymérisation par radicaux comme Composant B, un pigment coloré comme Composant C, et un agent de dispersion comme Composant D ;
dans lequel le Composant A inclut un (méth)acrylate de benzyle et/ou un (méth)acrylate de 2-phénoxyéthyle comme Composant A-1 ; un composé (méth)acrylate monofonctionnel ou bifonctionnel présentant un groupe hydrocarboné aliphatique présentant 6 atomes de carbone ou plus comme Composant A-2, et au moins un composé représenté par l'une quelconque des formules suivantes I, II et III comme composant A-3 ;
la teneur totale en Composant A-1 s'étend de 10 % en masse à 50 % en masse par rapport à la masse totale de la composition d'encre ; la teneur totale en Composant A-2 s'étend de 5 % en masse à 40 % en masse par rapport à la masse totale de la composition d'encre ; la teneur totale en Composant A-3 s'étend de 10 % en masse à 50 % en masse par rapport à la masse totale de la composition d'encre ; la teneur totale des composés pouvant subir une polymérisation par radicaux monofonctionnels s'étend de 80 % en masse à 100 % en masse par rapport à la masse totale du Composant A, et
la composition d'encre noire inclut un pigment noir 7 comme Composant C.

**12.** Matériau de construction décoratif comprenant, sur un matériau de construction, une couche imprimée obtenue en faisant durcir la composition d'encre pour jet d'encre destinée à imprimer sur des matériaux de construction selon l'une quelconque des revendications 1 à 8, ou les trois compositions d'encre de couleur incluses dans le jeu d'encres pour jet d'encre destiné à imprimer sur des matériaux de construction selon la revendication 9 ou 10, ou les quatre compositions d'encre de couleur incluses dans le jeu d'encres pour jet d'encre destiné à imprimer sur des matériaux de construction selon la revendication 11.

**13.** Procédé d'enregistrement par jet d'encre, comprenant :

comme étape a, une étape de formation d'image pour éjecter la composition d'encre pour jet d'encre destiné à imprimer sur des matériaux de construction selon l'une quelconque des revendications 1 à 7 par un système à jet d'encre, et pour ainsi former une image sur un matériau de construction, et
comme étape b, une étape de durcissement pour irradier l'image ainsi obtenue avec un rayonnement actif, et ainsi durcir la composition d'encre, ou
comme étape a', une étape de formation d'image pour éjecter respectivement les compositions d'encre incluses dans le jeu d'encre pour jet d'encre destiné à imprimer sur des matériaux de construction selon l'une quelconque des revendications 9 à 11 par un système à jet d'encre, et pour ainsi former une image sur un matériau de construction, et
comme étape b', une étape de durcissement pour irradier l'image ainsi obtenue avec un rayonnement actif, et ainsi durcir les compositions d'encre.

**14.** Procédé d'enregistrement par jet d'encre selon la revendication 13, comprenant avant l'étape de formation d'image, une étape de traitement préliminaire pour former une couche primaire sur la surface imprimée du matériau de construction.

**15.** Procédé d'enregistrement par jet d'encre selon la revendication 13 ou 14, comprenant, après l'étape de durcissement, une étape de post-traitement pour former une couche de finition sur la composition d'encre durcie.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007262177 A
- JP 2011126947 A
- JP 2009052030 A
- WO 200838508 A
- US 2012270018 A1
- WO 2013146722 A1
- JP 2009221414 A
- JP 2009209289 A
- JP 2009191183 A
- JP 2008208190 A
- JP 2009096985 A
- JP 2009185186 A
- JP 2002012607 A
- JP 2002188025 A
- JP 2003026978 A
- JP 2003342503 A
- JP 62173463 A
- JP S62173463 A
- JP 62183457 A
- JP S62183457 A
- JP 57009053 B
- JP S579053 B
- JP 62135826 A
- JP S62135826 A
- JP 2009221416 A
- US 6084250 A
- JP 60132767 A
- JP S60132767 A
- WO 9954415 A


### Non-patent literature cited in the description


- Ganryo no Jiten (Dictionary of Pigments). Asakura Publishing Co., Ltd, 2000
- Yuki Ganryo Handobukku. **HASHIMOTO, ISAO.** Handbook of Organic Pigments. Color Office Co., Ltd, 2006
- Industrial Organic Pigments. Wiley-VCH Verlag GmbH, 1992
- **J. BRANDRUP ; E.H. IMMERGUT.** Polymer Handbook. Wiley Intersicence, 1989
- Yuki Ganryo Handobukku. **HASHIMOTO ; ISAO.** Handbook of Organic Pigments. Color Office Co., Ltd, 2006